(19) Europäisches Patentamt
European Patent Office
Office européen des brevets

(11) EP 4 410 864 A1

(12) EUROPEAN PATENT APPLICATION
published in accordance with Art. 153(4) EPC

(43) Date of publication:
**07.08.2024 Bulletin 2024/32**

(21) Application number: **22876528.5**

(22) Date of filing: **30.09.2022**

(51) International Patent Classification (IPC):
***C08G 64/04*** *(2006.01)* ***C08G 64/06*** *(2006.01)*
***C08G 64/30*** *(2006.01)* ***C08L 69/00*** *(2006.01)*

(52) Cooperative Patent Classification (CPC):
**C08G 64/04; C08G 64/06; C08G 64/30; C08L 69/00**

(86) International application number:
**PCT/JP2022/036659**

(87) International publication number:
**WO 2023/054665 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 JP 2021160752**
**30.09.2021 JP 2021160753**
**21.09.2022 JP 2022149742**

(71) Applicant: **Mitsubishi Chemical Corporation**
**Chiyoda-ku**
**Tokyo 100-8251 (JP)**

(72) Inventors:
- **TOMITA, Shohei**
  **Tokyo 100-8251 (JP)**
- **YOKOGI, Masashi**
  **Tokyo 100-8251 (JP)**
- **TABEI, Hodaka**
  **Tokyo 100-8251 (JP)**

(74) Representative: **Hoffmann Eitle**
**Patent- und Rechtsanwälte PartmbB**
**Arabellastraße 30**
**81925 München (DE)**

# (54) THERMOPLASTIC RESIN COMPOSITION, COMMUNICATION DEVICE MEMBER, AND MICROWAVE AND/OR MILLIMETER WAVE COMMUNICATION DEVICE

(57) A thermoplastic resin composition including a polycarbonate resin with a structural unit (A) represented by the following formula (1), wherein a hydrolysate produced by hydrolyzing the polycarbonate resin contains dihydroxy compounds represented by the following formulae (2) to (4), and a total amount of the dihydroxy compound represented by the formula (3) and the dihydroxy compound represented by the formula (4) in the hydrolysate is 0.85% by mass or more of an amount of the dihydroxy compound represented by the formula (2).

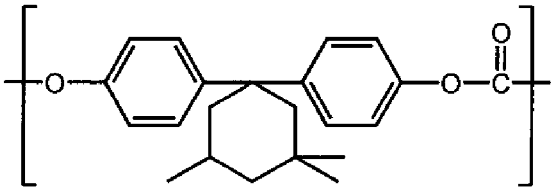

(1)

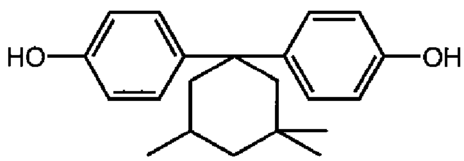

(2)

EP 4 410 864 A1

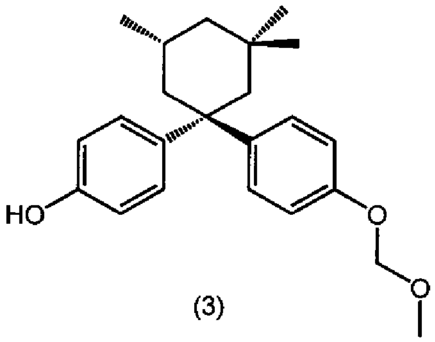

(3)

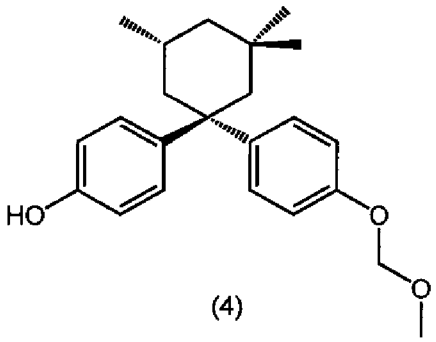

(4)

## Description

### Technical Field

The present invention relates to a thermoplastic resin composition with high surface hardness, high heat resistance, good initial color tone, high light resistance, and good low-dielectric properties. Alternatively, the present invention relates to a thermoplastic resin composition with high surface hardness, high heat resistance, good initial color tone, high impact resistance, and good low-dielectric properties. The present invention also relates to a communication device member produced by using the thermoplastic resin composition, and a microwave and/or millimeter-wave communication device including the communication device member.

### Background Art

Polycarbonate resins have high mechanical strength, good electrical characteristics, and high transparency and are widely used as engineering plastics in various fields, such as electrical and electronic devices and automobiles.

In recent years, in these application fields, thinner, smaller, and lighter formed products have been developed, and further performance improvement of forming materials has been required. However, known polycarbonate resins composed of bisphenol A as a raw material have insufficient surface hardness for these required characteristics.

Patent Literature 1 discloses a polycarbonate polymer with high surface hardness produced using a bisphenol with a specific substituent, which is different from known bisphenol A, as a raw material.

However, the polycarbonate polymer disclosed in Patent Literature 1 has insufficient heat resistance compared with a known polycarbonate resin produced by using bisphenol A as a raw material.

Patent Literature 2 discloses an aromatic polycarbonate resin composition with a reduced birefringence index and with a good balance between optical characteristics and transferability produced by blending a bisphenol A polycarbonate with an aromatic polycarbonate copolymer composed of two specific dihydric phenol components.

However, Patent Literature 2 does not describe the initial color tone and light resistance at all.

On the other hand, radio waves in high-frequency bands, such as microwaves and millimeter-waves, are used in the fields of electrical and electronic devices and automobiles. Thus, there is a need for a material with both a low relative dielectric constant and a low dielectric loss tangent.

In particular, in the electrical and electronic fields, there is a need for high heat resistance, good color tone, and less burning in addition to a low relative dielectric constant and a low dielectric loss tangent.

With an increase in information traffic in recent years, there has been a strong demand for information communication devices, such as notebook computers, tablet devices, smartphones, and routers, with a higher communication speed. For high-speed communication, it is preferable to use radio waves in a higher frequency band, and a radio wave of more than 3 GHz, which is classified into a microwave band, has recently been used. In the next fifth-generation mobile communication system (5G), a market in a microwave band of a higher 28 GHz band is expected to evolve. In the further next-generation communication, radio waves in the millimeter-wave band may be used.

Thus, there is also an increasing demand for higher-performance members of information communication devices that may be used in microwave and/or millimeter-wave bands. Radio waves in such high-frequency bands characteristically have a higher transmission loss and lower substance permeability than radio waves in lower-frequency bands. It is therefore desirable that device members for microwave and/or millimeter-wave communication have higher radio wave transmission than known device members.

The transmission loss is proportional to the square root of the relative dielectric constant ($\varepsilon_r$) of a dielectric material and to the dielectric loss tangent ($\tan\delta$) of the dielectric material. To increase the radio wave transmission of housings, therefore, it is necessary to reduce the relative dielectric constant $\varepsilon_r$ and the dielectric loss tangent $\tan\delta$ of materials for the housings.

Information communication devices for transmission and reception of radio waves in high-frequency bands, such as microwaves and/or millimeter-waves, characteristically easily generate heat. It is therefore desirable that materials for use in such a field not only have a low relative dielectric constant and a low dielectric loss tangent but also have moderate heat resistance. Thus, there is a strong need for a material satisfying these conditions.

Furthermore, it is strongly required that a member of an information communication device assumed to use a microwave and/or millimeter-wave band or a communication device with a built-in microwave and/or millimeter-wave antenna has a good appearance. More specifically, good color tone and less burning during forming are required.

However, known materials cannot simultaneously satisfy such requirements.

Patent Literature 3 discloses an aromatic polycarbonate resin composition with a reduced birefringence index and with a good balance between optical characteristics and transferability, but does not describe the color tone and dielectric properties at all. Furthermore, there is no description about a microwave and/or millimeter-wave communication device member or a communication device including the communication device member.

Patent Literature 4 proposes a millimeter-wave radar cover in which a thermoplastic resin composition containing a polycarbonate resin composed of a bisphenol with a specific substituent as a raw material is used to decrease dielectric loss tangent and improve millimeter-wave transmission. However, such a thermoplastic resin composition has insufficient heat resistance for use in a microwave and/or millimeter-wave communication device member and a communication device including the communication device member.

Patent Literature 5 proposes a thermoplastic resin composition that contains a polycarbonate resin with two specific types of repeating units and thereby has high radio wave transmission in a microwave and/or millimeter-wave band and high heat resistance and flame retardancy, a formed product thereof, and a communication device housing with a built-in microwave and/or millimeter-wave antenna, but the thermoplastic resin composition has much burning during forming and insufficient color tone.

[Patent Literature 1] JPS64-69625 A
[Patent Literature 2] JP2003-128906 A
[Patent Literature 3] JP2003-128906 A
[Patent Literature 4] JP2019-197048 A
[Patent Literature 5] WO2021/039970 A1

Summary of Invention

It is an object of a first invention of the present invention to provide a thermoplastic resin composition with high surface hardness, high heat resistance, good initial color tone, and high light resistance.

It is also an object of the first invention to provide a microwave and/or millimeter-wave communication device member with high heat resistance, good color tone, less burning, and good low-dielectric properties produced by using such a thermoplastic resin composition, and a microwave and/or millimeter-wave communication device including the communication device member.

It is an object of a second invention of the present invention to provide a thermoplastic resin composition with high surface hardness, high heat resistance, good initial color tone, high impact resistance, and good low-dielectric properties.

It is also an object of the second invention to provide a microwave and/or millimeter-wave communication device member with high heat resistance, good color tone, less burning, and good low-dielectric properties produced by using such a thermoplastic resin composition, and a microwave and/or millimeter-wave communication device including the communication device member.

The inventor related to the first invention has found that a thermoplastic resin composition containing a polycarbonate resin with two specific types of structural units and containing a certain amount of hydrolysate with a specific structure produced by hydrolyzing the polycarbonate resin has not only high surface hardness, high heat resistance, good initial color tone, and high light resistance, but also good low-dielectric properties, and has completed the first invention.

The gist of the first invention consists in [1] to [16] described below.

[1] A thermoplastic resin composition comprising a polycarbonate resin with a structural unit (A) represented by the following formula (1),

wherein a hydrolysate produced by hydrolyzing the polycarbonate resin contains dihydroxy compounds represented by the following formulae (2) to (4), and

a total amount of the dihydroxy compound represented by the formula (3) and the dihydroxy compound represented by the formula (4) in the hydrolysate is 0.85% by mass or more of an amount of the dihydroxy compound represented by the formula (2).

[Chem. 1]

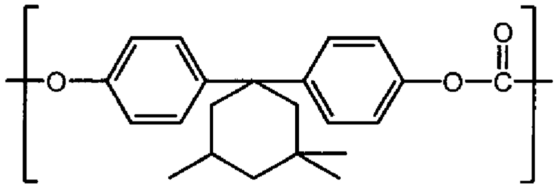

(1)

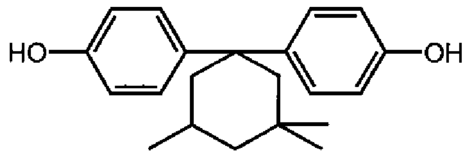

(2)

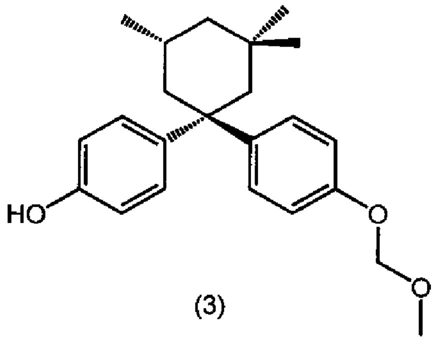

(3)

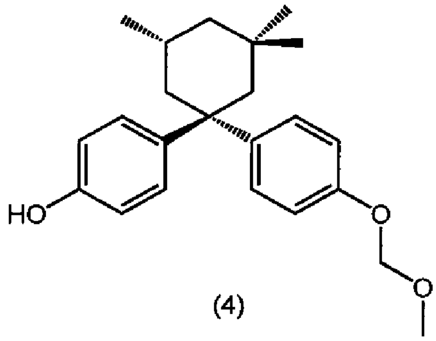

(4)

[2] The thermoplastic resin composition according to [1],

wherein the thermoplastic resin composition has a polycarbonate resin with a structural unit (A) represented by the following formula (1) and a structural unit (B) represented by the following formula (5),
a hydrolysate produced by hydrolyzing the polycarbonate resin contains dihydroxy compounds represented by the following formulae (2), (3), (4), and (6), and
the total amount of the dihydroxy compound represented by the following formula (3) and the dihydroxy compound represented by the following formula (4) in the hydrolysate is 1.00% by mass or more of the amount of the dihydroxy compound represented by the following formula (2).

[Chem. 2]

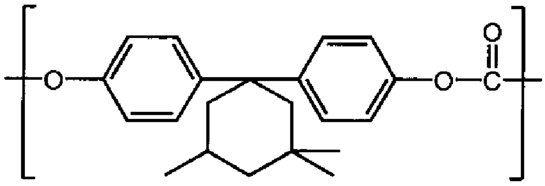

(1)

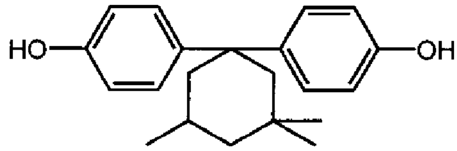

(2)

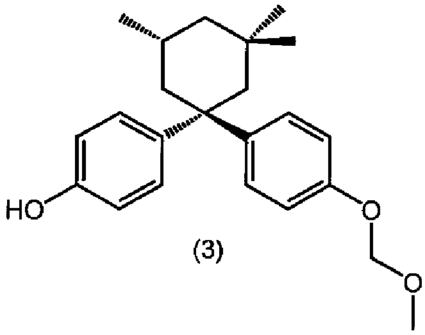

(3)

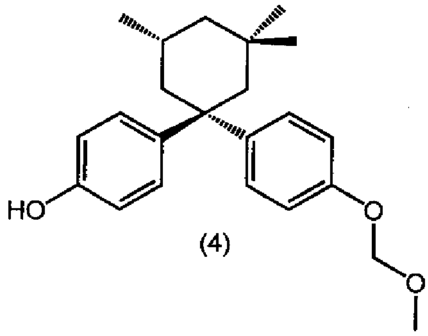

(4)

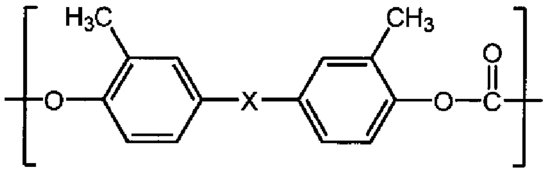

(5)

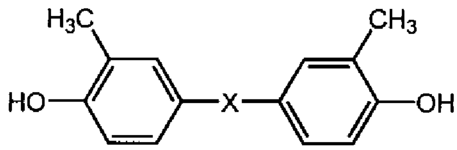

(6)

(In the formulae (5) and (6), X denotes at least one selected from a single bond, an oxygen atom, a sulfur atom, and a divalent organic group (excluding a 3,3,5-trimethylcyclohexylidene group).)

[3] The thermoplastic resin composition according to [1] or [2], wherein the total amount of the dihydroxy compound represented by the formula (3) and the dihydroxy compound represented by the formula (4) in the hydrolysate is 1.10% by mass or more of the amount of the dihydroxy compound represented by the formula (2).

[4] The thermoplastic resin composition according to [2]or [3], wherein the structural unit (B) represented by the formula (5) accounts for more than 50% by mole of all structural units of the polycarbonate resin.

[5] The thermoplastic resin composition according to any one of [2] to [4], wherein the polycarbonate resin is a polycarbonate resin composed of the structural unit (A) represented by the formula (1) and the structural unit (B) represented by the formula (5) randomly polymerized.

[6] The thermoplastic resin composition according to any one of [1] to [5], wherein the polycarbonate resin has a viscosity-average molecular weight (Mv) of 12,000 or more.

[7] The thermoplastic resin composition according to any one of [1] to [6], wherein the polycarbonate resin has a viscosity-average molecular weight (Mv) of 30,000 or less.

[8] The thermoplastic resin composition according to any one of [2] to [7], comprising a polycarbonate resin with the structural unit (A) represented by the formula (1) and the structural unit (B) represented by the formula (5) in a mole ratio of (B)/(A) = 55/45 to 95/5.

[9] The thermoplastic resin composition according to any one of [1] to [8], wherein the polycarbonate resin has a pencil hardness of H or higher as measured by a method according to ISO 15184.

[10] The thermoplastic resin composition according to any one of [2]to [9], wherein X in the formulae (5) and (6) is represented by the following formula (7).

[Chem. 3]

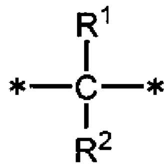

(7)

(In the formula (7), $R^1$ and $R^2$ each independently denote a hydrogen atom or an alkyl group with 1 to 15 carbon atoms, and * represents a bonding arm to a benzene ring in the formulae (5) and (6).)

[11] The thermoplastic resin composition according to [10], wherein $R^1$ and $R^2$ in the formula (7) are methyl groups.

[12] The thermoplastic resin composition according to any one of [1] to [11], comprising 50% by mass or more of the polycarbonate resin.

[13] A dihydroxy compound represented by the following formula (3) or (4).

[Chem. 4]

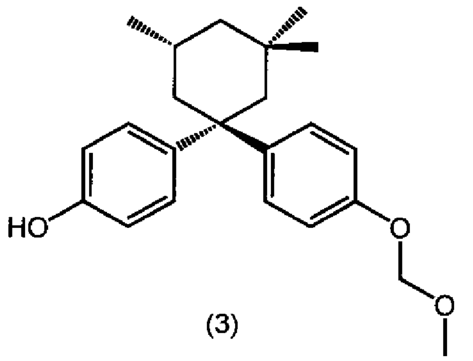

(3)

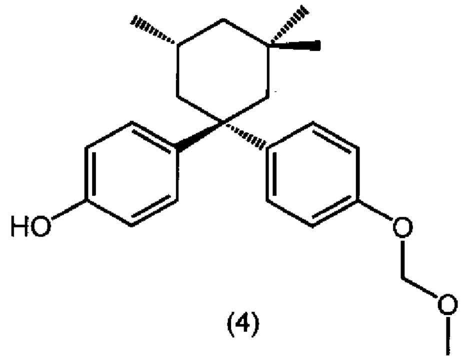

(4)

[14] A method for producing the thermoplastic resin composition according to any one of [1] to [12], comprising the step of producing the polycarbonate resin by a melt transesterification method.

[15] A communication device member produced by using the thermoplastic resin composition according to any one of [1] to [12] .

[16] A microwave and/or millimeter-wave communication device produced by using the communication device member according to [15].

The inventor related to the second invention has found that a thermoplastic resin composition containing a polycarbonate resin with two specific types of structural units and with a predetermined specific viscosity and viscosity-average molecular weight and containing a certain amount of specific dihydroxy compound contained in a hydrolysate produced by hydrolyzing the polycarbonate resin has not only high surface hardness, high heat resistance, good initial color tone, and high impact resistance, but also good low-dielectric properties, and has completed the second invention.

The gist of the second invention consists in [17] to [31] described below.

[17] A thermoplastic resin composition comprising a polycarbonate resin, wherein

the polycarbonate resin contains a structural unit (a) represented by the following formula (11) and a structural unit (b) represented by the following formula (12A) and/or the following formula (12B),

a solution of 0.7 g of the polycarbonate resin dissolved in 100 mL of methylene chloride has a specific viscosity in the range of 0.308 to 0.455 as measured at 20°C,

the polycarbonate resin has a viscosity-average molecular weight in the range of 17,300 to 26,400, and

a hydrolysate produced by hydrolyzing the polycarbonate resin contains dihydroxy compounds represented by

the following formulae (13), (14), (15A), and (15B), and an amount of the dihydroxy compound represented by the formula (14) in the hydrolysate ranges from 100 ppm to 1,300 ppm of an amount of the dihydroxy compound represented by the formula (13).

[Chem. 5]

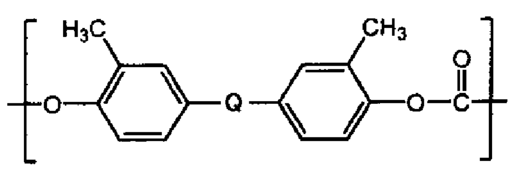
(11)

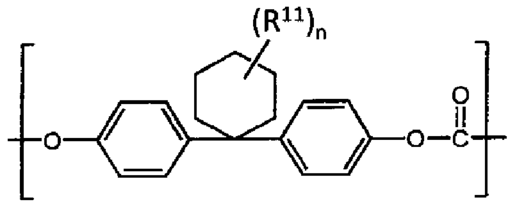
(12A)

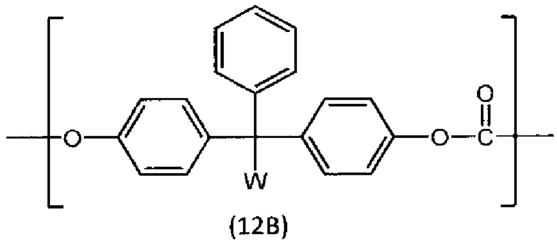
(12B)

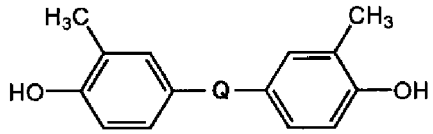
(13)

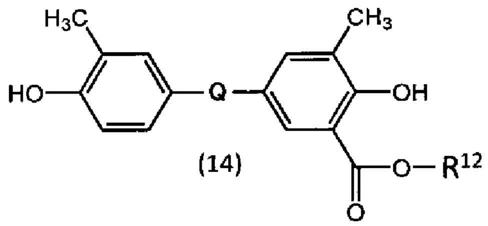
(14)

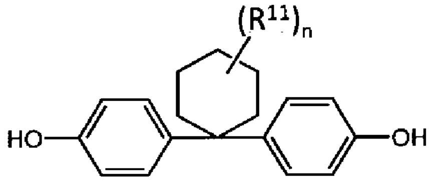
(15A)

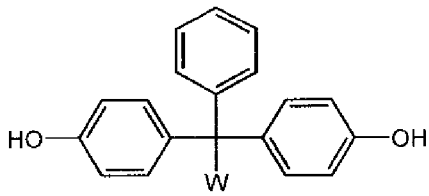
(15B)

(In the formula (11), Q denotes at least one selected from a single bond, an oxygen atom, a sulfur atom, and a divalent organic group.
In the formula (12A), $R^{11}$ each independently denotes an alkyl group with 1 to 4 carbon atoms, and n is an integer in the range of 0 to 3.
In the formula (12B), W denotes a methyl group or a phenyl group.
In the formula (13), Q is the same as Q in the formula (11) .
In the formula (14), Q is the same as Q in the formula (11), and $R^{12}$ denotes a hydrogen atom or a methyl group.
In the formula (15A), $R^{11}$ is the same as $R^{11}$ in the formula (12A).
In the formula (15B), W is the same as W in the formula (12B).)

[18] The thermoplastic resin composition according to [17], wherein Q in the formula (11) is represented by the following formula (16).

[Chem. 6]

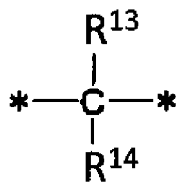

(16)

(In the formula (16), $R^{13}$ and $R^{14}$ each independently denote a hydrogen atom or an alkyl group with 1 to 15 carbon atoms, and * represents a bonding arm to a benzene ring in the formula (11).)

[19] The thermoplastic resin composition according to [18], wherein $R^{13}$ and $R^{14}$ in the formula (16) are methyl groups.

[20] The thermoplastic resin composition according to any one of [17] to [19], wherein the structural unit (b) contains a structural unit represented by the formula (12A).

[21] The thermoplastic resin composition according to [20], wherein the structural unit (a) and the structural unit (b) are contained as a copolymer.

[22] The thermoplastic resin composition according to any one of [17] to [19], wherein the structural unit (b) contains a structural unit represented by the formula (12B).

[23] The thermoplastic resin composition according to [22], wherein the structural unit (a) and the structural unit (b) are contained as a blend.

[24] The thermoplastic resin composition according to any one of [17] to [23], wherein $R^{11}$ in the formula (12A) is a methyl group.

[25] The thermoplastic resin composition according to any one of [17] to [24], wherein n in the formula (12A) is 3.

[26] The thermoplastic resin composition according to any one of [17] to [25], wherein the structural unit (b) is represented by the formula (17).

[Chem. 7]

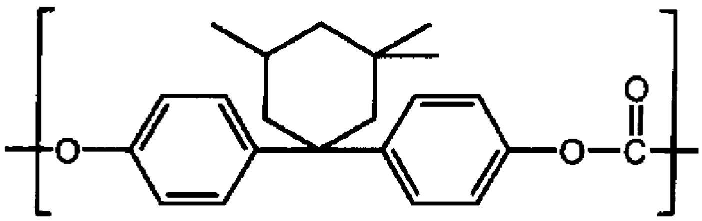

(17)

[27] The thermoplastic resin composition according to any one of [17] to [26], wherein the structural unit (b) in the polycarbonate resin accounts for 20% by mole or more of a total amount of the structural unit (a) and the structural unit (b).

[28] The thermoplastic resin composition according to any one of [17] to [27], wherein a total amount of the structural unit (a) and the structural unit (b) in the polycarbonate resin is 80% by mole or more of all carbonate structural units of the polycarbonate resin.

[29] The thermoplastic resin composition according to any one of [17] to [28], wherein the polycarbonate resin has a glass transition temperature of 125°C or more.

[30] A communication device member produced by using the thermoplastic resin composition according to any one of [17] to [29].

[31] A microwave and/or millimeter-wave communication device produced by using the communication device member according to [30].

## Advantageous Effects of Invention

A formed product produced by using the thermoplastic resin composition according to the first invention has high surface hardness, high heat resistance, good initial color tone, and high light resistance, and the thermoplastic resin composition can therefore be widely used as a material for manufacturing parts in automobiles, electrical and electronic devices, and other industrial fields.

Furthermore, the thermoplastic resin composition according to the first invention has good low-dielectric properties. Thus, a communication device member produced by using the thermoplastic resin composition according to the first invention and a communication device including the communication device member therefore have good radio wave transmission in a microwave and/or millimeter-wave band, high heat resistance, good color tone, and less burning during forming, and can be widely used as a housing for a communication device with a built-in microwave and/or millimeter-wave antenna, for example, a notebook computer, a tablet device, a smartphone, or a router, or as a device thereof.

A formed product produced by using the thermoplastic resin composition according to the second invention has high surface hardness, high heat resistance, good initial color tone, and high impact resistance, and the thermoplastic resin composition can therefore be widely used as a material for manufacturing parts in automobiles, electrical and electronic devices, and other industrial fields.

Furthermore, the thermoplastic resin composition according to the second invention has good low-dielectric properties. Thus, a communication device member produced by using the thermoplastic resin composition according to the second invention and a communication device including the communication device member therefore have good radio wave transmission in a microwave and/or millimeter-wave band, high heat resistance, good color tone, and less burning during forming, and can be widely used as a housing for a communication device with a built-in microwave and/or millimeter-wave antenna, for example, a notebook computer, a tablet device, a smartphone, or a router, or as a device thereof.

## Description of Embodiments

The present invention is described in detail in the following embodiments and examples. The present invention is not limited to these embodiments and examples.

In the present specification, unless otherwise specified, numerical values before and after "to" mean that these values are included as a lower limit and an upper limit.

### [Embodiment for Implementing First Invention]

### [Outline]

The thermoplastic resin composition according to the first invention is a thermoplastic resin composition containing a polycarbonate resin with a structural unit (A) represented by the following formula (1) (hereinafter sometimes referred to as a "polycarbonate resin according to the first invention"), wherein a hydrolysate produced by hydrolyzing the polycarbonate resin contains dihydroxy compounds represented by the following formulae (2) to (4), and the total amount of the dihydroxy compound represented by the following formula (3) (hereinafter sometimes referred to as a "dihydroxy compound (3)") and the dihydroxy compound represented by the following formula (4) (hereinafter sometimes referred to as a "dihydroxy compound (4)") in the hydrolysate is 0.85% by mass or more of the amount of the dihydroxy compound represented by the following formula (2) (hereinafter sometimes referred to as a "dihydroxy compound (2) ") .

[Chem. 8]

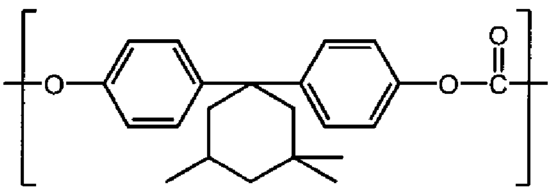

(1)

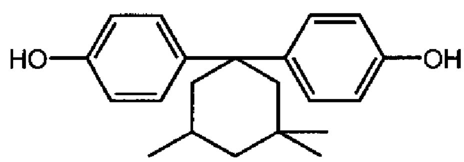

(2)

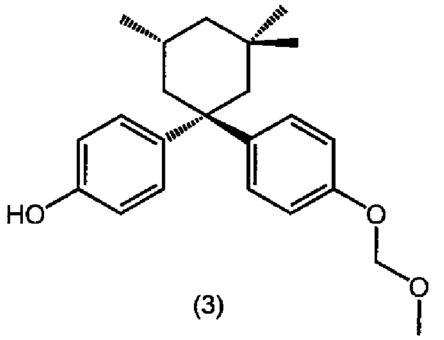

(3)

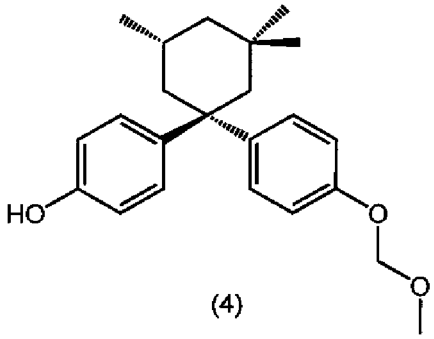

(4)

The polycarbonate resin according to the first invention contained in the thermoplastic resin composition according to the first invention, the dihydroxy compound (3) and the dihydroxy compound (4) in a hydrolysate produced by hydrolyzing the polycarbonate resin according to the first invention (these are hereinafter sometimes referred to as a "dihydroxy compound according to the first invention"), and components constituting the thermoplastic resin composition according to the first invention are described in detail below.

[Polycarbonate Resin]

<Structural Unit (A)>

The polycarbonate resin according to the first invention is characterized by having the structural unit (A) represented by the formula (1). The thermoplastic resin composition containing the polycarbonate resin with the structural unit (A) represented by the formula (1) can improve the pencil hardness, heat resistance, initial color tone, light resistance, and low-dielectric properties of the thermoplastic resin composition according to the first invention.

[Chem. 9]

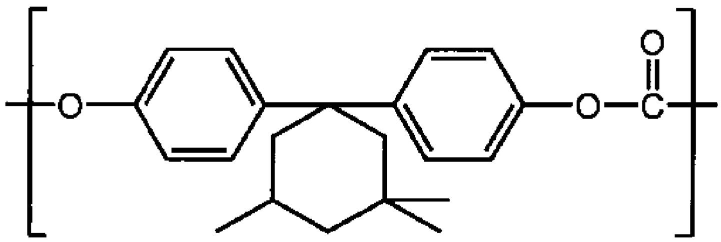

(1)

The amount of the structural unit (A) is preferably, but not limited to, 10% by mole or more, more preferably 20% by mole or more, of all the structural units of the polycarbonate resin according to the first invention, from the perspective of heat resistance, light resistance, and dielectric properties.

<Preferred Structural Unit (B)>

The polycarbonate resin according to the first invention only needs to have the structural unit (A) represented by the formula (1) and preferably has a structural unit (B) represented by the following formula (5) in addition to the structural unit (A). The structural unit (B) in the polycarbonate resin according to the first invention can particularly improve the pencil hardness of the thermoplastic resin composition according to the first invention.

[Chem. 10]

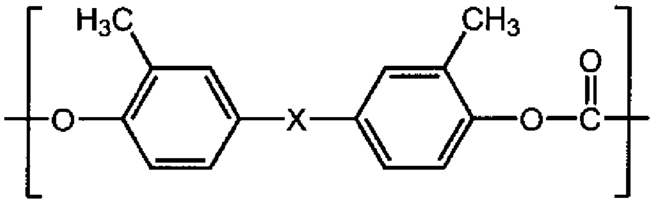

(5)

(In the formulae (5), X denotes at least one selected from a single bond, an oxygen atom, a sulfur atom, and a divalent organic group (excluding a 3,3,5-trimethylcyclohexylidene group.)

The divalent organic group of X may be appropriately selected from any known groups, and specific examples thereof include organic groups represented by the following formulae (7a) to (7h).

[Chem. 11]

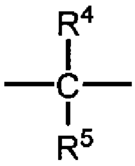

(7a)

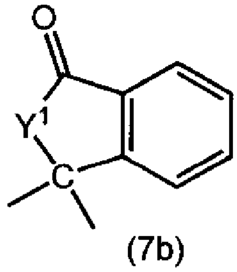

(7b)

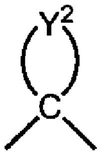

(7c)

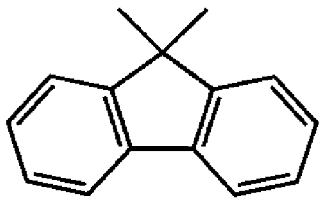

(7d)

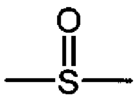

(7e)

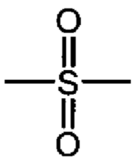

(7f)

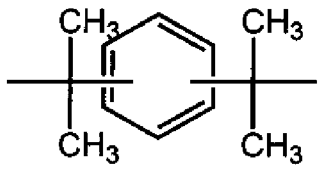

(7g)

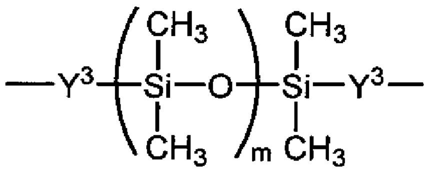

(7h)

In formula (7a), $R^4$ and $R^5$ each independently represent a hydrogen atom, a monovalent hydrocarbon group having 1 to 24 carbon atoms, or an alkoxy group having 1 to 24 carbon atoms. A monovalent hydrocarbon group having 1 to 24 carbon atoms is preferred.

Examples of the monovalent hydrocarbon group having 1 to 24 carbon atoms include an alkyl group having 1 to 24 carbon atoms, an alkenyl group having 2 to 24 carbon atoms, an aryl group having 6 to 24 carbon atoms which may have a substituent, and an arylalkyl group having 7 to 24 carbon atoms, and the like.

Examples of alkyl groups having 1 to 24 carbon atoms include linear and branched alkyl groups, and alkyl groups having a partially cyclic structure (excluding 3,3,5-trimethylcyclohexylidene groups), and the like. Among them, a straight-chain alkyl group is preferred. Examples of such alkyl groups having 1 to 24 carbon atoms include methyl group, ethyl group, n-propyl group, n-butyl group, n-pentyl group, n-hexyl group, n-heptyl group, n-octyl group, and the like.

Examples of alkenyl groups having 2 to 24 carbon atoms include linear and branched alkenyl groups, and alkenyl groups having a partially cyclic structure, and the like. Among them, linear alkenyl groups are preferred. Examples of such alkenyl groups having 2 to 24 carbon atoms include vinyl group, n-propenyl group, n-butenyl group, n-pentenyl group, n-hexenyl group, n-heptenyl group, n-octenyl group, and the like.

Examples of the aryl group having 6 to 24 carbon atoms include phenyl group, naphthyl group, and aryl groups which may have substituents such as alkyl groups such as methylphenyl group, dimethylphenyl group and trimethylphenyl group.

Examples of the arylalkyl group having 7 to 24 carbon atoms include a benzyl group.

Examples of the alkoxy group having 1 to 24 carbon atoms include linear and branched alkoxy groups, and

alkoxy groups having a partially cyclic structure. Among them, linear alkoxy groups are preferred. Specific examples include methoxy group, ethoxy group, propoxy group, and butoxy group.

In formula (7b), $Y^1$ represents an oxygen atom or $NR^a$. Here, $R^a$ has the same definition as $R^4$ and $R^5$ described above.

In formula (7c), $Y^2$ represents a divalent hydrocarbon group having 3 to 18 carbon atoms. Examples thereof include alkylene groups such as propylene group, butylene group, pentylene group, hexylene group, heptylene group, octylene group, nonylene group, decylene group, undecylene group and dodecinylene group, each of which may further have a substituent. Substituents include methyl group, ethyl group, propyl group, butyl group, pentyl group, phenyl group and the like. Furthermore, it may have a partially crosslinked structure.

In formula (7h), $Y^3$ represents an alkylene group having 1 to 7 carbon atoms. Such an alkylene group may be linear or branched, or may have a cyclic structure. Examples thereof include methylene group, ethylene group, propylene group, butylene group, and the like. Further, m represents an integer of 1 to 500, preferably 5 to 300, more preferably 10 to 100.

Among these, X more preferably denotes a single bond or a group represented by the following formula (7), for example, a methylene group, an ethylidene group, or an isopropylidene group and from the perspective of improved heat resistance and less burning most preferably an isopropylidene group (that is, $R^1$ and $R^2$ in the following formula (7) are methyl groups).

[Chem. 12]

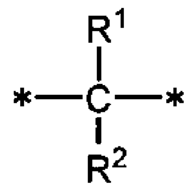

(7)

(In the formula (7), $R^1$ and $R^2$ each independently denote a hydrogen atom or an alkyl group with 1 to 15 carbon atoms, and * represents a bonding arm to a benzene ring in the formulae (5) and (6) .)

The amount of the structural unit (B) is preferably 20% by mole or more, more preferably 40% by mole or more, still more preferably more than 50% by mole, particularly preferably 60% by mole or more, of all the structural units of the polycarbonate resin according to the first invention, from the perspective of surface hardness and low-dielectric properties.

<Structural Unit (A) Content and Structural Unit (B) Content>

Although the polycarbonate resin according to the first invention only needs to have the structural unit (A), the total amount of the structural unit (A) and the structural unit (B) in the polycarbonate resin according to the first invention is preferably 30% by mole or more, more preferably 50% by mole or more, still more preferably 70% by mole or more, particularly preferably 80% by mole or more, most preferably 90% by mole or more, of all the structural units of the polycarbonate resin.

The ratio of the structural unit (B) to the structural unit (A) is preferably, but not limited to, (B)/(A) = 55/45 to 95/5 in a mole ratio in the polycarbonate resin according to the first invention.

<Polymerization Form of Structural Unit (A) and Structural Unit (B)>

When the polycarbonate resin according to the first invention has the structural unit (A) and the structural unit (B), the polycarbonate resin according to the first invention is preferably a polycarbonate resin composed of the structural unit (A) and the structural unit (B) randomly polymerized, from the perspective of surface hardness.

<Other Structural Unit (C)>

The polycarbonate resin according to the first invention may contain one or two or more other structural units (C) other than the structural unit (A) and the structural unit (B) within the scope of not impairing the object of the first invention. Examples of the other structural units (C) include structural units derived from aromatic dihydroxy compounds,

such as 2,2-bis(4-hydroxyphenyl)propane (bisphenol A), 4,4'-dihydroxybiphenyl (biphenol), and 6,6'-dihydroxy-3,3,3',3'-tetramethyl-1,1'-spirobiindane (SBI). Among these, structural units derived from bisphenol A and biphenol are preferred.

<Amounts of Dihydroxy Compounds (3) and (4) in Polycarbonate Resin Hydrolysate>

The polycarbonate resin according to the first invention has the structural unit (A) represented by the formula (1). The hydrolysate produced by hydrolyzing the polycarbonate resin contains dihydroxy compounds (2) to (4) represented by the following formulae (2) to (4), and the total amount of the dihydroxy compounds (3) and (4) represented by the formulae (3) and (4) in the hydrolysate is 0.85% by mass or more of the amount of the dihydroxy compound (2) represented by the formula (2). Within the above range, the polycarbonate resin according to the first invention can have good initial color tone and high light resistance.

[Chem. 13]

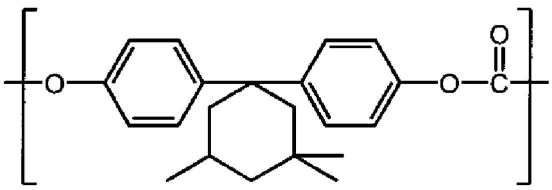

(1)

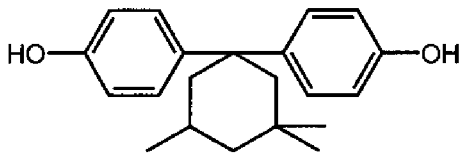

(2)

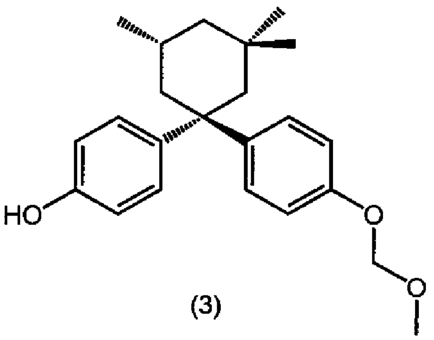

(3)

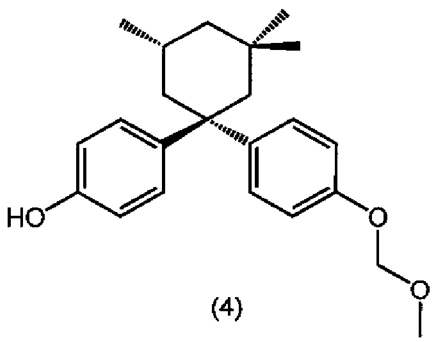

(4)

The total amount of the dihydroxy compounds (3) and (4) in the hydrolysate is preferably 0.85% by mass or more, more preferably 0.90% by mass or more, still more preferably 1.00% by mass or more, particularly preferably 1.05% by mass or more, most preferably 1.10% by mass or more, of the amount of the dihydroxy compound (2).

On the other hand, from the perspective of improved heat resistance, the total amount of the dihydroxy compounds (3) and (4) in the hydrolysate is preferably 5% by mass or less, particularly 3% by mass or less, of the amount of the dihydroxy compound (2).

The total amount of the dihydroxy compounds (3) and (4) in the polycarbonate resin hydrolysate can be adjusted in the above preferred range, for example, by appropriately adjusting the purity of 4,4'-(3,3,5-trimethylcyclohexylidene)bisphenol (hereinafter sometimes referred to as "BP-TMC"), which is a dihydroxy compound (2) and is a raw material for the polycarbonate resin according to the first invention. It can also be achieved by appropriately adjusting the pressure and temperature in the production of the polycarbonate resin, the set conditions at the end of the polycondensation reaction, and the like.

<Method for Analyzing Dihydroxy Compounds (2), (3), and (4) in Polycarbonate Resin Hydrolysate>

The amounts of the dihydroxy compound (2) and the dihydroxy compounds (3) and (4) in the hydrolysate of the polycarbonate resin according to the first invention can be analyzed as described below.

After 0.5 g of the polycarbonate resin is dissolved in 5 mL of methylene chloride, 45 mL of methanol and 5 mL of 25% by mass aqueous sodium hydroxide are added to the solution, and the solution is stirred at 70°C for 30 minutes to hydrolyze the polycarbonate resin (methylene chloride solution). Subsequently, 6 N hydrochloric acid is added to the methylene chloride solution to adjust the pH of the solution to approximately 2, and the solution is adjusted to 100 mL with pure water.

Next, 20 μL of the adjusted methylene chloride solution is subjected to liquid chromatography to measure the amounts of the dihydroxy compound (2) and the dihydroxy compounds (3) and (4) (unit: ppm) as each dihydroxy compound

content.

The liquid chromatography and the measurement conditions are as follows:

Liquid chromatography: LC-10AD manufactured by Shimadzu Corporation
Column: YMC PACK ODS-AM M-307-3 4.6 mm ID × 75 mm L
Detector: UV 280 nm
Eluent: (A) 0.05% aqueous trifluoroacetic acid (B) methanol
Gradient conditions: 0 minutes (B = 40%), 25 minutes (B=95%)
Flow rate: 1.0 mL/min
Column temperature: 40°C
Injected amount: 20 μL

The amounts of the dihydroxy compounds (3) and (4) are calculated from their respective peak areas on the basis of a calibration curve prepared using BP-TMC, which is the dihydroxy compound (2).

Although there are some errors depending on the degradation state and the date of manufacture of the column, under these conditions, the peak of BP-TMC is detected at approximately 17.7 minutes, the peak of the dihydroxy compound (3) is detected at approximately 20.9 minutes, and the peak of the dihydroxy compound (4) is detected at approximately 21.2 minutes.

As described above, the amounts of the dihydroxy compounds (3) and (4) in the polycarbonate resin hydrolysate are determined by appropriately adjusting the purity of BP-TMC, which is the dihydroxy compound (2) used as a raw material for the polycarbonate resin according to the first invention, or by adjusting the production conditions of the polycarbonate resin.

<Identification of Dihydroxy Compounds (3) and (4) in Polycarbonate Resin Hydrolysate>

The dihydroxy compounds (3) and (4) in the polycarbonate resin hydrolysate can be identified as described below.

When a peak derived from a specific structure is detected during the analysis by the analytical method, an aliquot of the analysis liquid is taken. Methanol is then distilled off with an evaporator, and methylene chloride is added to extract the component. The methylene chloride phase is then evaporated to dryness to yield a high-purity specific component. The specific component is subjected to $^{1}$H-NMR, $^{13}$C-NMR, HH-COSY, HH-NOESY, HMBC, and HMQC measurements to identify the structure. The identified structure can be verified by LC-MS analysis.

<Dihydroxy Compounds (3) and (4)>

An embodiment of the first invention is a novel dihydroxy compound (3) or (4) represented by the following formula (3) or (4) that is analyzed and identified as described above.

[Chem. 14]

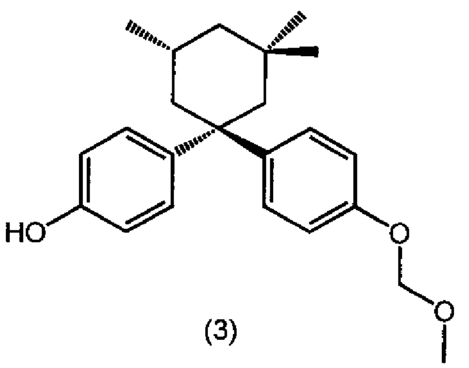

(3)

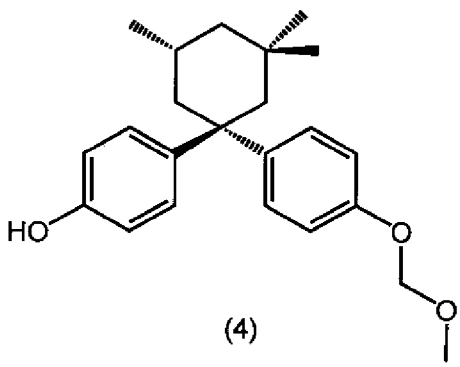

(4)

<Molecular Weight of Polycarbonate Resin>

The molecular weight of the polycarbonate resin according to the first invention is preferably, but not limited to, in the range of 10,000 to 35,000 in terms of a viscosity-average molecular weight (Mv) calculated from the solution

viscosity. The features of the first invention can be effectively brought out by setting the viscosity-average molecular weight in the above range. The polycarbonate resin according to the first invention with a viscosity-average molecular weight above the lower limit is preferred in terms of high heat resistance. The polycarbonate resin according to the first invention with a viscosity-average molecular weight below the upper limit is preferred in terms of high fluidity. From such a perspective, the polycarbonate resin according to the first invention more preferably has a viscosity-average molecular weight (Mv) of 12,000 or more, still more preferably 13,000 or more, particularly preferably 14,000 or more, and more preferably 30,000 or less, still more preferably 28,000 or less, particularly preferably 26,000 or less.

The viscosity-average molecular weight (Mv) of the polycarbonate resin according to the first invention refers to a value determined by measuring intrinsic viscosity (limiting viscosity) [η] (unit: dL/g) at a temperature of 20°C with an Ubbelohde viscometer using methylene chloride as a solvent and calculated using Schnell viscosity equation $\eta = 1.23 \times 10^{-4} Mv^{0.83}$. The intrinsic viscosity (limiting viscosity) [η] refers to a value determined by measuring specific viscosities [ηsp] at different solution concentrations [C] (g/dL) and calculated using the following formula.

[Math. 1]

$$\eta = \lim_{c \to 0} \eta_{sp}/c$$

<Glass Transition Temperature of Polycarbonate Resin>

The glass transition temperature Tg of the polycarbonate resin according to the first invention is preferably, but not limited to, 125°C or more. A Tg of 100°C or more can result in high heat resistance. On the other hand, Tg is preferably 230°C or less. A Tg of 230°C or less can result in high fluidity and forming processability.

For Tg of the polycarbonate resin, approximately 10 mg of a polycarbonate resin sample is heated with a differential scanning calorimeter at a heating rate of 20°C/min to measure the amount of heat, and an extrapolated glass transition starting temperature, which is the temperature at an intersection point between an extended line of the baseline from the low temperature side to the high temperature side and a tangent line drawn at a point of the maximum gradient of a curve of a stepwise change portion of glass transition, is determined as a glass transition temperature (Tg) in accordance with ISO 3146.

<Initial Color Tone of Polycarbonate Resin>

The polycarbonate resin according to the first invention has good initial color tone. The initial color tone of the polycarbonate resin according to the first invention is typically 15 or less, preferably 13 or less, more preferably 11 or less, particularly preferably 10 or less, most preferably 10 or less, in terms of the yellow index value (YI value) of a pellet of the polycarbonate resin.

The initial color tone of the polycarbonate resin can be lowered by adjusting the amounts of the dihydroxy compounds (3) and (4) in the hydrolysate of the polycarbonate resin to appropriate values.

The initial color tone of the polycarbonate resin can be evaluated by measuring the yellow index value (YI value) of the reflected light of its pellet in accordance with ASTM D1925. More specifically, a spectrophotometer CM-5 manufactured by Konica Minolta, Inc. is used as an apparatus, and the measurement conditions are a measurement diameter of 30 mm and SCE. A calibration glass CM-A212 for petri dish measurement is fitted into a measurement portion and is covered with a zero calibration box CM-A124 to perform zero calibration. A built-in white calibration plate is then used to perform white calibration.

The measurement is performed with a white calibration plate CM-A210 to confirm that L* is 99.40 ± 0.05, a* is 0.03 ± 0.01, b* is -0.43 ± 0.01, and YI is -0.58 ± 0.01. The measurement of a pellet is performed by filling a cylindrical glass vessel with an inner diameter of 30 mm and a height of 50 mm with pellets to a depth of approximately 40 mm. The operation of taking the pellets out of the glass vessel and performing the measurement again is performed twice, and three measurements in total are averaged. A smaller YI value indicates a resin with less yellowness and better color tone.

<Pencil Hardness of Polycarbonate Resin>

The polycarbonate resin according to the first invention preferably has a high hardness characteristic of HB or higher, more preferably H or higher, as measured by a method according to ISO 15184.

The pencil hardness of the polycarbonate resin is measured with a pencil hardness tester at a load of 750 g on a test specimen of the polycarbonate resin with a thickness of 3 mm, a length of 25 mm, and a width of 25 mm. The test specimen can be formed by injection molding with an injection molding machine.

<Light Resistance of Polycarbonate Resin>

The light resistance of the polycarbonate resin according to the first invention can be evaluated by irradiating a test specimen of the polycarbonate resin with a thickness of 3 mm, a length of 60 mm, and a width of 60 mm at 60 $W/m^2$ for 500 hours using a small light-exposure test apparatus EYE SUN-CUBE Xenon manufactured by Iwasaki Electric Co., Ltd. and determining the difference ($\Delta$YI) between YI before the irradiation and YI after the irradiation.
The test specimen with a thickness of 3 mm, a length of 60 mm, and a width of 60 mm can be formed with an ordinary injection molding machine. More specifically, pellets of the polycarbonate resin according to the first invention dried under vacuum at 90°C for 5 hours or more are supplied to an injection molding machine and are molded into a platelike injection molded piece at a final cylinder temperature of 300°C and a forming cycle of approximately 30 seconds.
The YI value of the test specimen is measured with the spectrophotometer CM-5 manufactured by Konica Minolta, Inc. in accordance with ASTM D1925 using transmitted light in the thickness direction of the injection molded piece.
The $\Delta$YI of the polycarbonate resin according to the first invention measured in this manner is preferably as low as possible in terms of high light resistance and is preferably 13 or less, more preferably 10 or less.

<Appearance of Polycarbonate Resin Plate>

The frequency of burning during forming of the polycarbonate resin according to the first invention can be evaluated in the evaluation of the yellow index (YI) value of the injection-molded product by visually observing the appearance of 30 injection-molded plates and counting the number of plates with a black foreign material (burning).
The number of plates with a black foreign material (burning) in 30 plates formed by injection-molding the polycarbonate resin according to the first invention is preferably 15 or less, more preferably 10 or less, still more preferably 5 or less, particularly preferably 3 or less.

<Relative Dielectric Constant ($\varepsilon_r$) and Dielectric Loss Tangent (tan$\delta$) of Polycarbonate Resin>

The relative dielectric constant ($\varepsilon_r$) and the dielectric loss tangent (tan$\delta$) of the polycarbonate resin according to the first invention are preferably, but not limited to, 2.45 or less and $3.00 \times 10^{-3}$ or less, respectively, as measured at a temperature of 23°C and a frequency of 10 GHz. A relative dielectric constant and a dielectric loss tangent in these ranges result in high radio wave transmission in a high-frequency band.
The relative dielectric constant ($\varepsilon_r$) and the dielectric loss tangent (tan$\delta$) of the polycarbonate resin can be measured with a cavity resonator at a frequency of 10 GHz after a strip of film with a length of 70 mm and a width of 2 mm is cut out from a film with a thickness in the range of 40 to 150 $\mu$m formed by hot-pressing the polycarbonate resin and after humidity control at a room temperature of 23°C and a humidity of 50% for 48 hours.

<Method for Producing Polycarbonate Resin>

The polycarbonate resin according to the first invention can be produced by a known polymerization method, which is not particularly limited. Examples of the polymerization method include an interfacial polymerization method, a melt transesterification method, a pyridine method, a ring-opening polymerization method of a cyclic carbonate compound, and a solid-phase transesterification method of a prepolymer.
Among these, the polycarbonate resin according to the first invention is particularly preferably produced by the melt transesterification method from the perspective of initial color tone and light resistance because the dihydroxy compound (3) content and the dihydroxy compound (4) content of the hydrolysate tend to be increased.
Thus, an embodiment of the first invention is also a method for producing a thermoplastic resin composition including the step of producing the polycarbonate resin according to the first invention by the melt transesterification method.
Among these methods, particularly suitable methods are more specifically described below.

(Interfacial Polymerization Method)

In the interfacial polymerization method, a raw material dihydroxy compound and a carbonate-forming compound are allowed to react in the presence of an inert organic solvent and an alkaline aqueous solution typically at a pH

of 9 or more, and subsequent interfacial polymerization in the presence of a polymerization catalyst yields a polycarbonate resin. If necessary, the reaction system may include a molecular weight modifier (terminating agent) and an antioxidant for preventing the oxidation of the raw material dihydroxy compound.

Examples of the inert organic solvent include, but are not limited to, chlorinated hydrocarbons, such as dichloromethane, 1,2-dichloroethane, chloroform, monochlorobenzene, and dichlorobenzene; and aromatic hydrocarbons, such as benzene, toluene, and xylene. The organic solvents may be used alone or combined in any ratio.

The alkaline aqueous solution may contain any alkaline compound, for example, an alkali or alkaline-earth metal compound, such as sodium hydroxide, potassium hydroxide, lithium hydroxide, or sodium hydrogen carbonate. Among these, sodium hydroxide and potassium hydroxide are preferred. The alkaline compounds may be used alone or combined in any ratio.

The concentration of an alkaline compound in the alkaline aqueous solution is typically, but not limited to, in the range of 5% to 10% by mass to control the pH of the alkaline aqueous solution in the range of 10 to 12. In the case of blowing with phosgene, to control the pH of an aqueous phase in the range of 10 to 12, preferably 10 to 11, it is preferable that the mole ratio of the raw material dihydroxy compound to the alkaline compound is typically 1:1.9 or more, particularly 1:2.0 or more, and typically 1:3.2 or less, particularly 1:2.5 or less.

The raw material dihydroxy compound is at least a dihydroxy compound that can form the structural unit (A) and the structural unit (B) by a reaction with the carbonate-forming compound.

The carbonate-forming compound is suitably a carbonyl halide. Phosgene is particularly preferred. The method using phosgene is particularly referred to as a phosgene method.

Examples of the polymerization catalyst include, but are not limited to, aliphatic tertiary amines, such as trimethylamine, triethylamine, tributylamine, tripropylamine, and trihexylamine; alicyclic tertiary amines, such as N,N'-dimethylcyclohexylamine and N,N'-diethylcyclohexylamine; aromatic tertiary amines, such as N,N'-dimethylaniline and N,N'-diethylaniline; quaternary ammonium salts, such as trimethylbenzylammonium chloride, tetramethylammonium chloride, and triethylbenzylammonium chloride; pyridines; guanines; and guanidine salts. The polymerization catalysts may be used alone or combined in any ratio.

Examples of the molecular weight modifier include, but are not limited to, aromatic phenols with a monohydric phenolic hydroxy group; aliphatic alcohols, such as methanol and butanol; mercaptans; and phthalimides. Among these, aromatic phenols are preferred. Specific examples of the aromatic phenol include phenol, o-n-butylphenol, m-n-butylphenol, p-n-butylphenol, o-isobutylphenol, m-isobutylphenol, p-isobutylphenol, o-t-butylphenol, m-t-butylphenol, p-t-butylphenol, o-n-pentylphenol, m-n-pentylphenol, p-n-pentylphenol, o-n-hexylphenol, m-n-hexylphenol, p-n-hexylphenol, p-t-octylphenol, o-cyclohexylphenol, m-cyclohexylphenol, p-cyclohexylphenol, o-phenylphenol, m-phenylphenol, p-phenylphenol, o-n-nonylphenol, m-n-nonylphenol, p-n-nonylphenol, o-cumylphenol, m-cumylphenol, p-cumylphenol, o-naphthylphenol, m-naphthylphenol, p-naphthylphenol, 2,5-di-t-butylphenol, 2,4-di-t-butylphenol, 3,5-di-t-butylphenol, 2,5-dicumylphenol, 3,5-dicumylphenol, p-cresol, bromophenol, tribromophenol, monoalkylphenols with a linear or branched alkyl group having 12 to 35 carbon atoms on average in the ortho, meta, or para position, 9-(4-hydroxyphenyl)-9-(4-methoxyphenyl)fluorene, 9-(4-hydroxy-3-methylphenyl)-9-(4-methoxy-3-methylphenyl)fluorene, and 4-(1-adamantyl)phenol. Among these, p-t-butylphenol, p-phenylphenol, and p-cumylphenol are preferably used. The molecular weight modifiers may be used alone or combined in any ratio.

The amount of molecular weight modifier to be used is typically, but not limited to, 0.5 mol or more, preferably 1 mol or more, and typically 50 mol or less, preferably 30 mol or less, per 100 mol of the raw material dihydroxy compound.

The antioxidant may be, but is not limited to, a hindered phenolic antioxidant. Specific examples include pentaerythritoltetrakis[3-(3,5-di-tert-butyl-4-hydroxyphenyl)propionate], octadecyl-3-(3,5-di-tert-butyl-4-hydroxyphenyl)propionate, thiodiethylenebis[3-(3,5-di-tert-butyl-4-hydroxyphenyl)propionate], N,N'-hexane-1,6-diylbis[3-(3,5-di-tert-butyl-4-hydroxyphenyl)propionamide], 2,4-dimethyl-6-(1-methylpentadecyl)phenol, diethyl[[3,5-bis(1,1-dimethylethyl)-4-hydroxyphenyl]methyl]phosphate, 3,3',3",5,5',5"-hexa-tert-butyl-a,a',a"-(mesitylene-2,4,6-triyl)tri-p-cresol, 4,6-bis(octylthiomethyl)-o-cresol, ethylenebis(oxyethylene)bis[3-(5-tert-butyl-4-hydroxy-m-tolyl)propionate], hexamethylenebis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 2,6-di-tert-butyl-4-(4,6-bis(octylthio)-1,3,5-triazine-2-ylamino)phenol, and 2-[1-(2-hydroxy-3,5-di-tert-pentylphenyl)ethyl]-4,6-di-tert-pentylphenyl acrylate.

Among these, pentaerythritoltetrakis[3-(3,5-di-tert-butyl-4-hydroxyphenyl)propionate] and octadecyl-3-(3,5-di-tert-butyl-4-hydroxyphenyl)propionate are preferred. Commercial products of such phenolic antioxidants include "Irganox 1010" and "Irganox 1076" manufactured by BASF and "ADK STAB AO-50" and "ADK STAB AO-60" manufactured by Adeka Corp.

The antioxidants may be used alone or combined in any ratio.

The amount of antioxidant to be used is preferably, but not limited to, 0.001 parts or more by mass, more preferably 0.01 parts or more by mass, still more preferably 0.1 parts or more by mass, per 100 parts by mass of the raw material dihydroxy compound. An amount of antioxidant equal to or higher than the lower limit results in a sufficient effect of the antioxidant. The amount of antioxidant to be used is preferably 1 part or less by mass, more preferably 0.5

parts or less by mass, per 100 parts by mass of the raw material dihydroxy compound. An amount of antioxidant equal to or lower than the upper limit can result in less gas evolution during injection molding.

In the reaction, a reaction substrate (reaction raw material), a reaction solvent (organic solvent), a catalyst, and an additive agent are mixed in any order, provided that a desired polycarbonate resin can be produced. Thus, the order may be appropriately determined. For example, when phosgene is used as a carbonate-forming compound, the molecular weight modifier may be added at any point between the reaction (phosgenation) of the raw material dihydroxy compound with phosgene and the beginning of the polymerization reaction.

The reaction temperature is preferably, but not limited to, in the range of 0°C to 40°C. The reaction time is preferably, but not limited to, in the range of several minutes (for Example 10 minutes) to several hours (for example, 6 hours).

(Melt Transesterification Method)

The melt transesterification method involves transesterification between a carbonate ester and the raw material dihydroxy compound, for example.

The raw material dihydroxy compound is the same as that in the interfacial polymerization method.

Examples of the carbonate ester include compounds represented by the following formula (8), such as aryl carbonates, dialkyl carbonates, biscarbonates of dihydroxy compounds, monocarbonates of dihydroxy compounds, and carbonates of dihydroxy compounds, such as cyclic carbonates.

[Chem. 15]

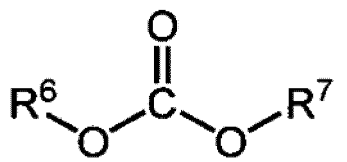

(8)

In the above formula (8), $R^6$ and $R^7$ independently denote an alkyl group having 1 to 30 carbon atoms, an aryl group, or an arylalkyl group. When $R^6$ and $R^7$ independently denote an alkyl group or an arylalkyl group, the compound is hereinafter sometimes referred to as a dialkyl carbonate, and when $R^6$ and $R^7$ independently denote an aryl group, the compound is hereinafter sometimes referred to as a diaryl carbonate. In terms of reactivity with the dihydroxy compound, both $R^6$ and $R^7$ preferably independently denote an aryl group, more preferably a diaryl carbonate represented by the following formula (9).

[Chem. 16]

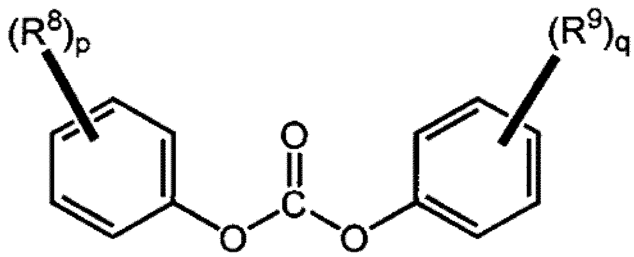

(9)

In the above formula (9), $R^8$ and $R^9$ independently denote a halogen atom, a nitro group, a cyano group, an alkyl group having 1 to 20 carbon atoms, an alkoxycarbonyl group having 1 to 20 carbon atoms, a cycloalkyl group having 4 to 20 carbon atoms, or an aryl group having 6 to 20 carbon atoms. p and q independently denote an integer in the range of 0 to 5.

Specific examples of the carbonate ester include dialkyl carbonates, such as dimethyl carbonate, diethyl carbonate, and di-t-butyl carbonate, and (optionally substituted) diaryl carbonate, such as diphenyl carbonate (hereinafter sometimes abbreviated to "DPC"), bis(4-methylphenyl)carbonate, bis(4-chlorophenyl)carbonate, bis(4-fluorophenyl)carbonate, bis(2-chlorophenyl)carbonate, bis(2,4-difluorophenyl)carbonate, bis(4-nitrophenyl)carbonate, bis(2-nitrophenyl)carbonate, bis(methylsalicylphenyl)carbonate, and ditolyl carbonate. Among these, diphenyl carbonate is preferred. These carbonate esters may be used alone or in combination.

Preferably 50% or less by mole, more preferably 30% or less by mole, of the carbonate ester may be substituted with dicarboxylic acid or dicarboxylate. Typical examples of the dicarboxylic acid or dicarboxylate include terephthalic acid, isophthalic acid, diphenyl terephthalate, and diphenyl isophthalate. Substitution with such a dicarboxylic acid or dicarboxylate yields a polyester carbonate.
The ratio of the raw material dihydroxy compound to the carbonate ester may be any ratio that can result in a desired polycarbonate resin. The carbonate ester is preferably used in excess with respect to the raw material dihydroxy compound in polymerization with the dihydroxy compound. The amount of the carbonate ester is preferably 1.01 times or more (mole ratio), more preferably 1.02 times or more, the amount of the dihydroxy compound. A mole ratio equal to or higher than the lower limit results in a polycarbonate resin with high thermal stability. The amount of the carbonate ester is preferably 1.30 times or less (mole ratio), more preferably 1.20 times or less, the amount of the dihydroxy compound. A mole ratio equal to or lower than the upper limit is suitable in terms of improved reactivity, improved productivity of a polycarbonate resin with a desired molecular weight, and a lower residual carbonate ester content of the resin, which can result in less malodor during shape processing or of a formed product.
A transesterification catalyst is typically used to produce a polycarbonate resin by the melt transesterification method. The transesterification catalyst may be, but is not limited to, a known transesterification catalyst. For example, an alkali metal compound and/or an alkaline-earth metal compound is preferably used. In an auxiliary manner, for example, a basic compound, such as a basic boron compound, a basic phosphorus compound, a basic ammonium compound, or an amine compound, may be combined. The transesterification catalysts may be used alone or combined in any ratio.
In producing the polycarbonate resin of the first invention, it is preferable to use an alkali metal compound as a catalyst, more preferably use only a metal compound as a catalyst, and particularly preferably use only cesium carbonate as a catalyst.
In the melt transesterification method, the reaction temperature is typically, but not limited to, in the range of 100°C to 320°C. The reaction pressure is typically, but not limited to, a reduced pressure of 2 mmHg or less. In specific procedures, a melt polycondensation reaction may be performed under the conditions described above while removing by-products.
A polycarbonate resin according to the first invention is significantly affected by thermal history and oxidation in the presence of an alkaline catalyst and consequently has poor hue. It is therefore preferred to set the reaction temperature at 320°C or less and select a reduced-pressure condition with a lower limit of approximately 0.05 mmHg to prevent oxygen from leaking into an apparatus due to an excessively reduced pressure.
The reaction may be performed batch-wise or continuously. In a batch-wise reaction, a reaction substrate, a reaction solvent, a catalyst, and an additive agent are mixed in any order provided that a desired polycarbonate resin can be produced. Thus, the order may be appropriately determined.
If necessary, the melt transesterification method may use a catalyst deactivator. The catalyst deactivator may be any compound that can neutralize the transesterification catalyst. Examples of the catalyst deactivator include sulfur-containing acidic compounds and derivatives thereof and phosphorus-containing acidic compounds and derivatives thereof. The catalyst deactivators may be used alone or combined in any ratio.
The amount of catalyst deactivator to be used is typically, but not limited to, 0.5 equivalent or more, preferably 1 equivalent or more, more preferably 3 equivalent or more, and typically 50 equivalent or less, preferably 10 equivalent or less, more preferably 8 equivalent or less, of the transesterification catalyst. The amount of catalyst deactivator to be used is typically 1 ppm or more and 100 ppm or less, preferably 50 ppm or less, of the polycarbonate resin.

[Thermoplastic Resin Composition]

The thermoplastic resin composition of the first invention is characterized by containing the polycarbonate resin of the first invention described above.
The thermoplastic resin composition according to the first invention may contain another component as required in addition to the polycarbonate resin according to the first invention without significantly impairing the desired physical properties. Examples of the other component include resins other than the polycarbonate resin according to the first invention and various resin additive agents. The other components may be used alone or combined in any ratio.

<Other Resins>

Examples of resins other than the polycarbonate resin according to the first invention are as follows:

thermoplastic polyester resins, such as poly(ethylene terephthalate) resins (PET resins), poly(trimethylene terephthalate) (PTT resins), and poly(butylene terephthalate) resins (PBT resins);
styrene resins, such as polystyrene resins (PS resins), high-impact polystyrene resins (HIPS), acrylonitrile-styrene

copolymers (AS resins), acrylonitrile-butadiene-styrene copolymers (ABS resins), acrylonitrile-styrene-acrylic rubber copolymers (ASA resins), and acrylonitrile-ethylene propylene rubber-styrene copolymers (AES resins);

polyolefin resins, such as polyethylene resins (PE resins), polypropylene resins (PP resins), and cyclic cycloolefin resins (COP resins); and

polyamide resins (PA resins); polyimide resins (PI resins); poly(ether imide) resins (PEI resins); polyurethane resins (PU resins); poly(phenylene ether) resins (PPE resins); poly(phenylene sulfide) resins (PPS resins); polysulfone resins (PSU resins); polymethacrylate resins (PMMA resins); liquid crystal polymers (LCP), and the like.

The other resins may be used alone or combined in any ratio.

<Resin Additive Agents>

A resin additive agent that may be contained in the thermoplastic resin composition according to the first invention is, for example, a heat stabilizer, an antioxidant, a release agent, a light stabilizer (HALS), a flame retardant, an antistatic agent, an anti-fogging agent, a lubricant, an anti-blocking agent, a flow modifier, a plasticizer, a dispersant, an antimicrobial agent, a dye, a pigment, or the like. The resin additive agents may be used alone or combined in any ratio.

<Polycarbonate Resin Content>

The thermoplastic resin composition according to the first invention may contain a resin other than the polycarbonate resin according to the first invention and/or a resin additive agent or may contain any combination of two or more resins other than the polycarbonate resin according to the first invention and/or two or more resin additive agents in any ratio.

When the thermoplastic resin composition according to the first invention contains a resin other than the polycarbonate resin according to the first invention and/or a resin additive agent, to more effectively ensure the advantages of the first invention by the polycarbonate resin according to the first invention, the amount of the polycarbonate resin according to the first invention in all the resin components contained in the thermoplastic resin composition according to the first invention is preferably 30% by mass or more, more preferably 40% by mass or more, still more preferably 50% by mass or more, particularly preferably 60% by mass or more, most preferably 70% by mass or more.

[Communication Device Member]

The thermoplastic resin composition according to the first invention has high radio wave transmission in the microwave and/or millimeter-wave band, good color tone, less burning, and high heat resistance and is therefore useful as a microwave and/or millimeter-wave communication device member for which these characteristics are strictly required.

The shape, pattern, color, dimensions, and the like of a microwave and/or millimeter-wave communication device member are not particularly limited and can be appropriately determined according to the application of the microwave and/or millimeter-wave communication device member.

The application is, for example, a housing for a communication device with a built-in microwave and/or millimeter-wave antenna, such as a notebook computer, a tablet device, a smartphone, or a router; a module for automotive millimeter-wave radar for use in an automatic brake controller, an inter-vehicle distance controller, a pedestrian accident reduction steering system, a false transmission suppression controller, an acceleration controller in abnormal operation of an accelerator pedal, a warning system for approaching vehicles, a lane keeping assist system, a rear-end collision warning system, a parking assistance system, a warning system for obstacles around vehicle, or the like, or a railway or aviation millimeter-wave radar module for use in a platform monitoring system/a system for detecting obstacles on a railroad crossing, a content transmission system on a train, a streetcar/railway collision prevention system, a system for detecting a foreign substance in a runway, or the like; a millimeter-wave radar module for transportation infrastructure, such as an intersection monitoring system or an elevator monitoring system; a millimeter-wave radar module for various security systems; a millimeter-wave radar module for medical or nursing care, such as children or elderly watching system; a millimeter-wave radar module for various information content transmission; an antenna substrate material, such as a base station substrate, a router substrate, a server substrate, or a CPU substrate; or an antenna member, such as a monopole antenna, a dipole antenna, a patch antenna, a whip antenna, a loop antenna, or a slot antenna.

In the first invention, the term "microwave" refers to a radio wave with a frequency in the range of 3.0 to 30 GHz, and the term "millimeter-wave" refers to a radio wave with a frequency in the range of 30 to 300 GHz. Thus, the microwave and/or millimeter-wave refers to a radio wave with a frequency in the range of 3.0 to 300 GHz. Thus, a communication device with a built-in microwave and/or millimeter-wave antenna refers to a communication device with a built-in antenna for transmitting and receiving a radio wave with a frequency in the range of 3.0 to 300 GHz. Specific

examples of the communication device include notebook computers, tablet devices, smartphones, and routers that transmit and receive a radio wave with a frequency in the range of 3.0 to 300 GHz.

The frequency of transmission and reception by the microwave and/or millimeter-wave antenna of the microwave and/or millimeter-wave communication device member according to the first invention may range from 3.0 to 300 GHz, preferably 3.2 to 250 GHz, more preferably 3.4 to 200 GHz.

In particular, the microwave and/or millimeter-wave communication device member according to the first invention can be suitably used for a radio wave in a frequency band in the range of 3.5 to 30 GHz used in a fifth-generation mobile communication system (5G).

Radio waves in a microwave and/or millimeter-wave band tend to have poor radio wave transmission. From such a perspective, a housing for a communication device with a built-in antenna for transmitting and receiving a radio wave in a microwave and/or millimeter-wave band is required to have high radio wave transmission.

Communication devices for transmitting and receiving radio waves in a microwave and/or millimeter-wave band tend to generate heat. Thus, a housing for a communication device with a built-in antenna for transmitting and receiving a radio wave in a microwave and/or millimeter-wave band is required to have high heat resistance.

The polycarbonate resin according to the first invention contained in the thermoplastic resin composition according to the first invention used in the microwave and/or millimeter-wave communication device member of the first invention characteristically has good dielectric properties, high heat resistance, good color tone, and less burning. Reflecting these characteristics, the thermoplastic resin composition according to the first invention containing the polycarbonate resin according to the first invention has good radio wave transmission in the microwave and/or millimeter-wave band, high heat resistance, and good appearance, and is therefore suitable for use in a communication device member that transmits and receives a radio wave in the microwave and/or millimeter-wave band for which these characteristics are strictly required.

Specific examples of the microwave and/or millimeter-wave communication device member include a housing for a communication device with a built-in microwave and/or millimeter-wave antenna, such as a notebook computer, a tablet device, a smartphone, or a router, and an antenna substrate material, such as a base station substrate, a router substrate, a server substrate, or a CPU substrate, and the thermoplastic resin composition according to the first invention is particularly suitable for these applications.

<Method for Producing Communication Device Member>

The thermoplastic resin composition according to the first invention may be processed into the communication device member according to the first invention by any method, for example, an injection molding method, an injection compression molding method, an extrusion method, a profile extrusion method, a transfer forming method, a hollow molding method, a gas-assisted blow molding method, a blow molding method, extrusion blow molding, an in-mold coating (IMC) forming method, a rotational molding method, a multilayer forming method, a coinjection molding method, an insert molding method, a sandwich forming method, a foam molding method, a compression molding method, a sheet forming method, a thermoforming method, a laminate molding method, or a press forming method. Among these, an injection molding method or an extrusion method is suitably used.

The forming temperature for forming the thermoplastic resin composition according to the first invention is preferably, but not limited to, 200°C or more, more preferably 250°C or more, most preferably 280°C or more. A forming temperature equal to or higher than the lower limit results in improved fluidity and formability. The forming temperature for forming the thermoplastic resin composition according to the first invention is preferably 350°C or less, particularly preferably 320°C or less. A forming temperature equal to or lower than the upper limit can result in a communication device member with good appearance.

When forming is performed, a pigment, a dye release agent, a heat stabilizer, and/or the like may be appropriately added to the thermoplastic resin composition according to the first invention within a range that does not impair the objects of the first invention.

[Embodiment for Implementing Second Invention]

[Outline]

The thermoplastic resin composition according to the second invention is a thermoplastic resin composition containing a polycarbonate resin, wherein

the polycarbonate resin (hereinafter sometimes referred to as "the polycarbonate resin according to the second invention") has a structural unit (a) represented by the following formula (11) and a structural unit (b) represented by the following formula (12A) and/or the following formula (12B),

the specific viscosity of a solution of 0.7 g of the polycarbonate resin dissolved in 100 mL of methylene chloride (hereinafter sometimes referred to simply as "the specific viscosity) is in the range of 0.308 to 0.455 as measured at 20°C,
the polycarbonate resin has a viscosity-average molecular weight in the range of 17,300 to 26,400, and
a hydrolysate produced by hydrolyzing the polycarbonate resin (hereinafter sometimes referred to as a "hydrolysate according to the second invention") contains dihydroxy compounds represented by the following formulae (13), (14), (15A), and (15B), and the amount of the dihydroxy compound represented by the formula (14) in the hydrolysate ranges from 100 ppm to 1,300 ppm of the amount of the dihydroxy compound represented by the formula (13).

[Chem. 17]

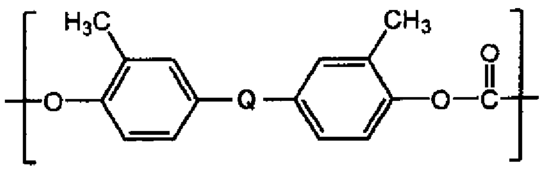
(11)

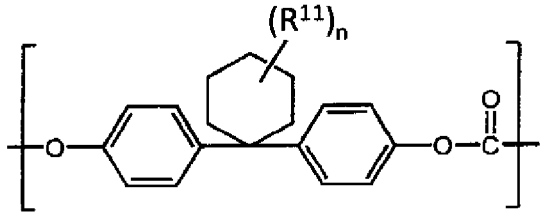
(12A)

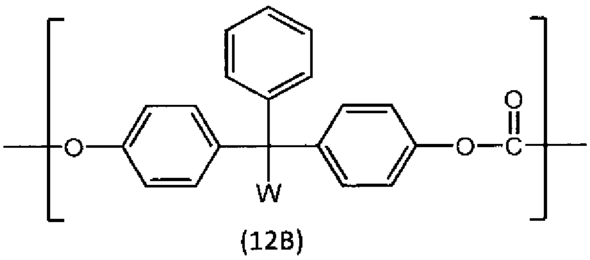
(12B)

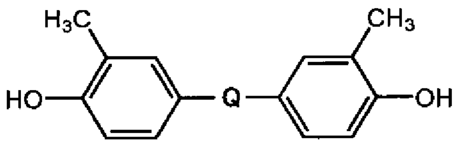
(13)

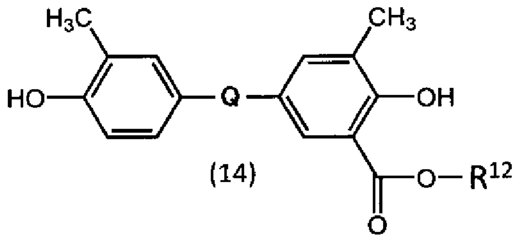
(14)

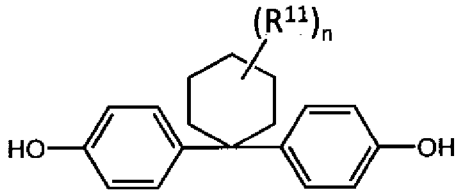
(15A)

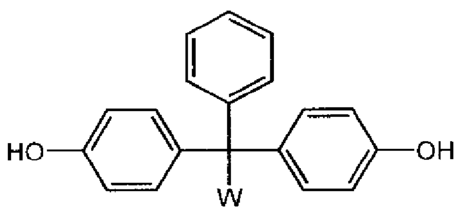
(15B)

(In the formula (11), Q denotes at least one selected from a single bond, an oxygen atom, a sulfur atom, and a divalent organic group.
In the formula (12A), $R^{11}$ each independently denotes an alkyl group with 1 to 4 carbon atoms, and n is an integer in the range of 0 to 3.
In the formula (12B), W denotes a methyl group or a phenyl group.
In the formula (13), Q is the same as Q in the formula (11) .
In the formula (14), Q is the same as Q in the formula (11), and $R^{12}$ denotes a hydrogen atom or a methyl group.
In the formula (15A), $R^{11}$ is the same as $R^{11}$ in the formula (12A).
In the formula (15B), W is the same as W in the formula (12B).)

Hereinafter, the dihydroxy compound represented by the formula (13) is referred to as a "dihydroxy compound (13)", the dihydroxy compound represented by the formula (14) is referred to as a "dihydroxy compound (14)", the dihydroxy compound represented by the formula (15A) is referred to as a "dihydroxy compound (15A)", the dihydroxy compound represented by the formula (15B) is referred to as a "dihydroxy compound (15B)", and these compounds are sometimes collectively referred to as "dihydroxy compounds (13) to (15)".
The content ratio of the dihydroxy compound (14) to the dihydroxy compound (13) in the hydrolysate according to the second invention is sometimes referred to as the "ratio (14)/(13) in the hydrolysate".
Components and the like constituting the polycarbonate resin according to the second invention, the hydrolysate and the dihydroxy compounds (13) to (15) according to the second invention, and the thermoplastic resin composition according to the second invention are described in detail below.

[Polycarbonate Resin]

The polycarbonate resin according to the second invention is characterized by having a structural unit (a) represented by the following formula (11) and a structural unit (b) represented by the following formula (12A) and/or the following formula (12B). The structural unit (b) is different from the structural unit (a).
The structural unit (a) represented by the formula (11) and the structural unit (b) represented by the formula (12A) and/or the formula (12B) may be contained as a copolymer or may be a blend of their respective resins. Thus, the polycarbonate resin according to the second invention may be a polycarbonate copolymer containing the structural unit (a) and the structural unit (b) or may be a blend of a polycarbonate resin containing the structural unit (a) and a polycarbonate resin containing the structural unit (b).
The thermoplastic resin composition according to the second invention, which contains the polycarbonate resin with the structural unit (a) represented by the formula (11) and the structural unit (b) represented by the formula (12A) and/or the formula (12B) and has a predetermined specific viscosity, viscosity-average molecular weight, and ratio (14)/(13) in the hydrolysate, can have high pencil hardness, high heat resistance, good initial color tone, high impact resistance, and good low-dielectric properties.

[Chem. 18]

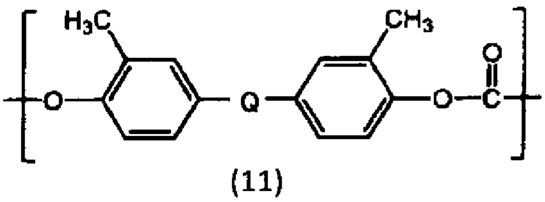

(11)

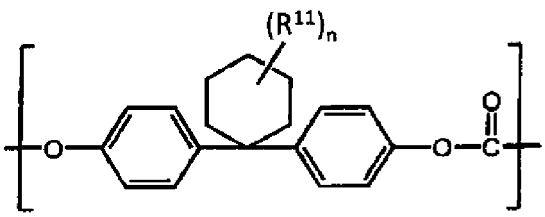

(12A)

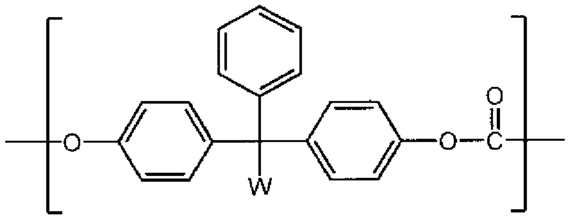

(12B)

(In the formula (11), Q denotes at least one selected from a single bond, an oxygen atom, a sulfur atom, and a divalent organic group. In the formula (12A), $R^{11}$ each independently denotes an alkyl group with 1 to 4 carbon atoms, and n is an integer in the range of 0 to 3. In the formula (12B), W denotes a methyl group or a phenyl group.)
The polycarbonate resin according to the second invention is a polycarbonate resin with the structural unit (a) and the structural unit (b) and has high pencil hardness, high heat resistance, and good low-dielectric properties.
The polycarbonate resin according to the second invention may be a copolymerized polycarbonate resin composed of the structural unit (a), the structural unit (b), and another structural unit (c) described later, if necessary.

<Structural Unit (a)>

In the formula (11), which represents the structural unit (a) of the polycarbonate resin according to the second

invention, Q denotes at least one selected from a single bond, an oxygen atom, a sulfur atom, and a divalent organic group.

The divalent organic group of Q may be appropriately selected from any known groups, and specific examples thereof include organic groups represented by the following formulae (16a) to (16h).

[Chem. 19]

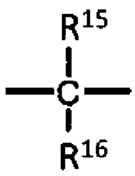

(16a)

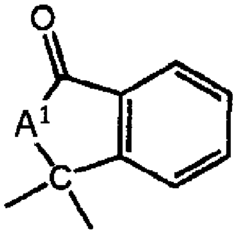

(16b)

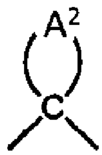

(16c)

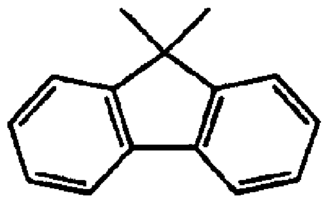

(16d)

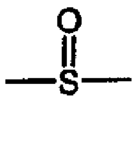

(16e)

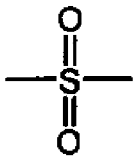

(16f)

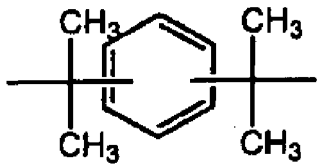

(16g)

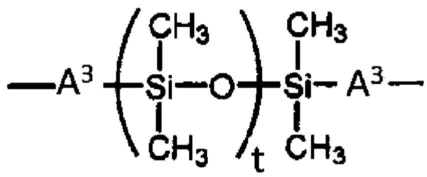

(16h)

In formula (16a), $R^{15}$ and $R^{16}$ each independently represent a hydrogen atom, a monovalent hydrocarbon group having 1 to 24 carbon atoms, or an alkoxy group having 1 to 24 carbon atoms. A monovalent hydrocarbon group having 1 to 24 carbon atoms is preferred.

Examples of the monovalent hydrocarbon group having 1 to 24 carbon atoms include an alkyl group having 1 to 24 carbon atoms, an alkenyl group having 2 to 24 carbon atoms, an aryl group having 6 to 24 carbon atoms which may have a substituent, and an arylalkyl group having 7 to 24 carbon atoms, and the like.

Examples of alkyl groups having 1 to 24 carbon atoms include linear and branched alkyl groups, and alkyl groups having a partially cyclic structure and the like. Among them, a straight-chain alkyl group is preferred. Examples of such alkyl groups having 1 to 24 carbon atoms include methyl group, ethyl group, n-propyl group, n-butyl group, n-pentyl group, n-hexyl group, n-heptyl group, n-octyl group, and the like.

Examples of alkenyl groups having 2 to 24 carbon atoms include linear and branched alkenyl groups, and alkenyl groups having a partially cyclic structure, and the like. Among them, linear alkenyl groups are preferred. Examples of such alkenyl groups having 2 to 24 carbon atoms include vinyl group, n-propenyl group, n-butenyl group, n-pentenyl group, n-hexenyl group, n-heptenyl group, n-octenyl group, and the like.

Examples of the aryl group having 6 to 24 carbon atoms include phenyl group, naphthyl group, and aryl groups which may have substituents such as alkyl groups such as methylphenyl group, dimethylphenyl group and trimethylphenyl group.

Examples of the arylalkyl group having 7 to 24 carbon atoms include a benzyl group.

Examples of the alkoxy group having 1 to 24 carbon atoms include linear and branched alkoxy groups, and alkoxy groups having a partially cyclic structure. And among them, linear alkoxy groups are preferred. Specific examples include methoxy group, ethoxy group, propoxy group, and butoxy group.

In formula (16b), $A^1$ represents an oxygen atom or $NR^A$. Here, $R^A$ has the same definition as $R^{15}$ and $R^{16}$ described above.

In formula (16c), $A^2$ represents a divalent hydrocarbon group having 3 to 18 carbon atoms. Examples thereof include alkylene groups such as propylene group, butylene group, pentylene group, hexylene group, heptylene group, octylene group, nonylene group, decylene group, undecylene group and dodecinylene group, each of which may further have a substituent. Substituents include methyl group, ethyl group, propyl group, butyl group, pentyl group, phenyl group and the like. Furthermore, it may have a partially crosslinked structure.

In formula (16h), $A^3$ represents an alkylene group having 1 to 7 carbon atoms. Such an alkylene group may be linear or branched, or may have a cyclic structure. Examples thereof include methylene group, ethylene group, propylene group, and butylene group and the like. Further, t represents an integer of 1 to 500, preferably 5 to 300, more preferably 10 to 100.

Among these, Q more preferably denotes a single bond or a group represented by the following formula (16), for example, a methylene group, an ethylidene group, or an isopropylidene group and from the perspective of improved heat resistance and less burning most preferably an isopropylidene group (that is, $R^{13}$ and $R^{14}$ in the following formula (16) are methyl groups).

[Chem. 20]

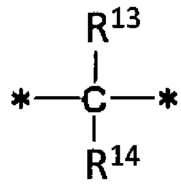

(16)

(In the formula (16), $R^{13}$ and $R^{14}$ each independently denote a hydrogen atom or an alkyl group with 1 to 15 carbon atoms, and * represents a bonding arm to a benzene ring in the formula (11).)

<Structural Unit (b)>

The structural unit (b) of the polycarbonate resin according to the second invention is represented by the formula (12A) and/or the formula (12B).

In the formula (12A), $R^{11}$ each independently denotes an alkyl group with 1 to 4 carbon atoms, and n is an integer in the range of 0 to 3.

Specific examples of the alkyl group having 1 to 4 carbon atoms for $R^{11}$ in the formula (12A) include methyl group, ethyl group, n-propyl group, isopropyl group, n-butyl group, isobutyl group, sec-butyl group, tert-butyl group, and the like.

Among these, $R^{11}$ is preferably methyl group.

In the formula (12A), n is an integer of 0 to 3. Although n is not particularly limited as long as it is an integer of 0 to 3, n is preferably 0 or 3, and particularly preferably 3.

In the formula (12B), W is methyl group or phenyl group.

Among these, W is preferably methyl group.

The structural unit (b) may be composed only of the structural unit represented by the formula (12A), may be composed only of the structural unit represented by the formula (12B), or may contain both the structural unit represented by the structural unit (12A) and the structural unit represented by the structural unit (12B).

Preferred specific examples of the structural unit (b) include structural units represented by the following formulae (17), (18A), and (18B) from the perspective of improved color tone.

[Chem. 21]

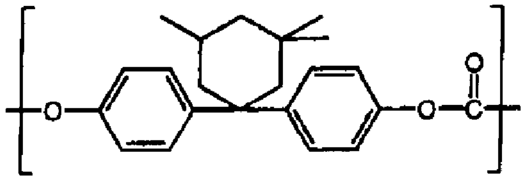

(17)

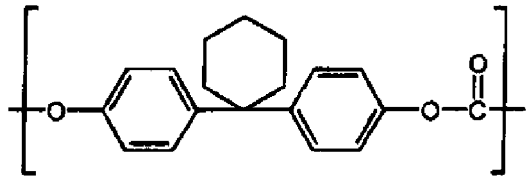

(18A)

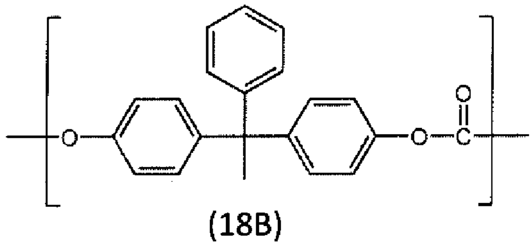

(18B)

The most preferred specific examples of the structural unit (b) include the structural unit represented by the formula (17) from the perspective of heat resistance and suppression of poor appearance (burning) during forming.

Each of the structural unit (a) and the structural unit (b) in the polycarbonate resin according to the second invention may be a copolymer or a blend of their respective resins, and is preferably a copolymer when the structural unit (b) is the structural unit represented by the formula (12A), and is preferably a blend when the structural unit (b) is a structural unit represented by the formula (12B).

<Other Structural Unit (c)>

The polycarbonate resin according to the second invention may contain one or two or more other structural units (c) other than the structural unit (a) and the structural unit (b) within the scope of not impairing the object of the second invention. Examples of the other structural units (c) include structural units derived from aromatic dihydroxy compounds, such as 2,2-bis(4-hydroxyphenyl)propane (bisphenol A), 4,4'-dihtdroxybiphenyl (biphenol), and 6,6'-dihydroxy-3,3,3',3'-tetramethyl-1,1'-spirobiindane (SBI). Among these, structural units derived from bisphenol A and biphenol are preferred.

<Amounts of Structural Units (a) and (b)>

The polycarbonate resin according to the second invention may be a polycarbonate resin with the structural unit (a) and the structural unit (b) and may contain any amounts of structural units (a) and (b). The total amount of the structural units (a) and (b) in the polycarbonate resin according to the second invention is preferably 30% by mole or more, more preferably 50% by mole or more, still more preferably 70% by mole or more, particularly preferably 80% by mole or more, most preferably 90% by mole or more, of all the carbonate structural units of the polycarbonate resin.

The ratio of the structural unit (a) to the structural unit (b) is not particularly limited, but from the perspective of improved heat resistance, the structural unit (b) is preferably 5% by mole or more, more preferably 10% by mole or more, still more preferably 15% by mole or more, particularly preferably 20% by mole or more, of the total amount of the structural units (a) and (b). On the other hand, from the perspective of improved formability, dielectric properties, and surface hardness, the structural unit (b) preferably constitutes 80% by mole or less, more preferably 60% by mole or less, still more preferably 50% by mole or less, particularly preferably 40% by mole or less, of the total amount of the structural units (a) and (b).

<Molecular Weight of Polycarbonate Resin>

The molecular weight of the polycarbonate resin according to the second invention is preferably, but not limited to, in the range of 10,000 to 35,000 in terms of a viscosity-average molecular weight (Mv) calculated from the solution

viscosity. The features of the second invention can be effectively brought out by setting the viscosity-average molecular weight in the above range. The polycarbonate resin according to the second invention with a viscosity-average molecular weight above the lower limit is preferred in terms of high pencil hardness and high impact resistance. The polycarbonate resin according to the second invention with a viscosity-average molecular weight below the upper limit is preferred in terms of high fluidity. From such a perspective, the polycarbonate resin according to the second invention more preferably has a viscosity-average molecular weight (Mv) of 12,000 or more, still more preferably 13,000 or more, particularly preferably 14,000 or more, and more preferably 30,000 or less, still more preferably 28,000 or less, particularly preferably 26,000 or less.

The viscosity-average molecular weight (Mv) of the polycarbonate resin according to the second invention refers to a value determined by measuring intrinsic viscosity (limiting viscosity) [η] (unit: dL/g) at a temperature of 20°C with an Ubbelohde viscometer using methylene chloride as a solvent and calculated using Schnell viscosity equation $\eta = 1.23 \times 10^{-4} Mv^{0.83}$. The intrinsic viscosity (limiting viscosity) [η] refers to a value determined by measuring specific viscosities [ηsp] at different solution concentrations [C] (g/dL) and calculated using the following formula.

[Math. 1]

$$\eta = \lim_{c \to 0} \eta_{sp}/c$$

<Glass Transition Temperature of Polycarbonate Resin>

The glass transition temperature Tg of the polycarbonate resin according to the second invention is preferably, but not limited to, 125°C or more. A Tg of 125°C or more can result in high heat resistance. On the other hand, Tg is preferably 230°C or less. A Tg of 230°C or less can result in high fluidity and forming processability.

For Tg of the polycarbonate resin, approximately 10 mg of a polycarbonate resin sample is heated with a differential scanning calorimeter at a heating rate of 20°C/min to measure the amount of heat, and an extrapolated glass transition starting temperature, which is the temperature at an intersection point between an extended line of the baseline from the low temperature side to the high temperature side and a tangent line drawn at a point of the maximum gradient of a curve of a stepwise change portion of glass transition, is determined as a glass transition temperature (Tg) in accordance with ISO 3146.

<Method for Producing Polycarbonate Resin>

The polycarbonate resin according to the second invention can be produced by a known polymerization method, which is not particularly limited. Examples of the polymerization method include an interfacial polymerization method, a melt transesterification method, a pyridine method, a ring-opening polymerization method of a cyclic carbonate compound, and a solid-phase transesterification method of a prepolymer. Among these methods, particularly suitable methods are more specifically described below.

(Interfacial Polymerization Method)

In the interfacial polymerization method, a raw material dihydroxy compound and a carbonate-forming compound are allowed to react in the presence of an inert organic solvent and an alkaline aqueous solution typically at a pH of 9 or more, and subsequent interfacial polymerization in the presence of a polymerization catalyst yields a polycarbonate resin. If necessary, the reaction system may include a molecular weight modifier (terminating agent) and an antioxidant for preventing the oxidation of the raw material dihydroxy compound.

Examples of the inert organic solvent include, but are not limited to, chlorinated hydrocarbons, such as dichloromethane, 1,2-dichloroethane, chloroform, monochlorobenzene, and dichlorobenzene; and aromatic hydrocarbons, such as benzene, toluene, and xylene. The organic solvents may be used alone or combined in any ratio.

The alkaline aqueous solution may contain any alkaline compound, for example, an alkali or alkaline-earth metal compound, such as sodium hydroxide, potassium hydroxide, lithium hydroxide, or sodium hydrogen carbonate. Among these, sodium hydroxide and potassium hydroxide are preferred. The alkaline compounds may be used alone or combined in any ratio.

The concentration of an alkaline compound in the alkaline aqueous solution is typically, but not limited to, in the range of 5% to 10% by mass to control the pH of the alkaline aqueous solution in the range of 10 to 12. In the case

of blowing with phosgene, to control the pH of an aqueous phase in the range of 10 to 12, preferably 10 to 11, it is preferable that the mole ratio of the raw material dihydroxy compound to the alkaline compound is typically 1:1.9 or more, particularly 1:2.0 or more, and typically 1:3.2 or less, particularly 1:2.5 or less.

The raw material dihydroxy compound is at least a dihydroxy compound that can form the structural unit (a) and the structural unit (b) by a reaction with the carbonate-forming compound.

The carbonate-forming compound is suitably a carbonyl halide. Phosgene is particularly preferred. The method using phosgene is particularly referred to as a phosgene method.

Examples of the polymerization catalyst include, but are not limited to, aliphatic tertiary amines, such as trimethylamine, triethylamine, tributylamine, tripropylamine, and trihexylamine; alicyclic tertiary amines, such as N,N'-dimethylcyclohexylamine and N,N'-diethylcyclohexylamine; aromatic tertiary amines, such as N,N'-dimethylaniline and N,N'-diethylaniline; quaternary ammonium salts, such as trimethylbenzylammonium chloride, tetramethylammonium chloride, and triethylbenzylammonium chloride; pyridines; guanines; and guanidine salts. The polymerization catalysts may be used alone or combined in any ratio.

Examples of the molecular weight modifier include, but are not limited to, aromatic phenols with a monohydric phenolic hydroxy group; aliphatic alcohols, such as methanol and butanol; mercaptans; and phthalimides. Among these, aromatic phenols are preferred. Specific examples of the aromatic phenol include phenol, o-n-butylphenol, m-n-butylphenol, p-n-butylphenol, o-isobutylphenol, m-isobutylphenol, p-isobutylphenol, o-t-butylphenol, m-t-butylphenol, p-t-butylphenol, o-n-pentylphenol, m-n-pentylphenol, p-n-pentylphenol, o-n-hexylphenol, m-n-hexylphenol, p-n-hexylphenol, p-t-octylphenol, o-cyclohexylphenol, m-cyclohexylphenol, p-cyclohexylphenol, o-phenylphenol, m-phenylphenol, p-phenylphenol, o-n-nonylphenol, m-n-nonylphenol, p-n-nonylphenol, o-cumylphenol, m-cumylphenol, p-cumylphenol, o-naphthylphenol, m-naphthylphenol, p-naphthylphenol, 2,5-di-t-butylphenol, 2,4-di-t-butylphenol, 3,5-di-t-butylphenol, 2,5-dicumylphenol, 3,5-dicumylphenol, p-cresol, bromophenol, tribromophenol, monoalkylphenols with a linear or branched alkyl group having 12 to 35 carbon atoms on average in the ortho, meta, or para position, 9-(4-hydroxyphenyl)-9-(4-methoxyphenyl)fluorene, 9-(4-hydroxy-3-methylphenyl)-9-(4-methoxy-3-methylphenyl)fluorene, and 4-(1-adamantyl)phenol. Among these, p-t-butylphenol, p-phenylphenol, and p-cumylphenol are preferably used. The molecular weight modifiers may be used alone or combined in any ratio.

The amount of molecular weight modifier to be used is typically, but not limited to, 0.5 mol or more, preferably 1 mol or more, and typically 50 mol or less, preferably 30 mol or less, per 100 mol of the raw material dihydroxy compound.

The antioxidant may be, but is not limited to, a hindered phenolic antioxidant. Specific examples include pentaerythritoltetrakis[3-(3,5-di-tert-butyl-4-hydroxyphenyl)propionate], octadecyl-3-(3,5-di-tert-butyl-4-hydroxyphenyl)propionate, thiodiethylenebis[3-(3,5-di-tert-butyl-4-hydroxyphenyl)propionate], N,N'-hexane-1,6-diylbis[3-(3,5-di-tert-butyl-4-hydroxyphenyl)propionamide], 2,4-dimethyl-6-(1-methylpentadecyl)phenol, diethyl[[3,5-bis(1,1-dimethylethyl)-4-hydroxyphenyl]methyl]phosphate, 3,3',3",5,5',5"-hexa-tert-butyl-a,a',a"-(mesitylene-2,4,6-triyl)tri-p-cresol, 4,6-bis(octylthiomethyl)-o-cresol, ethylenebis(oxyethylene)bis[3-(5-tert-butyl-4-hydroxy-m-tolyl)propionate], hexamethylenebis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 2,6-di-tert-butyl-4-(4,6-bis(octylthio)-1,3,5-triazine-2-ylamino)phenol, and 2-[1-(2-hydroxy-3,5-di-tert-pentylphenyl)ethyl]-4,6-di-tert-pentylphenyl acrylate.

Among these, pentaerythritoltetrakis[3-(3,5-di-tert-butyl-4-hydroxyphenyl)propionate] and octadecyl-3-(3,5-di-tert-butyl-4-hydroxyphenyl)propionate are preferred. Commercial products of such phenolic antioxidants include "Irganox 1010" and "Irganox 1076" manufactured by BASF and "ADK STAB AO-50" and "ADK STAB AO-60" manufactured by Adeka Corp.

The antioxidants may be used alone or combined in any ratio.

The amount of antioxidant to be used is preferably, but not limited to, 0.001 parts or more by mass, more preferably 0.01 parts or more by mass, still more preferably 0.1 parts or more by mass, per 100 parts by mass of the raw material dihydroxy compound. An amount of antioxidant equal to or higher than the lower limit results in a sufficient effect of the antioxidant. The amount of antioxidant to be used is preferably 1 part or less by mass, more preferably 0.5 parts or less by mass, per 100 parts by mass of the raw material dihydroxy compound. An amount of antioxidant equal to or lower than the upper limit can result in less gas evolution during injection molding.

In the reaction, a reaction substrate (reaction raw material), a reaction solvent (organic solvent), a catalyst, and an additive agent are mixed in any order, provided that a desired polycarbonate resin can be produced. Thus, the order may be appropriately determined. For example, when phosgene is used as a carbonate-forming compound, the molecular weight modifier may be added at any point between the reaction (phosgenation) of the raw material dihydroxy compound with phosgene and the beginning of the polymerization reaction.

The reaction temperature is preferably, but not limited to, in the range of 0°C to 40°C. The reaction time is preferably, but not limited to, in the range of several minutes (for Example 10 minutes) to several hours (for example, 6 hours).

(Melt Transesterification Method)

The melt transesterification method involves transesterification between a carbonate ester and the raw material dihydroxy compound, for example.

The raw material dihydroxy compound is the same as that in the interfacial polymerization method.

Examples of the carbonate ester include compounds represented by the following formula (19), such as aryl carbonates, dialkyl carbonates, biscarbonates of dihydroxy compounds, monocarbonates of dihydroxy compounds, and carbonates of dihydroxy compounds, such as cyclic carbonates.

[Chem. 22]

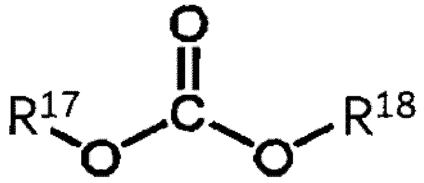

(19)

In the above formula (19), $R^{17}$ and $R^{18}$ independently denote an alkyl group having 1 to 30 carbon atoms, an aryl group, or an arylalkyl group. When $R^{17}$ and $R^{18}$ independently denote an alkyl group or an arylalkyl group, the compound is hereinafter sometimes referred to as a dialkyl carbonate, and when $R^{17}$ and $R^{18}$ independently denote an aryl group, the compound is hereinafter sometimes referred to as a diaryl carbonate. In terms of reactivity with the dihydroxy compound, both $R^{17}$ and $R^{18}$ preferably independently denote an aryl group, more preferably a diaryl carbonate represented by the following formula (20).

[Chem. 23]

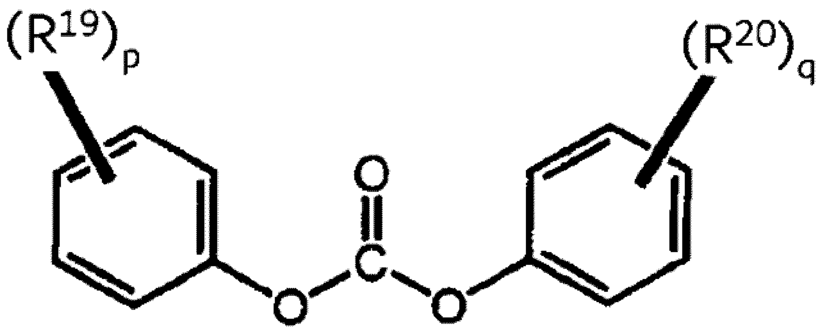

(20)

In the above formula (20), $R^{19}$ and $R^{20}$ independently denote a halogen atom, a nitro group, a cyano group, an alkyl group having 1 to 20 carbon atoms, an alkoxycarbonyl group having 1 to 20 carbon atoms, a cycloalkyl group having 4 to 20 carbon atoms, or an aryl group having 6 to 20 carbon atoms, p and q independently denote an integer in the range of 0 to 5.

Specific examples of the carbonate ester include dialkyl carbonates, such as dimethyl carbonate, diethyl carbonate, and di-t-butyl carbonate, and (optionally substituted) diaryl carbonate, such as diphenyl carbonate (hereinafter sometimes abbreviated to "DPC"), bis(4-methylphenyl)carbonate, bis(4-chlorophenyl)carbonate, bis(4-fluorophenyl)carbonate, bis(2-chlorophenyl)carbonate, bis(2,4-difluorophenyl)carbonate, bis(4-nitrophenyl)carbonate, bis(2-nitrophenyl)carbonate, bis(methylsalicylphenyl)carbonate, and ditolyl carbonate. Among these, diphenyl carbonate is preferred. These carbonate esters may be used alone or in combination.

Preferably 50% or less by mole, more preferably 30% or less by mole, of the carbonate ester may be substituted with dicarboxylic acid or dicarboxylate. Typical examples of the dicarboxylic acid or dicarboxylate include terephthalic acid, isophthalic acid, diphenyl terephthalate, and diphenyl isophthalate. Substitution with such a dicarboxylic acid or dicarboxylate yields a polyester carbonate.

The ratio of the raw material dihydroxy compound to the carbonate ester may be any ratio that can result in a desired polycarbonate resin. The carbonate ester is preferably used in excess with respect to the raw material dihydroxy

compound in polymerization with the dihydroxy compound. The amount of the carbonate ester is preferably 1.01 times or more (mole ratio), more preferably 1.02 times or more, the amount of the dihydroxy compound. A mole ratio equal to or higher than the lower limit results in a polycarbonate resin with high thermal stability. The amount of the carbonate ester is preferably 1.30 times or less (mole ratio), more preferably 1.20 times or less, the amount of the dihydroxy compound. A mole ratio equal to or lower than the upper limit is suitable in terms of improved reactivity, improved productivity of a polycarbonate resin with a desired molecular weight, and a lower residual carbonate ester content of the polycarbonate resin, which can result in less malodor during shape processing or of a formed product.

A transesterification catalyst is typically used to produce a polycarbonate resin by the melt transesterification method. The transesterification catalyst may be, but is not limited to, a known transesterification catalyst. For example, an alkali metal compound and/or an alkaline-earth metal compound is preferably used. In an auxiliary manner, for example, a basic compound, such as a basic boron compound, a basic phosphorus compound, a basic ammonium compound, or an amine compound, may be combined. The transesterification catalysts may be used alone or combined in any ratio.

In the melt transesterification method, the reaction temperature is typically, but not limited to, in the range of 100°C to 320°C. The reaction pressure is typically, but not limited to, a reduced pressure of 2 mmHg or less. In specific procedures, a melt polycondensation reaction may be performed under the conditions described above while removing by-products.

A polycarbonate resin according to the second invention is significantly affected by thermal history and oxidation in the presence of an alkaline catalyst and consequently has poor hue. It is therefore preferred to set the reaction temperature at 320°C or less and select a reduced-pressure condition with a lower limit of approximately 0.05 mmHg to prevent oxygen from leaking into an apparatus due to an excessively reduced pressure.

The reaction may be performed batch-wise or continuously. In a batch-wise reaction, a reaction substrate, a reaction solvent, a catalyst, and an additive agent are mixed in any order provided that a desired polycarbonate resin can be produced. Thus, the order may be appropriately determined.

If necessary, the melt transesterification method may use a catalyst deactivator. The catalyst deactivator may be any compound that can neutralize the transesterification catalyst. Examples of the catalyst deactivator include sulfur-containing acidic compounds and derivatives thereof and phosphorus-containing acidic compounds and derivatives thereof. The catalyst deactivators may be used alone or combined in any ratio.

The amount of catalyst deactivator to be used is typically, but not limited to, 0.5 equivalent or more, preferably 1 equivalent or more, more preferably 3 equivalent or more, and typically 50 equivalent or less, preferably 10 equivalent or less, more preferably 8 equivalent or less, of the transesterification catalyst. The amount of catalyst deactivator to be used is typically 1 ppm or more and 100 ppm or less, preferably 50 ppm or less, of the polycarbonate resin.

<Another Polycarbonate Resin>

The polycarbonate resin according to the second invention may contain one or two or more other polycarbonate resins as a blend within a range that does not impair the features of the second invention.

Examples of other polycarbonate resins that may be contained in the polycarbonate resin according to the second invention include polycarbonate resins with a structural unit represented by the following formula (21).

[Chem. 24]

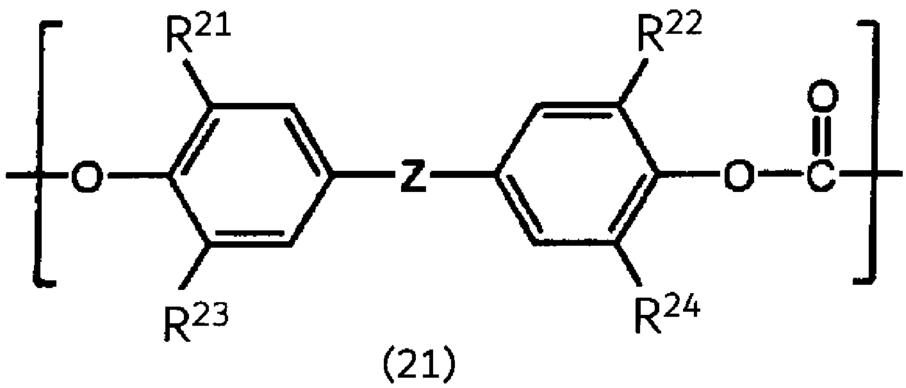

(21)

(In the formula (21), $R^{21}$ to $R^{24}$ each independently denote a hydrogen atom or a methyl group. Z denotes a single bond, an oxygen atom, a sulfur atom, or at least one selected from divalent organic groups represented by the

following formulae (22a) to (22h).)

[Chem. 25]

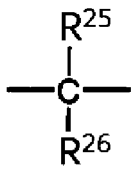

(22a)

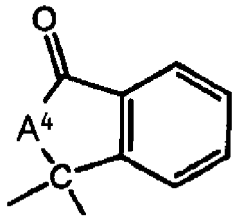

(22b)

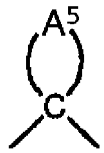

(22c)

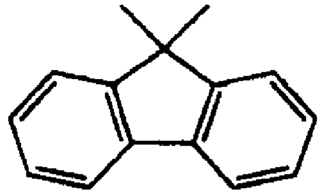

(22d)

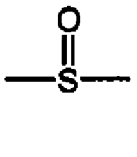

(22e)

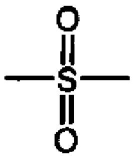

(22f)

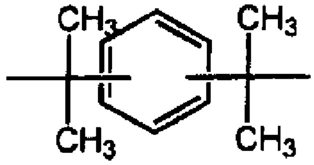

(22g)

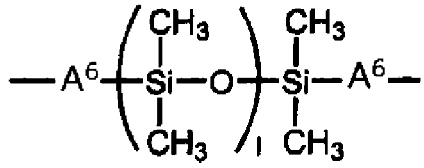

(22h)

In formula (22a), $R^{25}$ and $R^{26}$ each independently represent a hydrogen atom, a monovalent hydrocarbon group having 1 to 24 carbon atoms, or an alkoxy group having 1 to 24 carbon atoms. A monovalent hydrocarbon group having 1 to 24 carbon atoms is preferred.

Examples of the monovalent hydrocarbon group having 1 to 24 carbon atoms include an alkyl group having 1 to 24 carbon atoms, an alkenyl group having 2 to 24 carbon atoms, an aryl group having 6 to 24 carbon atoms which may have a substituent, and an arylalkyl group having 7 to 24 carbon atoms, and the like.

Examples of alkyl groups having 1 to 24 carbon atoms include linear and branched alkyl groups, and alkyl groups having a partially cyclic structure, and the like. Among them, a straight-chain alkyl group is preferred. Examples of such alkyl groups having 1 to 24 carbon atoms include methyl group, ethyl group, n-propyl group, n-butyl group, n-pentyl group, n-hexyl group, n-heptyl group, n-octyl group, and the like.

Examples of alkenyl groups having 2 to 24 carbon atoms include linear and branched alkenyl groups, and alkenyl groups having a partially cyclic structure, and the like. Among them, linear alkenyl groups are preferred. Examples of such alkenyl groups having 2 to 24 carbon atoms include vinyl group, n-propenyl group, n-butenyl group, n-pentenyl group, n-hexenyl group, n-heptenyl group, n-octenyl group, and the like.

Examples of the aryl group having 6 to 24 carbon atoms include phenyl group, naphthyl group, and aryl groups which may have substituents such as alkyl groups such as methylphenyl group, dimethylphenyl group and trimethylphenyl group.

Examples of the arylalkyl group having 7 to 24 carbon atoms include a benzyl group.

Examples of the alkoxy group having 1 to 24 carbon atoms include linear and branched alkoxy groups, and alkoxy groups having a partially cyclic structure. Among them, linear alkoxy groups are preferred. Specific examples include methoxy group, ethoxy group, propoxy group, and butoxy group.

In formula (22b), $A^4$ represents an oxygen atom or $NR^B$. Here, $R^B$ has the same definition as $R^{25}$ and $R^{26}$ described above.

In formula (22c), $A^5$ represents a divalent hydrocarbon group having 3 to 18 carbon atoms. Examples thereof include alkylene groups such as propylene group, butylene group, pentylene group, hexylene group, heptylene group, octylene group, nonylene group, decylene group, undecylene group and dodecinylene group, each of which may further have a substituent. Substituents include methyl group, ethyl group, propyl group, butyl group, pentyl group, phenyl group and the like. Furthermore, it may have a partially crosslinked structure.

In formula (22h), $A^6$ represents an alkylene group having 1 to 7 carbon atoms. Such an alkylene group may be linear or branched, or may have a cyclic structure. Examples thereof include methylene group, ethylene group, propylene group, butylene group, and the like. Further, l represents an integer of 1 to 500, preferably 5 to 300, more preferably 10 to 100.

Among these, Z is more preferably a single bond, an isopropylidene group, or formula (22c). In formula (22c), $A^5$ is preferably a divalent hydrocarbon group having 5 carbon atoms, and a methyl group as a substituent. Z is most

preferably an isopropylidene group.

<Ratio (14)/(13) in Hydrolysate>

The hydrolysate according to the second invention produced by hydrolyzing the polycarbonate resin according to the second invention contains dihydroxy compounds represented by the following formulae (13) to (15), and the dihydroxy compound (14) content of the hydrolysate ranges from 100 ppm to 1,300 ppm of the dihydroxy compound (13) content. When the ratio (14)/(13) in the hydrolysate is in this range, the polycarbonate resin according to the second invention can have improved impact resistance, pencil hardness, and initial color tone.

[Chem. 26]

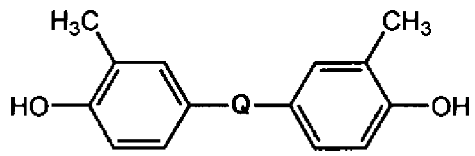

(13)

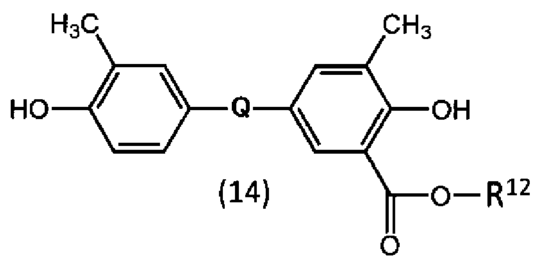

(14)

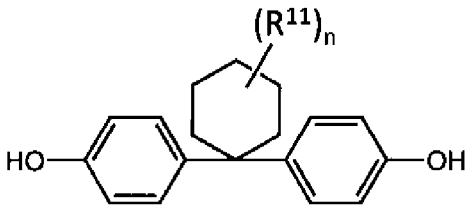

(15A)

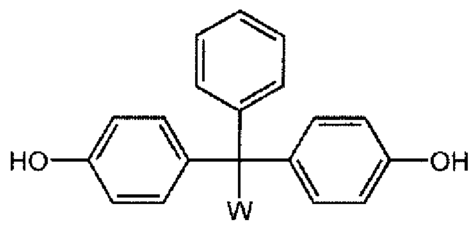

(15B)

(In the formula (13), Q is the same as Q in the formula (11) .

In the formula (14), Q is the same as Q in the formula (11), and $R^{12}$ denotes a hydrogen atom or a methyl group.

In the formula (15A), $R^{11}$ is the same as $R^{11}$ in the formula (12A).

In the formula (15B), W is the same as W in the formula (12B).)

The ratio (14)/(13) in the hydrolysate of the polycarbonate resin according to the second invention is 100 ppm or more, preferably 150 ppm or more, from the perspective of improved impact resistance.

On the other hand, from the perspective of improved initial color tone, the ratio (14)/(13) in the hydrolysate of the polycarbonate resin according to the second invention is preferably 1300 ppm or less, particularly 1200 ppm or less.

The ratio (14)/(13) in the hydrolysate can be adjusted in the above preferred range, for example, by appropriately adjusting the purity of 2,2-bis(4-hydroxy-3-methylphenyl)propane (hereinafter sometimes referred to as "BPC"), which is a dihydroxy compound (13) and is a raw material for the polycarbonate resin according to the second invention, and also by appropriately adjusting the amount of catalyst, pressure, and temperature in the production of the polycarbonate resin, the set conditions at the end of the polycondensation reaction, and the like.

<Method for Analyzing Dihydroxy Compounds (13), (14), and (15) in Hydrolysate>

The amounts of the dihydroxy compounds (13) to (15) in the hydrolysate according to the second invention can be analyzed as described below.

After 0.5 g of the polycarbonate resin is dissolved in 5 mL of methylene chloride, 45 mL of methanol and 5 mL of 25% by mass aqueous sodium hydroxide are added to the solution, and the solution is stirred at 70°C for 30 minutes to hydrolyze the polycarbonate resin (methylene chloride solution). Subsequently, 6 N hydrochloric acid is added to the methylene chloride solution to adjust the pH of the solution to approximately 2, and the solution is adjusted to 100 mL with pure water.

Next, 20 μL of the adjusted methylene chloride solution is subjected to liquid chromatography to measure the amounts of the dihydroxy compound (13), the dihydroxy compound (14), dihydroxy compound (15A) and the dihydroxy compound (15B) (unit: ppm) as each dihydroxy compound content.

The liquid chromatography and the measurement conditions are as follows:

Liquid chromatography: LC-10AD manufactured by Shimadzu Corporation
Column: YMC PACK ODS-AM M-307-3 4.6 mm ID × 75 mm L
Detector: UV 280 nm
Eluent: (A) 0.05% aqueous trifluoroacetic acid (B) methanol
Gradient conditions: 0 minutes (B = 40%), 25 minutes (B=95%)
Flow rate: 1.0 mL/min
Column temperature: 40°C
Injected amount: 20 μL

The amounts of the dihydroxy compound (14) is calculated from their respective peak areas on the basis of a calibration curve prepared using BPC, which is the dihydroxy compound (13).
Although there are some errors depending on the degradation state and the date of manufacture of the column, under these conditions, the peak of BPC which is for example the dihydroxy compound (13) is detected at approximately 12.2 minutes, the peak of the dihydroxy compound (14) is detected at approximately 15.0 minutes, and the peak of the dihydroxy compound (15A) for example, BP-TMC, is detected at approximately 17.6 minutes.
As described above, the amounts of the dihydroxy compound (14) in the hydrolysate according to the second invention is determined by appropriately adjusting the purity of BPC, which is the dihydroxy compound (13) used as a raw material for the polycarbonate resin according to the second invention, and more by adjusting the production conditions of the polycarbonate resin.

<Identification of Dihydroxy Compound (14) in Hydrolysate>

The structure of the dihydroxy compound (14) in the hydrolysate according to the second invention was identified by $^1$H-NMR, $^{13}$C-NMR, two-dimensional NMR, mass spectrometry (MS), and infrared absorption spectrometry (IR spectrum) of an aliquot of an analysis liquid taken when a peak derived from a specific structure was detected during analysis by the analytical method described above. The identified structure can be verified by the observation of a signal derived from a carboxylic acid in the IR spectrum or by LC-MS analysis.

<Specific Viscosity of Polycarbonate Resin>

A solution of 0.7 g of the polycarbonate resin according to the second invention dissolved in 100 mL of methylene chloride has a specific viscosity in the range of 0.308 to 0.455 as measured at 20°C.
The polycarbonate resin according to the second invention with a specific viscosity above the lower limit is preferred in terms of high impact resistance and heat resistance. The polycarbonate resin according to the second invention with a viscosity-average molecular weight above the upper limit is preferred in terms of good initial color tone and fluidity.
From these perspectives, the polycarbonate resin according to the second invention preferably has a specific viscosity of 0.309 or more, more preferably 0.311 or more, still more preferably 0.313 or more, and is preferably 0.452 or less, more preferably 0.450 or less, still more preferably 0.449 or less.

<Initial Color Tone of Polycarbonate Resin>

The polycarbonate resin according to the second invention has good initial color tone. The initial color tone of the polycarbonate resin according to the second invention is typically 20 or less, preferably 15 or less, more preferably 14 or less, particularly preferably 13 or less, most preferably 10 or less, in terms of the yellow index value (YI value) of a pellet of the polycarbonate resin.
The initial color tone of the polycarbonate resin can be lowered by adjusting the amounts of the dihydroxy compounds (13) and (14) in the hydrolysate of the polycarbonate resin to appropriate values.
The initial color tone of the polycarbonate resin can be evaluated by measuring the yellow index value (YI value) of the reflected light of its pellet in accordance with ASTM D1925. More specifically, a spectrophotometer CM-5 manufactured by Konica Minolta, Inc. is used as an apparatus, and the measurement conditions are a measurement diameter of 30 mm and SCE. A calibration glass CM-A212 for petri dish measurement is fitted into a measurement portion and is covered with a zero calibration box CM-A124 to perform zero calibration. A built-in white calibration plate is then used to perform white calibration.
The measurement is performed with a white calibration plate CM-A210 to confirm that L* is 99.40 ± 0.05, a* is 0.03 ± 0.01, b* is -0.43 ± 0.01, and YI is -0.58 ± 0.01. The measurement of a pellet is performed by filling a cylindrical

glass vessel with an inner diameter of 30 mm and a height of 50 mm with pellets to a depth of approximately 40 mm. The operation of taking the pellets out of the glass vessel and performing the measurement again is performed twice, and three measurements in total are averaged. A smaller YI value indicates a resin with less yellowness and better color tone.

<Pencil Hardness of Polycarbonate Resin>

The polycarbonate resin according to the second invention preferably has a high hardness characteristic of HB or higher, more preferably H or higher, as measured by a method according to ISO 15184.
The pencil hardness of the polycarbonate resin is measured with a pencil hardness tester at a load of 750 g on a test specimen of the polycarbonate resin with a thickness of 3 mm, a length of 25 mm, and a width of 25 mm. The test specimen can be formed by injection molding with an injection molding machine.

<Impact Resistance of Polycarbonate Resin>

With respect to the impact resistance of the polycarbonate resin according to the second invention, in an Izod impact test of five test specimens without notch described below in the example section, the number of broken test specimens is preferably one or less, more preferably zero.

<Appearance of Polycarbonate Resin Plate>

The frequency of burning during forming of the polycarbonate resin according to the second invention can be evaluated in the evaluation of the yellow index (YI) value of the injection-molded product by visually observing the appearance of 30 injection-molded plates and counting the number of plates with a black foreign material (burning).
The number of plates with a black foreign material (burning) in 30 plates formed by injection-molding the polycarbonate resin according to the second invention is preferably 15 or less, more preferably 10 or less, still more preferably 5 or less, particularly preferably 3 or less.

<Relative Dielectric Constant ($\varepsilon_r$) and Dielectric Loss Tangent (tan$\delta$) of Polycarbonate Resin>

The relative dielectric constant ($\varepsilon_r$) and the dielectric loss tangent (tan$\delta$) of the polycarbonate resin according to the second invention are preferably, but not limited to, 2.45 or less and $3.00 \times 10^{-3}$ or less, respectively, as measured at a temperature of 23°C and a frequency of 10 GHz. A relative dielectric constant and a dielectric loss tangent in these ranges result in high radio wave transmission in a high-frequency band.
The relative dielectric constant ($\varepsilon_r$) and the dielectric loss tangent (tan$\delta$) of the polycarbonate resin can be measured with a cavity resonator at a frequency of 10 GHz after a strip of film with a length of 70 mm and a width of 2 mm is cut out from a film with a thickness in the range of 40 to 150 $\mu$m formed by hot-pressing the polycarbonate resin and after humidity control at a room temperature of 23°C and a humidity of 50% for 48 hours.

[Thermoplastic Resin Composition]

The thermoplastic resin composition of the second invention is characterized by containing the polycarbonate resin of the second invention described above.
The thermoplastic resin composition according to the second invention may contain another component as required in addition to the polycarbonate resin according to the second invention without significantly impairing the desired physical properties. Examples of the other component include resins other than the polycarbonate resin according to the second invention and various resin additive agents. The other components may be used alone or combined in any ratio.

<Other Resins>

Examples of resins other than the polycarbonate resin according to the second invention are as follows:

thermoplastic polyester resins, such as poly(ethylene terephthalate) resins (PET resins), poly(trimethylene terephthalate) (PTT resins), and poly(butylene terephthalate) resins (PBT resins);
styrene resins, such as polystyrene resins (PS resins), high-impact polystyrene resins (HIPS), acrylonitrile-styrene copolymers (AS resins), acrylonitrile-butadiene-styrene copolymers (ABS resins), acrylonitrile-styrene-acrylic rubber copolymers (ASA resins), and acrylonitrile-ethylene propylene rubber-styrene copolymers (AES resins);

polyolefin resins, such as polyethylene resins (PE resins), polypropylene resins (PP resins), and cyclic cycloolefin resins (COP resins); and

polyamide resins (PA resins); polyimide resins (PI resins); poly(ether imide) resins (PEI resins); polyurethane resins (PU resins); poly(phenylene ether) resins (PPE resins); poly(phenylene sulfide) resins (PPS resins); polysulfone resins (PSU resins); polymethacrylate resins (PMMA resins); liquid crystal polymers (LCP), and the like.

The other resins may be used alone or combined in any ratio.

<Resin Additive Agents>

A resin additive agent that may be contained in the thermoplastic resin composition according to the second invention is, for example, a heat stabilizer, an antioxidant, a release agent, a light stabilizer (HALS), a flame retardant, an antistatic agent, an anti-fogging agent, a lubricant, an anti-blocking agent, a flow modifier, a plasticizer, a dispersant, an antimicrobial agent, a dye, a pigment, or the like. The resin additive agents may be used alone or combined in any ratio.

<Polycarbonate Resin Content>

The thermoplastic resin composition according to the second invention may contain a resin other than the polycarbonate resin according to the second invention and/or a resin additive agent or may contain any combination of two or more resins other than the polycarbonate resin according to the second invention and/or two or more resin additive agents in any ratio.

When the thermoplastic resin composition according to the second invention contains a resin other than the polycarbonate resin according to the second invention and/or a resin additive agent, to more effectively ensure the advantages of the second invention by the polycarbonate resin according to the second invention, the amount of the polycarbonate resin according to the second invention in all the resin components contained in the thermoplastic resin composition according to the second invention is preferably 30% by mass or more, more preferably 40% by mass or more, still more preferably 50% by mass or more, particularly preferably 60% by mass or more, most preferably 70% by mass or more.

<Initial Color Tone of Thermoplastic Resin Composition>

The thermoplastic resin composition according to the second invention has good initial color tone. The initial color tone of the thermoplastic resin composition according to the second invention is preferably 30 or less, more preferably 25 or less, particularly preferably 20 or less, in terms of the yellow index value (YI value) of pellets of the thermoplastic resin composition.

[Communication Device Member]

The thermoplastic resin composition according to the second invention has high radio wave transmission in the microwave and/or millimeter-wave band, good color tone, less burning, and high heat resistance and is therefore useful as a microwave and/or millimeter-wave communication device member for which these characteristics are strictly required.

The shape, pattern, color, dimensions, and the like of a microwave and/or millimeter-wave communication device member are not particularly limited and can be appropriately determined according to the application of the microwave and/or millimeter-wave communication device member.

The application is, for example, a housing for a communication device with a built-in microwave and/or millimeter-wave antenna, such as a notebook computer, a tablet device, a smartphone, or a router; a module for automotive millimeter-wave radar for use in an automatic brake controller, an inter-vehicle distance controller, a pedestrian accident reduction steering system, a false transmission suppression controller, an acceleration controller in abnormal operation of an accelerator pedal, a warning system for approaching vehicles, a lane keeping assist system, a rear-end collision warning system, a parking assistance system, a warning system for obstacles around vehicle, or the like, or a railway or aviation millimeter-wave radar module for use in a platform monitoring system/a system for detecting obstacles on a railroad crossing, a content transmission system on a train, a streetcar/railway collision prevention system, a system for detecting a foreign substance in a runway, or the like; a millimeter-wave radar module for transportation infrastructure, such as an intersection monitoring system or an elevator monitoring system; a millimeter-wave radar module for various security systems; a millimeter-wave radar module for medical or nursing care, such as children or elderly watching system; a millimeter-wave radar module for various information content transmission; an antenna substrate material, such as a base station substrate, a router substrate, a server substrate, or a CPU substrate; or an antenna member,

such as a monopole antenna, a dipole antenna, a patch antenna, a whip antenna, a loop antenna, or a slot antenna.

In the second invention, the term "microwave" refers to a radio wave with a frequency in the range of 3.0 to 30 GHz, and the term "millimeter-wave" refers to a radio wave with a frequency in the range of 30 to 300 GHz. Thus, the microwave and/or millimeter-wave refers to a radio wave with a frequency in the range of 3.0 to 300 GHz. Thus, a communication device with a built-in microwave and/or millimeter-wave antenna refers to a communication device with a built-in antenna for transmitting and receiving a radio wave with a frequency in the range of 3.0 to 300 GHz. Specific examples of the communication device include notebook computers, tablet devices, smartphones, and routers that transmit and receive a radio wave with a frequency in the range of 3.0 to 300 GHz.

The frequency of transmission and reception by the microwave and/or millimeter-wave antenna of the microwave and/or millimeter-wave communication device member according to the second invention may range from 3.0 to 300 GHz, preferably 3.2 to 250 GHz, more preferably 3.4 to 200 GHz.

In particular, the microwave and/or millimeter-wave communication device member according to the second invention can be suitably used for a radio wave in a frequency band in the range of 3.5 to 30 GHz used in a fifth-generation mobile communication system (5G).

Radio waves in a microwave and/or millimeter-wave band tend to have poor radio wave transmission. From such a perspective, a housing for a communication device with a built-in antenna for transmitting and receiving a radio wave in a microwave and/or millimeter-wave band is required to have high radio wave transmission.

Communication devices for transmitting and receiving radio waves in a microwave and/or millimeter-wave band tend to generate heat. Thus, a housing for a communication device with a built-in antenna for transmitting and receiving a radio wave in a microwave and/or millimeter-wave band is required to have high heat resistance.

The polycarbonate resin according to the second invention contained in the thermoplastic resin composition according to the second invention used in the microwave and/or millimeter-wave communication device member of the second invention characteristically has good dielectric properties, high heat resistance, good color tone, and less burning. Reflecting these characteristics, the thermoplastic resin composition according to the second invention containing the polycarbonate resin according to the second invention has good radio wave transmission in the microwave and/or millimeter-wave band, high heat resistance, and good appearance, and is therefore suitable for use in a communication device member that transmits and receives a radio wave in the microwave and/or millimeter-wave band for which these characteristics are strictly required.

Specific examples of the microwave and/or millimeter-wave communication device member include a housing for a communication device with a built-in microwave and/or millimeter-wave antenna, such as a notebook computer, a tablet device, a smartphone, or a router, and an antenna substrate material, such as a base station substrate, a router substrate, a server substrate, or a CPU substrate, and the thermoplastic resin composition according to the second invention is particularly suitable for these applications.

<Method for Producing Communication Device Member>

The thermoplastic resin composition according to the second invention may be processed into the communication device member according to the second invention by any method, for example, an injection molding method, an injection compression molding method, an extrusion method, a profile extrusion method, a transfer forming method, a hollow molding method, a gas-assisted blow molding method, a blow molding method, extrusion blow molding, an in-mold coating (IMC) forming method, a rotational molding method, a multilayer forming method, a coinjection molding method, an insert molding method, a sandwich forming method, a foam molding method, a compression molding method, a sheet forming method, a thermoforming method, a laminate molding method, or a press forming method. Among these, an injection molding method or an extrusion method is suitably used.

The forming temperature for forming the thermoplastic resin composition according to the second invention is preferably, but not limited to, 200°C or more, more preferably 250°C or more, most preferably 280°C or more. A forming temperature equal to or higher than the lower limit results in improved fluidity and formability. The forming temperature for forming the thermoplastic resin composition according to the second invention is preferably 350°C or less, particularly preferably 320°C or less. A forming temperature equal to or lower than the upper limit can result in a communication device member with good appearance.

When forming is performed, a pigment, a dye release agent, a heat stabilizer, and/or the like may be appropriately added to the thermoplastic resin composition according to the second invention within a range that does not impair the objects of the second invention.

EXAMPLES

The present invention is more specifically described in the following examples. The present invention is not limited to these examples.

[Examples and Comparative Examples of the First Invention]

The physical properties of polycarbonate resins produced in the following examples and comparative examples were evaluated by the following methods.

[1] Viscosity-Average Molecular Weight (Mv)

The intrinsic viscosity (limiting viscosity) [η] (unit: dL/g) of a polycarbonate resin dissolved in methylene chloride (concentration: 6.0 g/L) was measured with an Ubbelohde viscometer (manufactured by Moritomo Rika Kogyo) at 20°C, and the viscosity-average molecular weight (Mv) was calculated using the Schnell viscosity equation (the following equation).

$$\eta = 1.23 \times 10^{-4} Mv^{0.83}$$

[2] Glass Transition Temperature (Tg)

The amount of heat of approximately 10 mg of a polycarbonate resin sample was measured with a differential scanning calorimeter (DSC 6220 manufactured by SII) while heating the sample at a heating rate of 20°C/min, and an extrapolated glass transition starting temperature was determined in accordance with ISO 3146. The extrapolated glass transition starting temperature is the temperature at a point of intersection between an extended line of the baseline from the low temperature side to the high temperature side and a tangent line drawn at a point of the maximum gradient of a curve of a stepwise change portion of glass transition. The extrapolated glass transition temperature was defined as the glass transition temperature (Tg).

[3] Surface Hardness (Pencil Hardness)

A polycarbonate resin plate with a thickness of 3 mm, a length of 25 mm, and a width of 25 mm was formed to prepare a test specimen with a small injection molding machine (Shinko Sellbic Co., Ltd. C, Mobile) at a cylinder temperature and a mold temperature shown in Tables 1 and 2. The pencil hardness of the test specimen was measured in accordance with ISO 15184 with a pencil hardness tester (manufactured by Toyo Seiki Seisaku-Sho, Ltd.) at a load of 750 g.

[4] Initial Color Tone of Pellet

The initial color tone of the polycarbonate resin was evaluated by measuring the yellow index value (YI value) of the reflected light of its pellet in accordance with ASTM D1925. More specifically, a spectrophotometer CM-5 manufactured by Konica Minolta, Inc. was used as an apparatus, and the measurement conditions were a measurement diameter of 30 mm and SCE. A calibration glass CM-A212 for petri dish measurement was fitted into a measurement portion and was covered with a zero calibration box CM-A124 to perform zero calibration. A built-in white calibration plate was then used to perform white calibration.

The measurement is performed with a white calibration plate CM-A210 to confirm that L* is 99.40 ± 0.05, a* is 0.03 ± 0.01, b* is -0.43 ± 0.01, and YI is -0.58 ± 0.01. The measurement of a pellet was performed by filling a cylindrical glass vessel with an inner diameter of 30 mm and a height of 50 mm with pellets to a depth of approximately 40 mm. The operation of taking the pellets out of the glass vessel and performing the measurement again was performed twice, and three measurements in total were averaged.

[5] Light Resistance

The light resistance of the polycarbonate resin was evaluated by irradiating a test specimen of the polycarbonate resin with a thickness of 3 mm, a length of 60 mm, and a width of 60 mm at 60 W/$m^2$ for 500 hours using a small light-exposure test apparatus EYE SUN-CUBE Xenon manufactured by Iwasaki Electric Co., Ltd. and determining the difference (ΔYI) between YI before the irradiation and YI after the irradiation.

The test specimen with a thickness of 3 mm, a length of 60 mm, and a width of 60 mm was formed with an ordinary injection molding machine. More specifically, pellets of the polycarbonate resin dried under vacuum at 90°C for 5 hours or more were supplied to an injection molding machine and were molded into a plate-like injection molded piece at a final cylinder temperature of 300°C and a forming cycle of approximately 30 seconds.

The YI value of the test specimen was measured with the spectrophotometer CM-5 manufactured by Konica

Minolta, Inc. in accordance with ASTM D1925 using transmitted light in the thickness direction of the injection molded piece.

[6] Content Ratio of Dihydroxy Compound (3) and Dihydroxy Compound (4) to Dihydroxy Compound (2) in Hydrolyzate

After 0.5 g of the sample was dissolved in 5 mL of methylene chloride, 45 mL of methanol and 5 mL of 25% by mass aqueous sodium hydroxide are added to the solution, and the solution is stirred at 70°C for 30 minutes to hydrolyze the polycarbonate resin (methylene chloride solution). Subsequently, 6 N hydrochloric acid was added to the methylene chloride solution to adjust the pH of the solution to approximately 2, and the solution is adjusted to 100 mL with pure water.

Next, 20 μL of the adjusted methylene chloride solution was subjected to liquid chromatography to measure the amounts of the dihydroxy compounds (2), (3) and (4) as each dihydroxy compound content. Based on this, the ratio of the content of dihydroxy compound (3) and dihydroxy compound (4) to the content of dihydroxy compound (2) was calculated in mass %.

The liquid chromatography and the measurement conditions are as follows:

Liquid chromatography: LC-10AD manufactured by Shimadzu Corporation
Column: YMC PACK ODS-AM M-307-3 4.6 mm ID × 75 mm L
Detector: UV 280 nm
Eluent: (A) 0.05% aqueous trifluoroacetic acid (B) methanol
Gradient conditions: 0 minutes (B = 40%), 25 minutes (B=95%)
Flow rate: 1.0 mL/min
Column temperature: 40°C

The amounts of the dihydroxy compounds (3) and (4) were calculated from their respective peak areas on the basis of a calibration curve prepared using 4,4'-(3,3,5-trimethylcyclohexylidene)bisphenol (BP-TMC), which is the dihydroxy compound (2).

Under these conditions, the peak of BP-TMC which is the dihydroxy compound (2), was detected at approximately 17.7 minutes, the peak of the dihydroxy compound (3) was detected at approximately 20.9 minutes, and the peak of the dihydroxy compound (4) was detected at approximately 21.2 minutes.

[7] Plate Color Tone

Pellets of a polycarbonate resin were dried under vacuum at 90°C for 5 hours or more. The dried polycarbonate resin pellets were supplied to an injection molding machine (J75EII manufactured by The Japan Steel Works, Ltd.) and were repeatedly molded into a plate-like injection molded piece (60 mm in width × 60 mm in length × 3 mm in thickness) at a final cylinder temperature of 300°C and a forming cycle of approximately 30 seconds. The yellow index (YI) values of injection molded pieces formed at 10th to 40th shots under transmitted light in the thickness direction were measured in accordance with ASTM D1925 with the spectrophotometer CM-5 manufactured by Konica Minolta, Inc. The plates formed by the injection molding were placed in a measurement chamber, and the YI values under the transmitted light were measured. A smaller YI value indicates higher quality with less yellowness. The color tones of the plates were unstable immediately after molding and were therefore measured one or more days after the molding. Plates used for comparison were stored under the same conditions, and simultaneously measured values were used.

[8] Number of Plates with Poor Appearance

The appearance of 30 plates injection-molded in [7] was visually observed to count the number of plates with a black foreign material (burning).

[9] Dielectric Properties: Relative Dielectric Constant ($\varepsilon_r$) and Dielectric Loss Tangent (tanδ)

A polycarbonate resin dried under vacuum at 80°C for 5 hours was formed with a hot pressing machine into a film with a thickness in the range of 40 to 150 um. The forming conditions for the hot pressing machine were appropriately adjusted in the temperature range of 150°C to 250°C and in the pressure range of 10 to 15 MPa. A strip of film with a length of 70 mm and a width of 2 mm was cut out from the film and was subjected to humidity control at a room temperature of 23°C and at a humidity of 50% for 48 hours. The relative dielectric constant ($\varepsilon_r$) and the dielectric loss tangent (tanδ $\times 10^{-3}$) were measured at a frequency of 10 GHz with a cavity resonator (CP-531 manufactured by KANTO Electronic Application and Development Inc.) and a series network analyzer (E8361A PNA manufactured by Keysight Technologies).

[Example I-1]

A raw material mixture was prepared by charging a 150-ml glass reactor equipped with a reactor stirrer, a reactor heater, and a reactor pressure regulator with 89.59 g (approximately 0.350 mol) of 2,2-bis(4-hydroxy-3-methylphenyl)propane (BPC) (manufactured by Honshu Chemical Industry Co., Ltd.), 27.12 g (0.087 mol) of 4,4'-(3,3,5-trimethylcyclohexylidene)bisphenol (BP-TMC) (manufactured by Honshu Chemical Industry Co., Ltd.), 96.39 g (approximately 0.450 mol) of diphenylcarbonate (DPC), and a 0.4% by mass aqueous solution of cesium carbonate as a catalyst such that the amount of cesium carbonate was 1.5 μmol per mole of all the dihydroxy compounds.

10 g of BP-TMC manufactured by Honshu Chemical Industry Co., Ltd. and 10 g of DPC were weighed in a test tube in advance and were melted with an aluminum block heater heated to 200°C. The Hazen color number at 30 minutes after the start of melting was measured to be APHA 5.

The glass reactor was then evacuated to a pressure of approximately 50 Pa (0.38 Torr) and was then filled with nitrogen to atmospheric pressure. This operation was performed three times to purge the reactor with nitrogen. After the nitrogen purge, the external temperature of the reactor was increased to 220°C to gradually increase the internal temperature of the reactor and dissolve the mixture. The stirrer was then rotated at 100 rpm. The absolute pressure in the reactor was then reduced from 101.3 kPa (760 Torr) to 13.3 kPa (100 Torr) over 40 minutes while distilling off a by-product phenol of an oligomerization reaction between the dihydroxy compounds and DPC in the reactor.

A transesterification reaction was then performed for 80 minutes while maintaining the pressure in the reactor at 13.3 kPa and further distilling off the phenol. The external temperature of the reactor was then increased to 250°C, and the absolute pressure in the reactor was reduced from 13.3 kPa (100 Torr) to 399 Pa (3 Torr) over 40 minutes to remove the distilled phenol from the system. Furthermore, the external temperature of the reactor was increased to 285°C, and the absolute pressure in the reactor was reduced to 30 Pa (approximately 0.2 Torr) to perform a polycondensation reaction. The polycondensation reaction was completed when the reactor stirrer had a predetermined stirring power.

The reactor was then filled with nitrogen to an absolute pressure of 101.3 kPa and was pressured to a gauge pressure of 0.2 MPa. A strand of the polycarbonate resin was drawn out from the bottom of the reactor and was pelletized with a rotary cutter.

The polycarbonate resin thus produced was subjected to the evaluation as described above. Table 1 shows the results.

[Example I-2]

The method described in Example I- 1 was performed except that the predetermined stirring power was set higher than that in Example I-1.

The polycarbonate resin thus produced was subjected to the evaluation as described above. Table 1 shows the results.

[Example I-3]

The method described in Examples I-1 and I-2 was performed except that the predetermined stirring power was set higher than that in Example I-1.

The polycarbonate resin thus produced was subjected to the evaluation as described above. Table 1 shows the results.

[Example I-4]

The method described in Example I- 1 was performed except that a raw material mixture was prepared by charging 64.57 g (approximately 0.252 mol) of BPC (manufactured by Honshu Chemical Industry Co., Ltd.), 52.14 g (approximately 0.168 mol) of BP-TMC (manufactured by Honshu Chemical Industry Co., Ltd.), 92.64 g (approximately 0.432 mol) of DPC, and a 0.4% by mass aqueous solution of cesium carbonate as a catalyst such that the amount of cesium carbonate was 1.5 μmol per mole of all the dihydroxy compounds.

The polycarbonate resin thus produced was subjected to the evaluation as described above. Table 1 shows the results.

[Example I-5]

The method described in Example I- 1 was performed except that a raw material mixture was prepared by charging 64.57 g (approximately 0.252 mol) of BPC (manufactured by Honshu Chemical Industry Co., Ltd.), 39.10 g

(approximately 0.126 mol) of BP-TMC (manufactured by Honshu Chemical Industry Co., Ltd.), 13.03 g (approximately 0.042 mol) of BP-TMC (manufactured by Songwon Industry Co., Ltd.), 92.64 g (approximately 0.432 mol) of DPC, and a 0.4% by mass aqueous solution of cesium carbonate as a catalyst such that the amount of cesium carbonate was 1.5 μmol per mole of all the dihydroxy compounds.

The polycarbonate resin thus produced was subjected to the evaluation as described above. Table 1 shows the results.

[Example I-6]

The method described in Example I- 1 was performed except that a raw material mixture was prepared by charging 89.59 g (approximately 0.350 mol) of BPC (manufactured by Honshu Chemical Industry Co., Ltd.), 27.12 g (approximately 0.087 mol) of BP-TMC (manufactured by Songwon Industry Co., Ltd.), 96.39 g (approximately 0.450 mol) of DPC, and a 0.4% by mass aqueous solution of cesium carbonate as a catalyst such that the amount of cesium carbonate was 1.5 μmol per mole of all the dihydroxy compounds.

The polycarbonate resin thus produced was subjected to the evaluation as described above. Table 1 shows the results.

[Example I-7]

The method described in Example I- 1 was performed except that a raw material mixture was prepared by charging 64.57 g (approximately 0.252 mol) of BPC (manufactured by Honshu Chemical Industry Co., Ltd.), 52.14 g (approximately 0.168 mol) of BP-TMC (manufactured by Songwon Industry Co., Ltd.), 92.64 g (approximately 0.432 mol) of DPC, and a 0.4% by mass aqueous solution of cesium carbonate as a catalyst such that the amount of cesium carbonate was 3.0 μmol per mole of all the dihydroxy compounds.

The polycarbonate resin thus produced was subjected to the evaluation as described above. Table 1 shows the results.

[Comparative Example I-1]

The method described in Example I- 1 was performed except that a raw material mixture was prepared by charging 100.00 g (approximately 0.390 mol) of BPC (manufactured by Honshu Chemical Industry Co., Ltd.), 86.08 g (approximately 0.40 mol) of DPC, and a 0.4% by mass aqueous solution of cesium carbonate as a catalyst such that the amount of cesium carbonate was 1.5 μmol per mole of all the dihydroxy compounds.

The polycarbonate resin thus produced was subjected to the evaluation as described above. Table 1 shows the results.

[Table 1]

| | | Unit | Example I-1 | Example I-2 | Example I-3 | Example I-4 | Example I-5 | Example I-6 | Example I-7 | Comparative example I-1 |
|---|---|---|---|---|---|---|---|---|---|---|
| Raw material dihydroxy compound for structural unit (A) | BP-TMC (manufactured by Honshu Chemical Industry Co., Ltd.) | mol% | 20 | 20 | 20 | 40 | 30 | | | |
| | BP-TMC (manufactured by Songwon) | mol% | | | | | 10 | 20 | 40 | |
| Raw material dihydroxy compound for structural unit (B) | BPC | mol% | 80 | 80 | 80 | 60 | 60 | 80 | 60 | 100 |
| Amount of catalyst *1 | | μmol/mol | 1.5 | 1.5 | 1.5 | 1.5 | 1.5 | 1.5 | 3 | 1.5 |
| {(3)+(4)}/(2) in hydrolysate *2 | | mass% | 1.24 | 1.15 | 1.37 | 1.13 | 1.09 | 0.88 | 0.97 | 0 |
| Viscosity-average molecular weight | Mv | | 15,700 | 17,500 | 23,200 | 20,100 | 18,700 | 16,000 | 20,100 | 24,000 |
| Glass transition temperature | Tg | °C | 137 | 139 | 141 | 161 | 159 | 136 | 157 | 120 |
| Surface hardness | Pencil hardness test results | | 2H | 2H | 2H | H | 2H | 2H | H | 2H |
| Initial color tone | Pellet YI | | 6.2 | 8.9 | 7.7 | 9.2 | 10.2 | 14.1 | 19.4 | 7.2 |
| Light resistance | ΔYI | 3mmt ·500h | 8.9 | 9.2 | 9.3 | 8.7 | 9.7 | 13.2 | 12.4 | 9.9 |

*1: Amount of catalyst (μmol) per mole of all dihydroxy compounds
*2: Total amount of dihydroxy compound (3) and dihydroxy compound (4) with respect to dihydroxy compound(2) in hydrolysate

Table 1 shows that the polycarbonate resin according to the first invention in which the ratio of the total of the dihydroxy compound (3) content and the dihydroxy compound (4) content to the dihydroxy compound (2) content is 0.85% by mass or more has a high glass transition temperature, high heat resistance, high surface hardness, good initial color tone, and high light resistance.

In contrast, the polycarbonate resin of Comparative Example I-1 in which the ratio of the total of the dihydroxy compound (3) content and the dihydroxy compound (4) content to the dihydroxy compound (2) content is less than 0.85% by mass is inferior in heat resistance.

[Evaluation of Plate Color Tone, Plate Appearance, and Dielectric Properties]

The plate color tone, the plate appearance, and the dielectric properties of the polycarbonate resins of Example I-3 and Comparative Example I-1 were evaluated by the methods described above. Table 2 shows the results together with the measurement results of the respective glass transition temperatures.

[Table 2]

| | | Unit | Example I-3 | Comparative example I-1 |
|---|---|---|---|---|
| Glass transition temperature | Tg | °C | 141 | 120 |
| Plate color tone | Plate YI | (3 mmt) | 3 | 3 |
| Plate appearance | Number of plates with poor appearance | (among 30 plates) | 0 | 1 |
| Dielectric properties | Relative dielectric constant ($\varepsilon_r$) | - | 2.433 | 2.466 |
| | Dielectric loss tangent (tan$\delta$) | $\times 10^{-3}$ | 1.45 | 1.55 |

Table 2 shows that the polycarbonate resin according to the first invention has higher heat resistance and better dielectric properties due to a higher glass transition temperature than the polycarbonate resin of Comparative Example I-1. Furthermore, it can be seen that the polycarbonate resin according to the first invention has much better plate color tone and plate appearance than Comparative Example I-1.

Thus, it can be seen that the polycarbonate resin of Example I-3, which is the polycarbonate resin according to the first invention, has better dielectric properties, higher heat resistance, better color tone, and less abnormal appearance during forming than the polycarbonate resin of Comparative Example I-1 and is suitable for use as a microwave and/or millimeter-wave communication device member.

[Examples and Comparative Examples of the Second Invention]

The physical properties of polycarbonate resins produced in the following examples and comparative examples were evaluated by the following methods.

[1] Viscosity-Average Molecular Weight (Mv)

The intrinsic viscosity (limiting viscosity) [$\eta$] (unit: dL/g) of a polycarbonate resin dissolved in methylene chloride (concentration: 7.0 g/L) was measured with an Ubbelohde viscometer (manufactured by Moritomo Rika Kogyo) at 20°C, and the viscosity-average molecular weight (Mv) was calculated using the Schnell viscosity equation (the following equation).

$$\eta = 1.23 \times 10^{-4} Mv^{0.83}$$

[2] Specific Viscosity

The specific viscosity of a solution prepared by dissolving 0.7 g of polycarbonate resin in 100 mL of methylene chloride was measured at 20°C with an Ubbelohde viscosity tube (manufactured by Moritomo Rika Kogyo).

[3] Glass Transition Temperature (Tg)

The amount of heat of approximately 10 mg of a polycarbonate resin sample was measured with a differential scanning calorimeter (DSC 6220 manufactured by SII) while heating the sample at a heating rate of 20°C/min, and an extrapolated glass transition starting temperature was determined in accordance with ISO 3146. The extrapolated glass transition starting temperature is the temperature at a point of intersection between an extended line of the baseline from the low temperature side to the high temperature side and a tangent line drawn at a point of the maximum gradient of a curve of a stepwise change portion of glass transition. The extrapolated glass transition temperature was defined as the glass transition temperature (Tg).

[4] Surface Hardness (Pencil Hardness)

A polycarbonate resin plate with a thickness of 3 mm, a length of 25 mm, and a width of 25 mm was formed to prepare a test specimen with a small injection molding machine (Shinko Sellbic Co., Ltd. C, Mobile) at a cylinder temperature and a mold temperature shown in Tables 1 and 2. The pencil hardness of the test specimen was measured in accordance with ISO 15184 with a pencil hardness tester (manufactured by Toyo Seiki Seisaku-Sho, Ltd.) at a load of 750 g.

[5] Initial Color Tone of Pellet

The initial color tone of the polycarbonate resin was evaluated by measuring the yellow index value (YI value) of the reflected light of its pellet in accordance with ASTM D1925. More specifically, a spectrophotometer CM-5 manufactured by Konica Minolta, Inc. was used as an apparatus, and the measurement conditions were a measurement diameter of 30 mm and SCE. A calibration glass CM-A212 for petri dish measurement was fitted into a measurement portion and was covered with a zero calibration box CM-A124 to perform zero calibration. A built-in white calibration plate was then used to perform white calibration.
The measurement is performed with a white calibration plate CM-A210 to confirm that L* is 99.40 ± 0.05, a* is 0.03 ± 0.01, b* is -0.43 ± 0.01, and YI is -0.58 ± 0.01. The measurement of a pellet was performed by filling a cylindrical glass vessel with an inner diameter of 30 mm and a height of 50 mm with pellets to a depth of approximately 40 mm. The operation of taking the pellets out of the glass vessel and performing the measurement again was performed twice, and three measurements in total were averaged.

[6] Impact Resistance

A polycarbonate resin plate with a thickness of 3.2 mm, a length of 53.5 mm, and a width of 12.7 mm was formed as a test specimen using a small injection molding machine (Shinko Sellbic Co., Ltd. C, Mobile). Five test specimens were subjected to an Izod impact test without notch using a 60-kg hammer in accordance with JIS K-7110, and the number of broken test specimens in the five test specimens was counted.

[7] (14)/(13) Ratio in Hydrolyzate

After 0.5 g of the sample was dissolved in 5 mL of methylene chloride, 45 mL of methanol and 5 mL of 25% by mass aqueous sodium hydroxide are added to the solution, and the solution is stirred at 70°C for 30 minutes to hydrolyze the polycarbonate resin (methylene chloride solution). Subsequently, 6 N hydrochloric acid was added to the methylene chloride solution to adjust the pH of the solution to approximately 2, and the solution is adjusted to 100 mL with pure water.
Next, 20 μL of the adjusted methylene chloride solution was subjected to liquid chromatography to measure the amounts of the dihydroxy compounds (13) to (15) as each dihydroxy compound content. Based on this, the ratio of the content of dihydroxy compound (14) to the content of dihydroxy compound (13) was calculated in mass ppm.
The liquid chromatography and the measurement conditions are as follows:

Liquid chromatography: LC-10AD manufactured by Shimadzu Corporation
Column: YMC PACK ODS-AM M-307-3 4.6 mm ID × 75 mm L
Detector: UV 280 nm
Eluent: (A) 0.05% aqueous trifluoroacetic acid (B) methanol
Gradient conditions: 0 minutes (B = 40%), 25 minutes (B=95%)
Flow rate: 1.0 mL/min
Column temperature: 40°C

The amounts of the dihydroxy compound (14) was calculated from its respective peak area on the basis of a calibration curve prepared using 2,2-bis(4-hydroxy-3-methylphenyl)propane (BPC), which is the dihydroxy compound (13) .

Under these conditions, the peak of BPC, which is the dihydroxy compound (13) was detected at approximately 12.2 minutes, the peak of the dihydroxy compound (14) was detected at approximately 15.0 minutes, and the peak of 4,4'-(3,3,5-trimethylcyclohexykidene)disphenol, which is the dihydroxy compound (15A) was detected at approximately 17.6 minutes.

[8] Plate Color Tone

Pellets of a polycarbonate resin were dried under vacuum at 90°C for 5 hours or more. The dried polycarbonate resin pellets were supplied to an injection molding machine (J75EII manufactured by The Japan Steel Works, Ltd.) and were repeatedly molded into a plate-like injection molded piece (60 mm in width × 60 mm in length × 3 mm in thickness) at a final cylinder temperature of 300°C and a forming cycle of approximately 30 seconds. The yellow index (YI) values of injection molded pieces formed at 10th to 40th shots under transmitted light in the thickness direction were measured in accordance with ASTM D1925 with the spectrophotometer CM-5 manufactured by Konica Minolta, Inc. The plates formed by the injection molding were placed in a measurement chamber, and the YI values under the transmitted light were measured. A smaller YI value indicates higher quality with less yellowness. The color tones of the plates were unstable immediately after molding and were therefore measured one or more days after the molding. Plates used for comparison were stored under the same conditions, and simultaneously measured values were used.

[9] Number of Plates with Poor Appearance

The appearance of 30 plates injection-molded in [8] was visually observed to count the number of plates with a black foreign material (burning).

[10] Dielectric Properties: Relative Dielectric Constant (εr) and Dielectric Loss Tangent (tanδ)

A polycarbonate resin dried under vacuum at 80°C for 5 hours was formed with a hot pressing machine into a film with a thickness in the range of 40 to 150 um. The forming conditions for the hot pressing machine were appropriately adjusted in the temperature range of 150°C to 250°C and in the pressure range of 10 to 15 MPa. A strip of film with a length of 70 mm and a width of 2 mm was cut out from the film and was subjected to humidity control at a room temperature of 23°C and at a humidity of 50% for 48 hours. The relative dielectric constant (εr) and the dielectric loss tangent (tanδ $\times 10^{-3}$) were measured at a frequency of 10 GHz with a cavity resonator (CP-531 manufactured by KANTO Electronic Application and Development Inc.) and a series network analyzer (E8361A PNA manufactured by Keysight Technologies).

[Production Examples 1 to 15: Production examples of polycarbonate resin]

Production examples of polycarbonate resins PC(A1) to PC(A10), PC(B1), PC(B2), and PC(C1) to PC(C3) are shown below.

[Production Example 1]

A raw material mixture was prepared by charging a 150-ml glass reactor equipped with a reactor stirrer, a reactor heater, and a reactor pressure regulator with 89.59 g (approximately 0.350 mol) of 2,2-bis(4-hydroxy-3-methylphenyl)propane (BPC) (manufactured by Honshu Chemical Industry Co., Ltd.), 27.12 g (0.087 mol) of 4,4'-(3,3,5-trimethylcyclohexylidene)bisphenol (BP-TMC) (manufactured by Honshu Chemical Industry Co., Ltd.), 96.39 g (approximately 0.450 mol) of diphenylcarbonate (DPC), and a 0.4% by mass aqueous solution of cesium carbonate as a catalyst such that the amount of cesium carbonate was 1.5 μmol per mole of all the dihydroxy compounds.

The glass reactor was then evacuated to a pressure of approximately 50 Pa (0.38 Torr) and was then filled with nitrogen to atmospheric pressure. This operation was performed three times to purge the reactor with nitrogen. After the nitrogen purge, the external temperature of the reactor was increased to 220°C to gradually increase the internal temperature of the reactor and dissolve the mixture. The stirrer was then rotated at 100 rpm. The absolute pressure in the reactor was then reduced from 101.3 kPa (760 Torr) to 13.3 kPa (100 Torr) over 40 minutes while distilling off a by-product phenol of an oligomerization reaction between the dihydroxy compounds and DPC in the reactor.

A transesterification reaction was then performed for 80 minutes while maintaining the pressure in the reactor at 13.3 kPa and further distilling off the phenol. The external temperature of the reactor was then increased to 250°C, and the absolute pressure in the reactor was reduced from 13.3 kPa (100 Torr) to 399 Pa (3 Torr) over 40 minutes to

remove the distilled phenol from the system. Furthermore, the external temperature of the reactor was increased to 285°C, and the absolute pressure in the reactor was reduced to 30 Pa (approximately 0.2 Torr) to perform a polycondensation reaction. The polycondensation reaction was completed when the reactor stirrer had a predetermined stirring power.

The reactor was then filled with nitrogen to an absolute pressure of 101.3 kPa and was pressured to a gauge pressure of 0.2 MPa. A strand of the polycarbonate resin was drawn out from the bottom of the reactor and was pelletized with a rotary cutter.

The polycarbonate resin PC(A1) thus produced was subjected to the evaluation as described above. Table 3A shows the results.

[Production Example 2]

The method described in Production Example 1 was performed except that a raw material mixture was prepared by charging 89.59 part (approximately 0.350 mol) of BPC (manufactured by Honshu Chemical Industry Co., Ltd.), 27.12 part (approximately 0.087 mol) of BP-TMC (manufactured by Honshu Chemical Industry Co., Ltd.), 98.73 part (approximately 0.461 mol) of DPC, and a 0.4% by mass aqueous solution of cesium carbonate as a catalyst such that the amount of cesium carbonate was 1.5 μmol per mole of all the dihydroxy compounds.

The polycarbonate resin PC(A2) thus produced was subjected to the evaluation as described above. Table 3A shows the results.

[Production Example 3]

The method described in Production Example 1 was performed except that the predetermined stirring power was set higher than that in Production Example 1.

The polycarbonate resin PC(A3) thus produced was subjected to the evaluation as described above. Table 3A shows the results.

[Production Example 4]

The method described in Production Example 1 was performed except that the predetermined stirring power was set higher than that in Production Examples 1 and 3.

The polycarbonate resin PC(A4) thus produced was subjected to the evaluation as described above. Table 3A shows the results.

[Production Example 5]

The method described in Production Example 1 was performed except that a raw material mixture was prepared by charging 89.59 part (approximately 0.350 mol) of BPC (manufactured by Honshu Chemical Industry Co., Ltd.), 27.12 part (approximately 0.087 mol) of BP-TMC (manufactured by Honshu Chemical Industry Co., Ltd.), 95.92 part (approximately 0.448 mol) of DPC, and a 0.4% by mass aqueous solution of cesium carbonate as a catalyst such that the amount of cesium carbonate was 6.0 μmol per mole of all the dihydroxy compounds.

The polycarbonate resin PC(A5) thus produced was subjected to the evaluation as described above. Table 3A shows the results.

[Production Example 6]

The method described in Production Example 1 was performed except that a raw material mixture was prepared by charging 89.59 part (approximately 0.350 mol) of BPC (manufactured by Honshu Chemical Industry Co., Ltd.), 27.12 part (approximately 0.087 mol) of BP-TMC (manufactured by Honshu Chemical Industry Co., Ltd.), 95.92 part (approximately 0.448 mol) of DPC, and a 0.4% by mass aqueous solution of cesium carbonate as a catalyst such that the amount of cesium carbonate was 10.0 μmol per mole of all the dihydroxy compounds.

The polycarbonate resin PC(A6) thus produced was subjected to the evaluation as described above. Table 3A shows the results.

[Production Example 7]

The method described in Production Example 1 was performed except that a raw material mixture was prepared by charging 64.57 part (approximately 0.252 mol) of BPC (manufactured by Honshu Chemical Industry Co., Ltd.), 52.14

part (approximately 0.168 mol) of BP-TMC (manufactured by Honshu Chemical Industry Co., Ltd.), 94.62 part (approximately 0.442 mol) of DPC, and a 0.4% by mass aqueous solution of cesium carbonate as a catalyst such that the amount of cesium carbonate was 2.0 μmol per mole of all the dihydroxy compounds.

The polycarbonate resin PC(A7) thus produced was subjected to the evaluation as described above. Table 3A shows the results.

[Production Example 8]

The method described in Production Example 1 was performed except that a raw material mixture was prepared by charging 64.57 part (approximately 0.252 mol) of BPC (manufactured by Honshu Chemical Industry Co., Ltd.), 52.14 part (approximately 0.168 mol) of BP-TMC (manufactured by Honshu Chemical Industry Co., Ltd.), 92.64 part (approximately 0.432 mol) of DPC, and a 0.4% by mass aqueous solution of cesium carbonate as a catalyst such that the amount of cesium carbonate was 1.5 μmol per mole of all the dihydroxy compounds.

The polycarbonate resin PC(A8) thus produced was subjected to the evaluation as described above. Table 3A shows the results.

[Production Example 9]

The method described in Production Example 1 was performed except that a raw material mixture was prepared by charging 58.36 part (approximately 0.228 mol) of BPC (manufactured by Honshu Chemical Industry Co., Ltd.), 58.36 part (approximately 0.188 mol) of BP-TMC (manufactured by Honshu Chemical Industry Co., Ltd.), 93.93 part (approximately 0.438 mol) of DPC, and a 0.4% by mass aqueous solution of cesium carbonate as a catalyst such that the amount of cesium carbonate was 1.5 μmol per mole of all the dihydroxy compounds.

The polycarbonate resin PC(A9) thus produced was subjected to the evaluation as described above. Table 3B shows the results.

[Production Example 10]

The method described in Production Example 1 was performed except that a raw material mixture was prepared by charging 52.78 part (approximately 0.206 mol) of BPC (manufactured by Honshu Chemical Industry Co., Ltd.), 63.93 part (approximately 0.206 mol) of BP-TMC (manufactured by Honshu Chemical Industry Co., Ltd.), 91.31 part (approximately 0.426 mol) of DPC, and a 0.4% by mass aqueous solution of cesium carbonate as a catalyst such that the amount of cesium carbonate was 2.0 μmol per mole of all the dihydroxy compounds.

The polycarbonate resin PC(A10) thus produced was subjected to the evaluation as described above. Table 3B shows the results.

[Production Example 11]

The method described in Production Example 1 was performed except that a raw material mixture was prepared by charging 54.72 part (approximately 0.214 mol) of BPC (manufactured by Honshu Chemical Industry Co., Ltd.), 61.99 part (approximately 0.214 mol) of 4,4'-(1-phenylethylidene) diphenol (hereinafter sometimes referred to as "BP-AP") (manufactured by Honshu Chemical Industry Co., Ltd.), 93.75 part (approximately 0.438 mol) of DPC, and a 0.4% by mass aqueous solution of cesium carbonate as a catalyst such that the amount of cesium carbonate was 1.5 μmol per mole of all the dihydroxy compounds.

The polycarbonate resin PC(A11) thus produced was subjected to the evaluation as described above. Table 3B shows the results.

[Production Example 12]

The method described in Production Example 1 was performed except that a raw material mixture was prepared by charging 100.00 part (approximately 0.390 mol) of BPC (manufactured by Honshu Chemical Industry Co., Ltd.), 86.91 part (approximately 0.406 mol) of DPC, and a 0.4% by mass aqueous solution of cesium carbonate as a catalyst such that the amount of cesium carbonate was 1.5 μmol per mole of all the dihydroxy compounds.

The polycarbonate resin PC(B1) thus produced was subjected to the evaluation as described above. Table 3B shows the results.

[Production Example 13]

The method described in Production Example 1 was performed except that a raw material mixture was prepared by charging 100.00 part (approximately 0.390 mol) of BPC (manufactured by Honshu Chemical Industry Co., Ltd.), 86.08 part (approximately 0.402 mol) of DPC, and a 0.4% by mass aqueous solution of cesium carbonate as a catalyst such that the amount of cesium carbonate was 1.5 μmol per mole of all the dihydroxy compounds.
The polycarbonate resin PC(B2) thus produced was subjected to the evaluation as described above. Table 3B shows the results.

[Production Example 14]

The method described in Production Example 1 was performed except that a raw material mixture was prepared by charging 116.71 part (approximately 0.402 mol) of BP-AP (manufactured by Honshu Chemical Industry Co., Ltd.), 89.12 part (approximately 0.416 mol) of DPC, and a 0.4% by mass aqueous solution of cesium carbonate as a catalyst such that the amount of cesium carbonate was 0.5 μmol per mole of all the dihydroxy compounds.
The polycarbonate resin PC(B3) thus produced was subjected to the evaluation as described above. Table 3B shows the results.

[Production Example 15]

The method described in Production Example 1 was performed except that a raw material mixture was prepared by charging 89.59 part (approximately 0.350 mol) of BPC (manufactured by Honshu Chemical Industry Co., Ltd.), 27.12 part (approximately 0.087 mol) of BP-TMC (manufactured by Honshu Chemical Industry Co., Ltd.), 98.26 part (approximately 0.459 mol) of DPC, and a 0.4% by mass aqueous solution of cesium carbonate as a catalyst such that the amount of cesium carbonate was 1.5 umol per mole of all the dihydroxy compounds.
The polycarbonate resin PC(C1) thus produced was subjected to the evaluation as described above. Table 3B shows the results.

[Production Example 16]

The method described in Production Example 1 was performed except that a raw material mixture was prepared by charging 89.59 part (approximately 0.350 mol) of BPC (manufactured by Honshu Chemical Industry Co., Ltd.), 27.12 part (approximately 0.087 mol) of BP-TMC (manufactured by Honshu Chemical Industry Co., Ltd.), 95.74 part (approximately 0.447 mol) of DPC, and a 0.4% by mass aqueous solution of cesium carbonate as a catalyst such that the amount of cesium carbonate was 8.0 umol per mole of all the dihydroxy compounds.
The polycarbonate resin PC(C2) thus produced was subjected to the evaluation as described above. Table 3B shows the results.

[Production Example 17]

The method described in Production Example 1 was performed except that a raw material mixture was prepared by charging 64.57 part (approximately 0.252 mol) of BPC (manufactured by Honshu Chemical Industry Co., Ltd.), 52.14 part (approximately 0.168 mol) of BP-TMC (manufactured by Honshu Chemical Industry Co., Ltd.), 94.89 part (approximately 0.443 mol) of DPC, and a 0.4% by mass aqueous solution of cesium carbonate as a catalyst such that the amount of cesium carbonate was 1.5 umol per mole of all the dihydroxy compounds.
The polycarbonate resin PC(C3) thus produced was subjected to the evaluation as described above. Table 3B shows the results.

[Production Example 18]

The method described in Production Example 1 was performed except that a raw material mixture was prepared by charging 46.69 g (approximately 0.182 mol) of 4,4-methylenebis(2,6-dimethylphenol) (TmBPF) (manufactured by Tokyo Chemical Industry Co., Ltd.), 70.02 g (approximately 0.273 mol) of 2,2-bis(4-hydroxy-3-methylphenyl)propane (BPC) (manufactured by Honshu Chemical Industry Co., Ltd.), 99.97 g (approximately 0.467 mol) of DPC, and a 0.4% by mass aqueous solution of cesium carbonate as a catalyst such that the amount of cesium carbonate was 5 umol per mole of all the dihydroxy compounds. The polycarbonate resin PC(C4) thus produced was subjected to the evaluation as described above.

[Table 3]

<Table 3A>

| | | Unit | Production Example 1 | Production example 2 | Production example 3 | Production example 4 | Production example 5 | Production example 6 | Production example 7 | Production example 8 |
|---|---|---|---|---|---|---|---|---|---|---|
| Raw material dihydroxy compound for structural unit (A) | BPC | mol% | 89 | 80 | 80 | 80 | 80 | 80 | 60 | 60 |
| Raw material dihydroxy compound for structural unit (B) | BP-TMC | mol% | 20 | 20 | 20 | 20 | 20 | 20 | 40 | 40 |
| Amount of catalyst *1 | | μ mol/mol | 1.5 | 1.5 | 1.5 | 1.5 | 6.0 | 10.0 | 2.0 | 1.5 |
| Abbreviation for polycarbonate resins | | | PC(A1) | PC(A2) | PC(A3) | PC(A4) | PC(A5) | PC(A6) | PC(A7) | PC(A8) |
| Viscosity-average molecular weight | Mv | (measured at 7 g/L) | 18100 | 21410 | 22960 | 23680 | 24980 | 26040 | 18300 | 20320 |

*1: Amount of catalyst (μ mol) per mole of all dihydroxy compounds

<Table 3B>

| | | Unit | Production example 9 | Production Example 10 | Production Example 11 | Production Example 12 | Production Example 13 | Production Example 14 | Production Example 15 | Production Example 16 | Production Example 17 |
|---|---|---|---|---|---|---|---|---|---|---|---|
| Raw material dihydroxy compound for structural unit (A) | BPC | mol% | 55 | 50 | 50 | 100 | 100 | 0 | 80 | 80 | 60 |
| Raw material dihydroxy compound for structural unit (B) | BP-TMC | mol% | 45 | 50 | 0 | 0 | 0 | 0 | 20 | 20 | 40 |
| | BP-AP | mol% | 0 | 0 | 50 | 0 | 0 | 100 | 0 | 0 | 0 |
| Amount of catalyst *1 | | μ mol/mol | 1.5 | 1.5 | 1.5 | 1.5 | 1.5 | 0.5 | 1.5 | 8.0 | 1.5 |
| Abbreviation for polycarbonate resins | | | PC(A9) | PC(A10) | PC(A11) | PC(B1) | PC(B2) | PC(B3) | PC(C1) | PC(C2) | PC(C3) |
| Viscosity-average molecular weight | Mv | (measured at 7 g/L) | 17520 | 18280 | 18650 | 20300 | 25700 | 12000 | 16040 | 27710 | 12760 |

*1: Amount of catalyst (μ mol) per mole of all dihydroxy compounds

[Production Examples 19, 20, and 21: Production Examples of Thermoplastic Resin Composition]

Production examples of thermoplastic resin compositions PC(A12), PC(A13), and PC(A14) are described below.

The components shown in Tables 3A and 3B and Table 4 were mixed for 20 minutes in a tumbler in the ratios (mass ratios) shown in Table 5, were supplied to a φ30 mm twinscrew extruder with one vent (TEX30α) manufactured by The Japan Steel Works, Ltd., and were kneaded at a screw speed of 160 rpm, a discharge rate of 15 kg/h, and a barrel temperature of 260°C. A strand of extruded molten resin was rapidly cooled in a water bath and was pelletized with a pelletizer to prepare pellets of thermoplastic resin compositions PC(A12), PC(A13), and PC(A14).

[Table 4]

| Abbreviation | Raw materials |
|---|---|
| AD1 | Heat stabilizer: "ADK STAB 2112" manufactured by Adeka Corporation |
| AD2 | Antioxidant: "Irganox 1076" manufactured by BASF |
| AD3 | Release agent: "Loxiol VPG861" manufactured by Cognis Japan Ltd. |
| AD4 | Release agent: "Unistar M-9676" manufactured by NOF Corporation |
| AD5 | Ultraviolet absorber: "Seesorb 709" manufactured by Shipro Kasei Kaisha Ltd. |

[Table 5]

| | | Production Example 19 | Production example 20 | Production example 21 |
|---|---|---|---|---|
| PC(A7) | Parts by mass | 50 | 50 | |
| PC(B1) | | 50 | | |
| PC(B2) | | | 50 | 50 |
| PC(B3) | | | | 50 |
| AD1 | | 0.03 | 0.03 | |
| AD2 | | 0.1 | 0.1 | |
| AD3 | | 0.3 | 0.3 | |
| AD4 | | 0.1 | 0.1 | |
| AD5 | | 0.3 | 0.3 | |
| Abbreviation for thermoplastic resin compositions | | PC(A12) | PC(A13) | PC(A14) |

[Examples II-1 to 11-14, Comparative Examples II-1 to II-4]

The evaluation results of the glass transition temperature, the surface hardness, the initial color tone of the pellets, and the impact resistance of PC(A1) to PC(A14), PC(B2), and PC(C1) to PC(C3) prepared by the method described above are shown in Tables 6A and 6B below together with the measurement results of the viscosity-average molecular weight, the specific viscosity, and the ratio (14)/(13) in the hydrolysate.

[Table 6]

<Table 6A>

| | | Unit | Example II-1 | Example II-2 | Example II-3 | Example II-4 | Example II-5 | Example II-6 | Example II-7 | Example II-8 | Example II-9 |
|---|---|---|---|---|---|---|---|---|---|---|---|
| Abbreviation for polycarbonate resins or thermoplastic resin compositions | | - | PC(A1) | PC(A2) | PC (A3) | PC(A4) | PC (A5) | PC(A6) | PC(A7) | PC (A8) | PC(A9) |
| Specific viscosity | η sp | (measured at 7 g/L) | 0.321 | 0.374 | 0.399 | 0.411 | 0.431 | 0.447 | 0.324 | 0.359 | 0.312 |
| Viscosity-average molecular weight | Mv | (measured at 7 g/L) | 18100 | 21410 | 22960 | 23680 | 24980 | 26040 | 18300 | 20320 | 17520 |
| Ratio (14)/(13) in hydrolysate | | ppm | 370 | 360 | 162 | 449 | 1050 | 1140 | 642 | 626 | 434 |
| Glass transition temperature | Tg | °C | 138 | 139 | 140 | 141 | 141 | 141 | 159 | 161 | 166 |
| Surface hardness | Pencil hardness test | - | 2H | 2H | 2H | 2H | 2H | 2H | 2H | 2H | H |
| Impact resistance | Izod impact test without notch (number of broken test specimens in five test specimens) | (number) | 1 | 0 | 0 | 0 | 0 | 0 | 0 | 0 | 0 |
| Initial color tone | Pellet YI | - | 7.0 | 12.6 | 8.9 | 7.7 | 13.8 | 13.7 | 7.5 | 9.2 | 8.9 |

<Table 68>

| | | Unit | Example II-10 | Example II-1 | Example II-12 | Example II-13 | Example II-14 | Comparative example II-1 | Comparative example II-2 | Comparative example II-3 | Comparative example II-4 |
|---|---|---|---|---|---|---|---|---|---|---|---|
| Abbreviation for polycarbonate resins or thermoplastic resin compositions | | - | PC(A10) | PC(A11) | PC(A12) | PC(A13) | PC(A14) | PC(B2) | PC(C1) | PC(C2) | PC(C3) |
| Specific viscosity | η sp | (measured at 7 g/L) | 0.324 | 0.330 | 0.344 | 0.402 | 0.332 | 0.425 | 0.289 | 0.475 | 0.235 |
| Viscosity-average molecular weight | Mv | (measured at 7 g/L) | 18280 | 18650 | 19520 | 23180 | 18800 | 25400 | 16040 | 27710 | 12760 |
| Ratio (14)/(13) in hydrolysate | | ppm | 799 | 632 | 568 | 625 | 922 | 91 | 340 | 1368 | 428 |
| Glasstransition temperature | Tg | °C | 170 | 148 | 132 | 131 | 149 | 120 | 134 | 141 | 154 |
| Surface hardness | Pencil hardness test | - | H | H | 2H | 2H | H | 2H | H | 2H | H |
| Impact resistance | Izod impact test without notch (number of broken test specimens in five test specimens) | (number) | 0 | 0 | 0 | 0 | 0 | 4 | 5 | 1 | 5 |
| Initial color tone | Pellet YI | - | 7.7 | 14.9 | 18.7 | 19.9 | 9.8 | 7.3 | 7 | 20.5 | 5 |

Tables 6A and 6B show that the polycarbonate resin according to the second invention, which contains the structural unit (a) and the structural unit (b) and satisfies the specific viscosity, the viscosity-average molecular weight, and the ratio (14)/(13) in the hydrolysate defined in the second invention, has a high glass transition temperature, high heat resistance, high surface hardness, good initial color tone, and high impact resistance.

In contrast, Comparative Example II-1, which does not contain the structural unit (b) and in which the ratio (14)/(13) in the hydrolysate is out of the range of the second invention, has a low glass transition temperature, low heat resistance, and low impact resistance.

Comparative Example II-2, which contains the polycarbonate resin according to the second invention but has a specific viscosity out of the specified range of the second invention, has significantly low impact resistance.

Comparative Example II-3, in which the specific viscosity and the ratio (14)/(13) in the hydrolysate are out of the specified ranges of the second invention, has significantly poor initial color tone.

Comparative Example II-4, in which the specific viscosity and the viscosity-average molecular weight are out of the specified ranges of the second invention, has low impact resistance.

[Example 11-15, Comparative Examples II-5 and II-6]

Table 7 shows the evaluation results of the glass transition temperature, plate color tone, plate appearance, and dielectric properties of PC(A3), PC(B2), and PC(C4) prepared by the method described above.

[Table 7]

| | | Unit | Example II-15 | Comparative example II-5 | Comparative example II-6 |
|---|---|---|---|---|---|
| Abbreviation for polycarbonate resins | | - | PC(A3) | PC(B2) | PC(C4) |
| Glass transition temperature | Tg | °C | 140 | 120 | 143 |
| Plate color tone | Plate YI | (3 mmt) | 3 | 3 | 9 |
| Plate appearance | Number of plates with poor appearance | (among 30 plates) | 0 | 1 | 27 |
| Dielectric properties | Relative dielectric constant ($\varepsilon_r$) | - | 2.433 | 2.466 | 2.486 |
| | Dielectric loss tangent (tan$\delta$) | $\times 10^{-3}$ | 1.45 | 1.55 | 0.94 |

Table 7 shows that the polycarbonate resin of Example 11-15, which contains the structural unit (a) and the structural unit (b) and satisfies the specific viscosity, the viscosity-average molecular weight, and the ratio (14)/(13) in the hydrolysate defined in the second invention, has higher heat resistance and better dielectric properties due to a higher glass transition temperature than the polycarbonate resin of Comparative Example II-5. It can also be seen that the polycarbonate resin according to the second invention in Example II-15 has much better plate color tone and plate appearance than the polycarbonate resin of Comparative Example II-6.

Thus, it can be seen that the polycarbonate resin of Example 11-15, which is the polycarbonate resin according to the second invention, has better dielectric properties, higher heat resistance, better color tone, and less abnormal appearance during forming than the polycarbonate resins of Comparative Examples II-5 and II-6 and is suitable for use as a microwave and/or millimeter-wave communication device member.

Although the present invention has been described in detail with reference to particular embodiments, it will be apparent to those skilled in the art that various modifications may be made therein without departing from the spirit and scope of the present invention.

The present application is based on Japanese Patent Application No. 2021-160752 filed September 30, 2021, Japanese Patent Application No. 2021-160753 filed September 30, 2021, and Japanese Patent Application No. 2022-149742 filed September 21, 2022, which are incorporated herein by reference in their entirety.

## Claims

**1.** A thermoplastic resin composition comprising a polycarbonate resin with a structural unit (A) represented by the

following formula (1),

wherein a hydrolysate produced by hydrolyzing the polycarbonate resin contains dihydroxy compounds represented by the following formulae (2) to (4), and
a total amount of the dihydroxy compound represented by the formula (3) and the dihydroxy compound represented by the formula (4) in the hydrolysate is 0.85% by mass or more of an amount of the dihydroxy compound represented by the formula (2).

[Chem. 1]

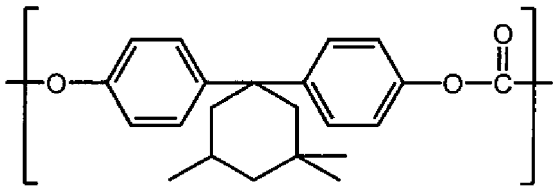

(1)

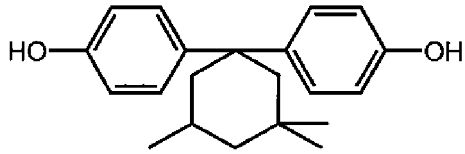

(2)

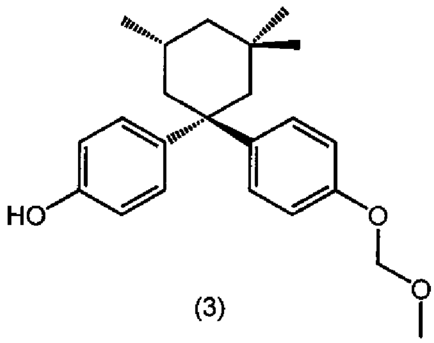

(3)

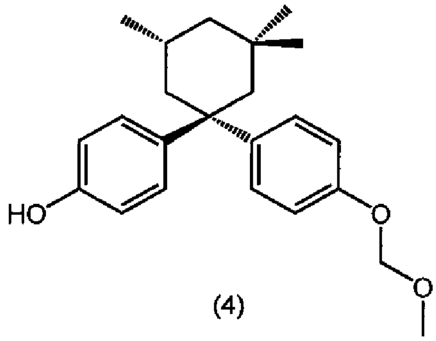

(4)

**2.** The thermoplastic resin composition according to Claim 1,

wherein the thermoplastic resin composition has a polycarbonate resin with a structural unit (A) represented by the following formula (1) and a structural unit (B) represented by the following formula (5),
a hydrolysate produced by hydrolyzing the polycarbonate resin contains dihydroxy compounds represented by the following formulae (2), (3), (4), and (6), and
the total amount of the dihydroxy compound represented by the following formula (3) and the dihydroxy compound represented by the following formula (4) in the hydrolysate is 1.00% by mass or more of the amount of the dihydroxy compound represented by the following formula (2).

[Chem. 2]

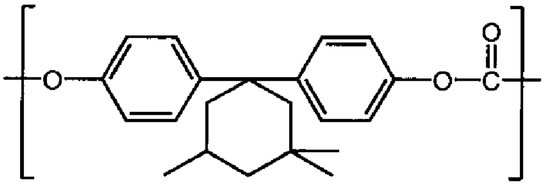

(1)

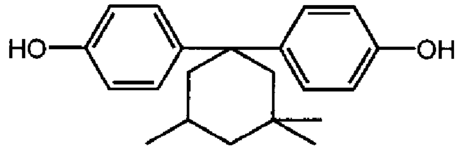

(2)

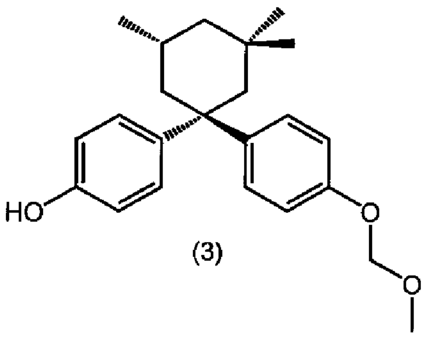

(3)

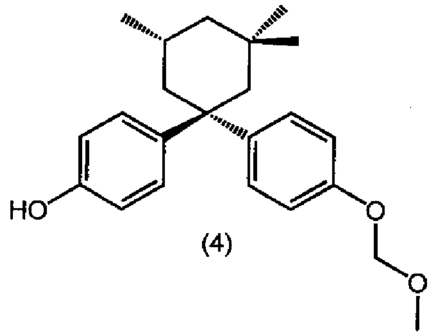

(4)

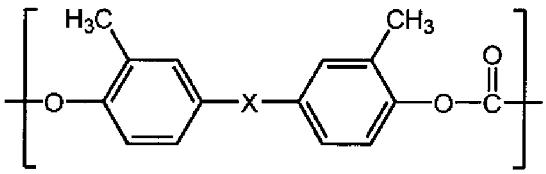

(5)

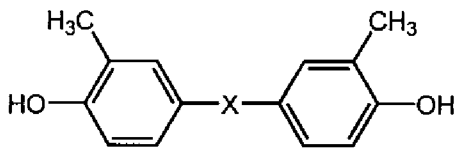

(6)

(In the formulae (5) and (6), X denotes at least one selected from a single bond, an oxygen atom, a sulfur atom, and a divalent organic group (excluding a 3,3,5-trimethylcyclohexylidene group).)

**3.** The thermoplastic resin composition according to Claim 1 or 2, wherein the total amount of the dihydroxy compound represented by the formula (3) and the dihydroxy compound represented by the formula (4) in the hydrolysate is 1.10% by mass or more of the amount of the dihydroxy compound represented by the formula (2).

**4.** The thermoplastic resin composition according to Claim 2 or 3, wherein the structural unit (B) represented by the formula (5) accounts for more than 50% by mole of all structural units of the polycarbonate resin.

**5.** The thermoplastic resin composition according to any one of Claims 2 to 4, wherein the polycarbonate resin is a polycarbonate resin composed of the structural unit (A) represented by the formula (1) and the structural unit (B) represented by the formula (5) randomly polymerized.

**6.** The thermoplastic resin composition according to any one of Claims 1 to 5, wherein the polycarbonate resin has a viscosity-average molecular weight (Mv) of 12,000 or more.

**7.** The thermoplastic resin composition according to any one of Claims 1 to 6, wherein the polycarbonate resin has a viscosity-average molecular weight (Mv) of 30,000 or less.

**8.** The thermoplastic resin composition according to any one of Claims 2 to 7, comprising a polycarbonate resin with the structural unit (A) represented by the formula (1) and the structural unit (B) represented by the formula (5) in a mole ratio of (B)/(A) = 55/45 to 95/5.

**9.** The thermoplastic resin composition according to any one of Claims 1 to 8, wherein the polycarbonate resin has a pencil hardness of H or higher as measured by a method according to ISO 15184.

**10.** The thermoplastic resin composition according to any one of Claims 2 to 9, wherein X in the formulae (5) and (6) is represented by the following formula (7).

[Chem. 3]

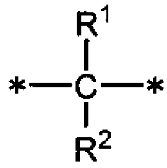

**(7)**

(In the formula (7), $R^1$ and $R^2$ each independently denote a hydrogen atom or an alkyl group with 1 to 15 carbon atoms, and * represents a bonding arm to a benzene ring in the formulae (5) and (6).)

**11.** The thermoplastic resin composition according to Claim 10, wherein $R^1$ and $R^2$ in the formula (7) are methyl groups.

**12.** The thermoplastic resin composition according to any one of Claims 1 to 11, comprising 50% by mass or more of the polycarbonate resin.

**13.** A dihydroxy compound represented by the following formula (3) or (4).

[Chem. 4]

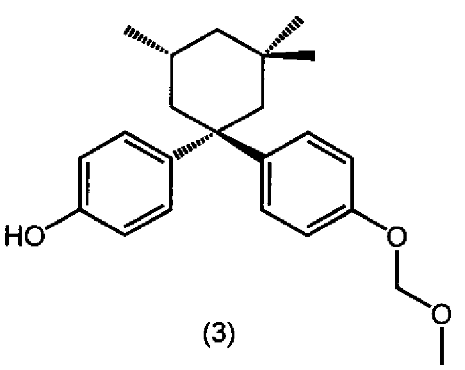

**(3)**

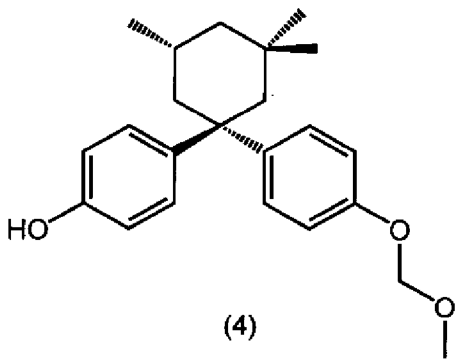

**(4)**

**14.** A method for producing the thermoplastic resin composition according to any one of Claims 1 to 12, comprising the step of producing the polycarbonate resin by a melt transesterification method.

**15.** A communication device member produced by using the thermoplastic resin composition according to any one of Claims 1 to 12.

**16.** A microwave and/or millimeter-wave communication device produced by using the communication device member according to Claim 15.

**17.** A thermoplastic resin composition comprising a polycarbonate resin, wherein

the polycarbonate resin contains a structural unit (a) represented by the following formula (11) and a structural unit (b) represented by the following formula (12A) and/or the following formula (12B),
a solution of 0.7 g of the polycarbonate resin dissolved in 100 mL of methylene chloride has a specific viscosity in the range of 0.308 to 0.455 as measured at 20°C,
the polycarbonate resin has a viscosity-average molecular weight in the range of 17,300 to 26,400, and
a hydrolysate produced by hydrolyzing the polycarbonate resin contains dihydroxy compounds represented by

the following formulae (13), (14), (15A), and (15B), and an amount of the dihydroxy compound represented by the formula (14) in the hydrolysate ranges from 100 ppm to 1,300 ppm of an amount of the dihydroxy compound represented by the formula (13).

[Chem. 5]

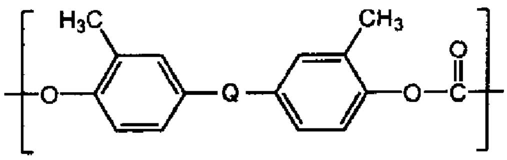

(11)

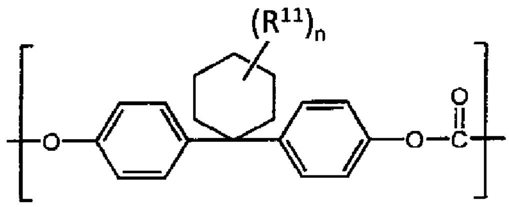

(12A)

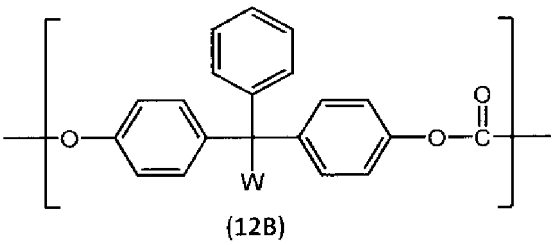

(12B)

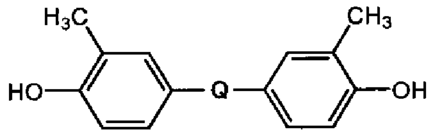

(13)

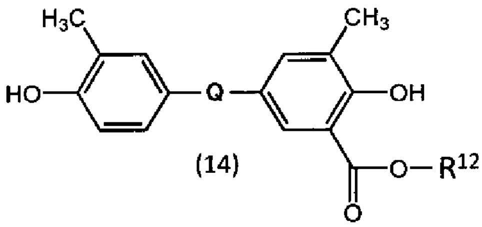

(14)

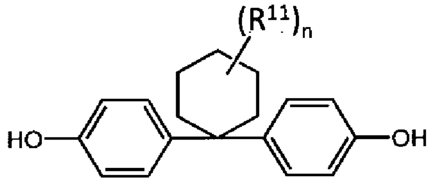

(15A)

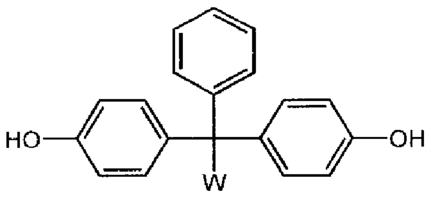

(15B)

(In the formula (11), Q denotes at least one selected from a single bond, an oxygen atom, a sulfur atom, and a divalent organic group.
In the formula (12A), $R^{11}$ each independently denotes an alkyl group with 1 to 4 carbon atoms, and n is an integer in the range of 0 to 3.
In the formula (12B), W denotes a methyl group or a phenyl group.
In the formula (13), Q is the same as Q in the formula (11) .
In the formula (14), Q is the same as Q in the formula (11), and $R^{12}$ denotes a hydrogen atom or a methyl group.
In the formula (15A), $R^{11}$ is the same as $R^{11}$ in the formula (12A).
In the formula (15B), W is the same as W in the formula (12B).)

**18.** The thermoplastic resin composition according to Claim 17, wherein Q in the formula (11) is represented by the following formula (16).

[Chem. 6]

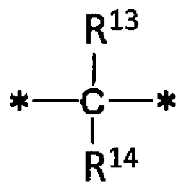

(16)

(In the formula (16), $R^{13}$ and $R^{14}$ each independently denote a hydrogen atom or an alkyl group with 1 to 15 carbon atoms, and * represents a bonding arm to a benzene ring in the formula (11).)

**19.** The thermoplastic resin composition according to Claim 18, wherein $R^{13}$ and $R^{14}$ in the formula (16) are methyl groups.

**20.** The thermoplastic resin composition according to any one of Claims 17 to 19, wherein the structural unit (b) contains a structural unit represented by the formula (12A).

**21.** The thermoplastic resin composition according to Claim 20, wherein the structural unit (a) and the structural unit (b) are contained as a copolymer.

**22.** The thermoplastic resin composition according to any one of Claims 17 to 19, wherein the structural unit (b) contains a structural unit represented by the formula (12B).

**23.** The thermoplastic resin composition according to Claim 22, wherein the structural unit (a) and the structural unit (b) are contained as a blend.

**24.** The thermoplastic resin composition according to any one of Claims 17 to 23, wherein $R^{11}$ in the formula (12A) is a methyl group.

**25.** The thermoplastic resin composition according to any one of Claims 17 to 24, wherein n in the formula (12A) is 3.

**26.** The thermoplastic resin composition according to any one of Claims 17 to 25, wherein the structural unit (b) is represented by the formula (17).

[Chem. 7]

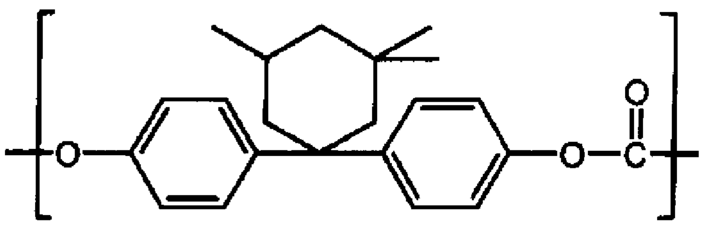

(17)

**27.** The thermoplastic resin composition according to any one of Claims 17 to 26, wherein the structural unit (b) in the polycarbonate resin accounts for 20% by mole or more of a total amount of the structural unit (a) and the structural unit (b).

**28.** The thermoplastic resin composition according to any one of Claims 17 to 27, wherein a total amount of the structural unit (a) and the structural unit (b) in the polycarbonate resin is 80% by mole or more of all carbonate structural units of the polycarbonate resin.

**29.** The thermoplastic resin composition according to any one of Claims 17 to 28, wherein the polycarbonate resin has a glass transition temperature of 125°C or more.

**30.** A communication device member produced by using the thermoplastic resin composition according to any one of Claims 17 to 29.

**31.** A microwave and/or millimeter-wave communication device produced by using the communication device member according to Claim 30.

## INTERNATIONAL SEARCH REPORT

International application No.
**PCT/JP2022/036659**

**A. CLASSIFICATION OF SUBJECT MATTER**

***C08G 64/04***(2006.01)i; ***C08G 64/06***(2006.01)i; ***C08G 64/30***(2006.01)i; ***C08L 69/00***(2006.01)i
FI: C08G64/04; C08G64/06; C08G64/30; C08L69/00

According to International Patent Classification (IPC) or to both national classification and IPC

**B. FIELDS SEARCHED**

Minimum documentation searched (classification system followed by classification symbols)

C08G64/04; C08G64/06; C08G64/30; C08L69/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2017-82131 A (TEIJIN LIMITED) 18 May 2017 (2017-05-18) claims, examples | 1-12, 14 |
| A | | 13, 15-31 |
| X | JP 9-183894 A (TEIJIN CHEMICALS LTD) 15 July 1997 (1997-07-15) claims, examples | 1-12, 14 |
| A | | 13, 15-31 |
| X | JP 2003-128906 A (TEIJIN CHEMICALS LTD.) 08 May 2003 (2003-05-08) claims, examples | 1-12, 14 |
| A | | 13,15-31 |
| X | JP 2020-193301 A (TEIJIN LIMITED) 03 December 2020 (2020-12-03) claims, examples | 1, 3, 6-7, 9, 12, 14-16 |
| A | | 2, 4-5, 8, 10-11, 13, 17-31 |

☑ Further documents are listed in the continuation of Box C.　☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 November 2022** | **29 November 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/036659**

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2020-503190 A (COVESTRO DEUTSCHLAND AG) 30 January 2020 (2020-01-30)<br>claims, examples | 1, 3, 6-7, 9, 12, 15-16<br>2, 4-5, 8, 10-11, 13-14, 17-31 |
| X<br>A | JP 2017-524051 A (COVESTRO DEUTSCHLAND AG) 24 August 2017 (2017-08-24)<br>claims, paragraph [0097], examples | 1, 3, 6-7, 9, 12-13<br>2, 4-5, 8, 10-11, 14-31 |
| X<br>A | JP 2017-522431 A (COVESTRO DEUTSCHLAND AG) 10 August 2017 (2017-08-10)<br>claims, paragraph [0097], examples | 1, 3, 6-7, 9, 12-13<br>2, 4-5, 8, 10-11, 14-31 |
| A | WO 2007/119548 A1 (MITSUBISHI GAS CHEMICAL COMPANY, INC.) 25 October 2007 (2007-10-25)<br>claims, example 4 | 1-31 |

Form PCT/ISA/210 (second sheet) (January 2015)

**INTERNATIONAL SEARCH REPORT**

International application No.
**PCT/JP2022/036659**

**Box No. III Observations where unity of invention is lacking (Continuation of item 3 of first sheet)**

This International Searching Authority found multiple inventions in this international application, as follows:

The claims are classified into the following two inventions.

(Invention 1) Claims 1-16
The inventions in claims 1-12 and 14-16 lack novelty in the light of documents 1-5, and thus do not have special technical features.
The invention in claim 13 shares, with the invention in claim 1, the special technical feature of being an invention relating to a compound represented by formula (3) or formula (4).

Accordingly, the inventions in claims 1-16 are classified as invention 1.

(Invention 2) Claims 17-31
Claims 17-31 share, with claim 1, the feature of being an invention related to polycarbonate containing a structural unit represented by formula (12A), but this feature is disclosed in documents 1-5. Thus, there is no identical or corresponding special technical feature between claims 17-31 and claim 1. Furthermore, claims 17-31 do not depend from claim 1 and are not substantially identical to or similarly closely related to any of the claims classified as invention 1.
Therefore, the inventions in claims 17-31 cannot be classified as invention 1.

Accordingly, the inventions in claims 17-31 are classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
**Information on patent family members**

International application No.
**PCT/JP2022/036659**

| Patent document cited in search report | Publication date (day/month/year) | Patent family member(s) | Publication date (day/month/year) |
|---|---|---|---|
| JP 2017-82131 A | 18 May 2017 | (Family: none) | |
| JP 9-183894 A | 15 July 1997 | (Family: none) | |
| JP 2003-128906 A | 08 May 2003 | (Family: none) | |
| JP 2020-193301 A | 03 December 2020 | (Family: none) | |
| JP 2020-503190 A | 30 January 2020 | US 2020/0148848 A1<br>claims, examples<br>EP 3559096 A1<br>CN 108239295 A<br>KR 10-2019-0098978 A | |
| JP 2017-524051 A | 24 August 2017 | US 2017/0233571 A1<br>claims, paragraph [0127], example<br>EP 3174933 A1<br>CN 106536629 A<br>KR 10-2017-0039149 A | |
| JP 2017-522431 A | 10 August 2017 | US 2017/0226340 A1<br>claims, paragraph [0144], example<br>EP 3174936 A1<br>KR 10-2017-0039234 A<br>CN 106661318 A | |
| WO 2007/119548 A1 | 25 October 2007 | US 2009/0117478 A1<br>claims, example 4 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S6469625 A
- JP 2003128906 A
- JP 2019197048 A
- WO 2021039970 A1
- JP 2021160752 A
- JP 2021160753 A
- JP 2022149742 A